# EUROPEAN PATENT APPLICATION

(11) **EP 4 521 386 A1**
(43) Date of publication of application: **12.03.2025**
(21) Application number: 24716611.9
(22) Date of filing: 08.04.2024
(51) Int. Cl.: G09G 3/32, G06F 3/041, G06F 1/16, H04M 1/02

(54) **ELECTRONIC DEVICE AND METHOD FOR ADJUSTING BRIGHTNESS OF SCREEN ON BASIS OF ILLUMINANCE VALUE**

(30) Priority: 12.07.2023 KR 20230090738; 20.07.2023 KR 20230094914; 25.07.2023 KR 20230096664
(71) Applicant: Samsung Electronics Co., Ltd., Suwon-si, Gyeonggi-do 16677 (KR)
(72) Inventor: SHIN, Dongheon, Suwon-si, Gyeonggi-do 16677 (KR); KIM, Jungwon, Suwon-si, Gyeonggi-do 16677 (KR); KIM, Donghwy, Suwon-si, Gyeonggi-do 16677 (KR); LEE, Minwoo, Suwon-si, Gyeonggi-do 16677 (KR); HEO, Hoondo, Suwon-si, Gyeonggi-do 16677 (KR)
(74) Representative: HGF
(86) International application number: PCT/KR2024/004675
(87) International publication number: WO 2025/014037

(57) **Abstract**

An electronic device includes a cover display, an illuminance sensor, and at least one processor. The at least one processor is configured to: display, through the cover display, a screen having a first brightness based on a first illuminance value identified using the illuminant sensor; identify a second illuminance value less than or equal to a reference value according to the first illuminance value, using the illuminance sensor, while displaying the screen having the first illuminance value; maintain displaying the screen having the first brightness, in response to the identified illuminance value, in a first state in which a touch input for a touch area at least partially corresponding to a position of the illuminance sensor, being changeable in size, is obtained; and display, through the cover display, the screen having a second brightness less than the first brightness, in response to the identified second illuminance value in a second state in which a brightness of the light is reduced, the second state distinguished from the first state.

## Description

### [Technical Field]

The disclosure relates to an electronic device and a method for adjusting brightness of a screen based on an illuminance value.

### [Background Art]

In recent years, various types of electronic devices, such as smartphones, tablet personal computers (PCs), wireless earphones, smart watches, or the like have become increasingly popular. Such an electronic device may include at least one sensor. For example, the at least one sensor may be used to identify an illumination value representative of an external brightness of the electronic device.

### [Detailed Description of Invention]

### [Technical Solution]

An electronic device may comprise a housing including a first housing part and a second housing part. The electronic device may comprise a hinge structure rotatably connecting the first housing part and the second housing part. The electronic device may comprise a flexible display, which is disposed on the first housing part and the second housing part, deformable by rotation of the second housing part relative to the first housing part. The electronic device may comprise a cover display disposed on a surface of the first housing part. The electronic device may comprise an illuminance sensor, included in the housing, for receiving light outside the electronic device through the surface. The electronic device may comprise at least one processor. The at least one processor may be configured to display, through the cover display, a screen having a first brightness based on a first illuminance value identified using the illuminant sensor. The at least one processor may be configured to identify a second illuminance value, which is less than or equal to a reference value according to the first illuminance value, by using the illuminance sensor, while the screen having the first illuminance value is displayed. The at least one processor may be configured to maintain displaying of the screen having the first brightness, in response to the second illuminance value identified based on a first state in which a touch input for a touch area corresponding to at least part of a position of the illuminance sensor is obtained, the touch area in which the size is changeable. The at least one processor may be configured to display, through the cover display, the screen having a second brightness lower than the first brightness, in response to the second illuminance value identified based on a second state in which a brightness of the light is reduced, the second state distinguished from the first state.

An electronic device may comprise a display including a touch sensor. The electronic device may comprise an illuminance sensor. The electronic device may comprise at least one processor. The at least one processor may be configured to display, through the display, a screen having a first brightness. The at least one processor may be configured to identify an illuminance value using the illuminance sensor, while the screen having the first brightness is displayed. The at least one processor may be configured to identify whether a touch input for a touch area corresponding to at least part of a position of the illuminance sensor is obtained or not, the touch area in which the size is changeable based on an event. The at least one processor may be configured to maintain displaying of the screen having the first brightness based on the illuminance value and the touch input in a first state in which the touch input is obtained. The at least one processor may be configured to display, through the display, the screen having a second brightness lower than the first brightness based on the illuminance value in a second state distinguished from the first state.

### [Brief Description of Drawings]

FIG. 1 is a block diagram illustrating an electronic device in a network environment according to various embodiments.
FIG. 2 illustrates an example of a method of adjusting brightness of a screen based on an illuminance value according to an embodiment.
FIG. 3 illustrates an example block diagram of an electronic device according to an embodiment.
FIG. 4 illustrates an example of an operation flow of a method of adjusting brightness of a screen based on an illuminance value by identifying an input to a touch area according to an embodiment.
FIG. 5 illustrates an example of an electronic device including a plurality of sensors for identifying an illuminance value according to an embodiment.
FIG. 6 illustrates an example of an operation flow of a method of adjusting brightness of a screen based on illuminance values identified using a plurality of sensors according to an embodiment.
FIGS. 7A and 7B illustrate examples of designated conditions for changing a touch area for an illuminance sensor according to an embodiment.
FIG. 8 illustrates an example of an operation flow of a method of identifying a touch area based on a designated condition for changing a touch area for an illuminance sensor according to an embodiment.
FIG. 9 illustrates an example of an operation flow of a method of adjusting brightness of a screen based on an illuminance value according to an embodiment.
FIG. 10 illustrates an example of an operation flow of a method of adjusting brightness of a screen based on an illuminance value in an electronic device including a cover display according to an embodiment.
FIG. 11 illustrates an example of an operation flow of a method of adjusting brightness of a screen based on an illuminance value in an electronic device according to an embodiment.
FIG. 12 illustrates an example electronic device according to an embodiment.
FIGS. 13A and 13B illustrate examples of an unfolded state and a folded state of an example electronic device according to an embodiment.
FIG. 14A illustrates an example of an unfolded state of an example electronic device according to an embodiment.
FIG. 14B illustrates an example of a folded state of an example electronic device according to an embodiment.
FIG. 14C is an exploded view of an example electronic device according to an embodiment.
FIG. 15A illustrates an example electronic device according to an embodiment.
FIG. 15B is a cross-sectional view of an example electronic device according to an embodiment.

### [Mode For Carrying Out Invention]

The terms used in the disclosure are merely used to better describe a certain embodiment and may not be intended to limit the scope of other embodiments. A singular expression may include a plural expression, unless the context clearly dictates otherwise. The terms used herein, including technical and scientific terms, may have the same meanings as those commonly understood by those skilled in the art to which the disclosure pertains. Terms defined in a general dictionary amongst the terms used in the disclosure may be interpreted as having the same or similar meaning as those in the context of the related art, and they are not to be construed in an ideal or overly formal sense, unless explicitly defined in the disclosure. In some cases, even the terms defined in the disclosure may not be interpreted to exclude embodiments of the disclosure.

As described herein, in various examples of the disclosure described below, a hardware approach will be described as an example. However, since various embodiments of the disclosure may include a technology that utilizes both the hardware-based approach and the software-based approach, various embodiments of the disclosure are not intended to exclude the software-based approach.

Further, throughout the disclosure, an expression such as e.g., 'more than' or 'less than' may be used to determine whether a specific condition is satisfied or fulfilled, but it is merely of a description for expressing an example and is not intended to exclude the meaning of 'more than or equal to' or 'less than or equal to'. A condition described as 'more than or equal to' may be replaced with 'more than', a condition described as 'less than or equal to' may be replaced with 'less than', and a condition described as 'more than or equal to and less than' may be replaced with 'more than and less than or equal to', respectively. Further, hereinafter, 'A' to 'B' may refer to at least one of the elements from A (including A) to B (including B).

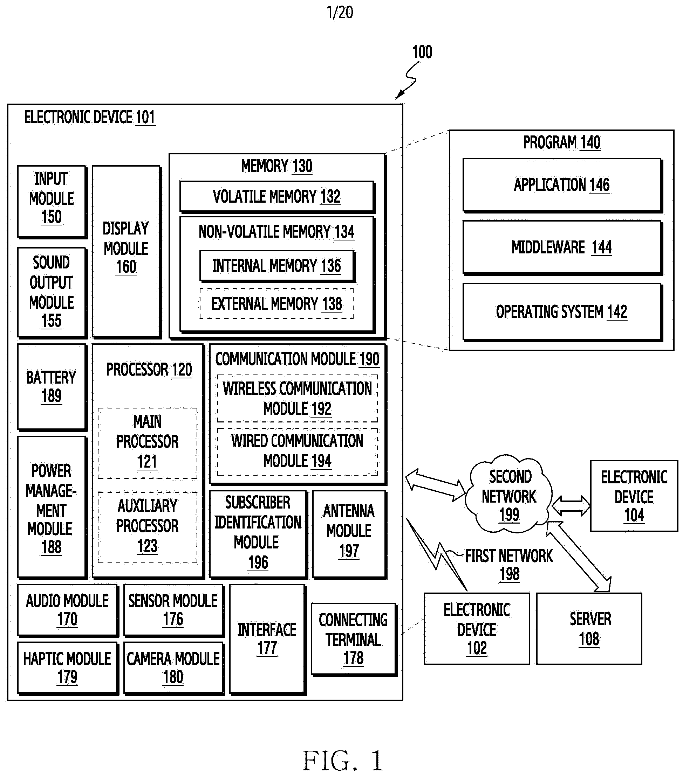

FIG. 1 illustrates a block diagram of an electronic device in a network environment according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mm Wave band) to address, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another example of the disclosure, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

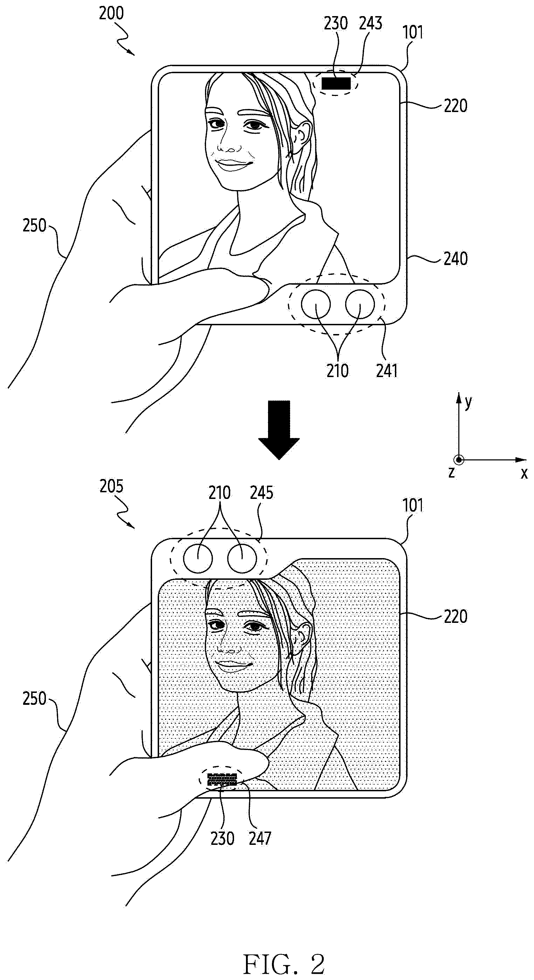

FIG. 2 illustrates an example of a method of adjusting brightness of a screen based on an illuminance value according to an embodiment.

FIG. 2 illustrates examples 200 and 205 of a method, performed by the electronic device 101, of identifying an illuminance value based on an illuminance sensor 230 and adjusting brightness of a screen based on the identified illuminance value. For example, the electronic device 101 of FIG. 2 may include at least a portion of the electronic device 101 of FIG. 1. For example, the illuminance sensor 230 may be referred to as an ambient light sensor (ALS) or a photoresistor.

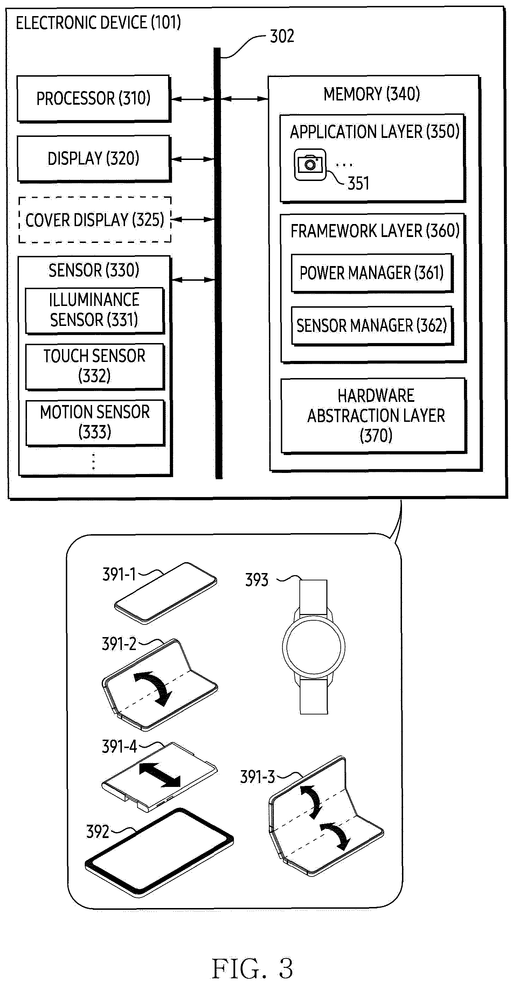

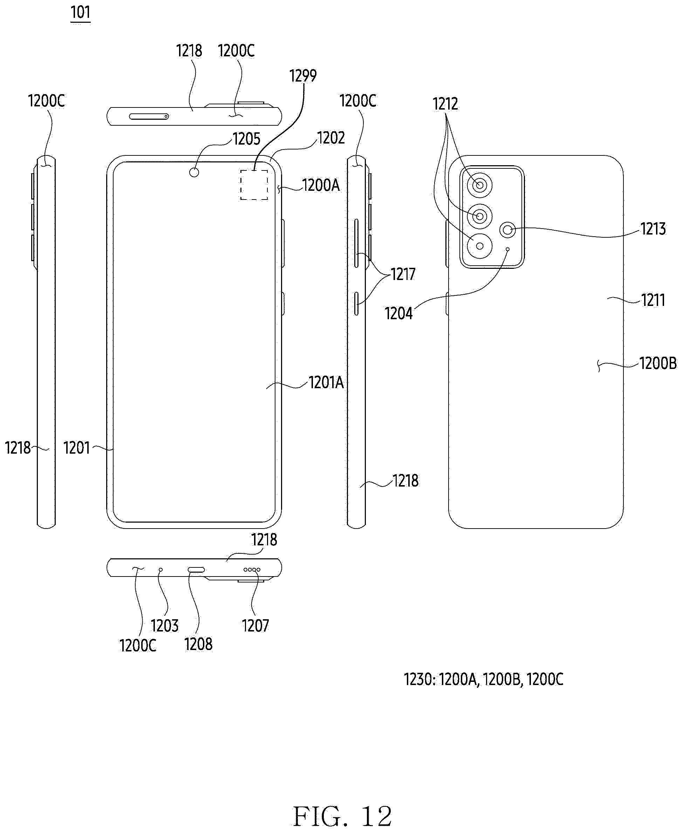

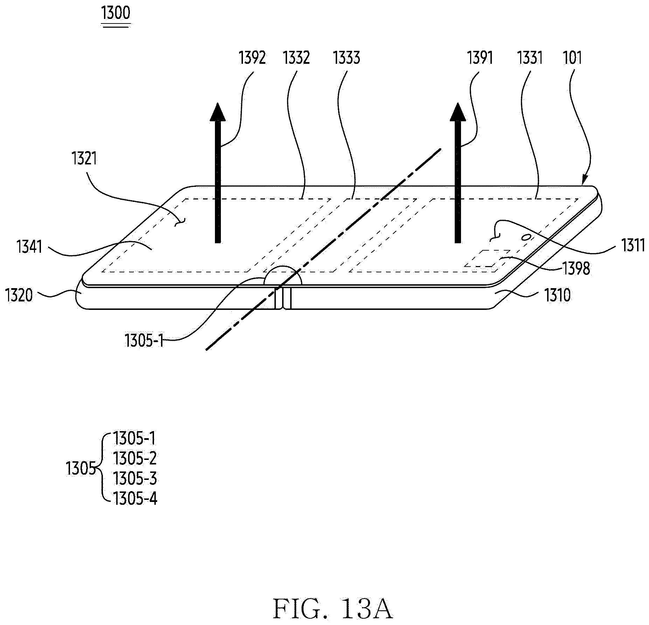

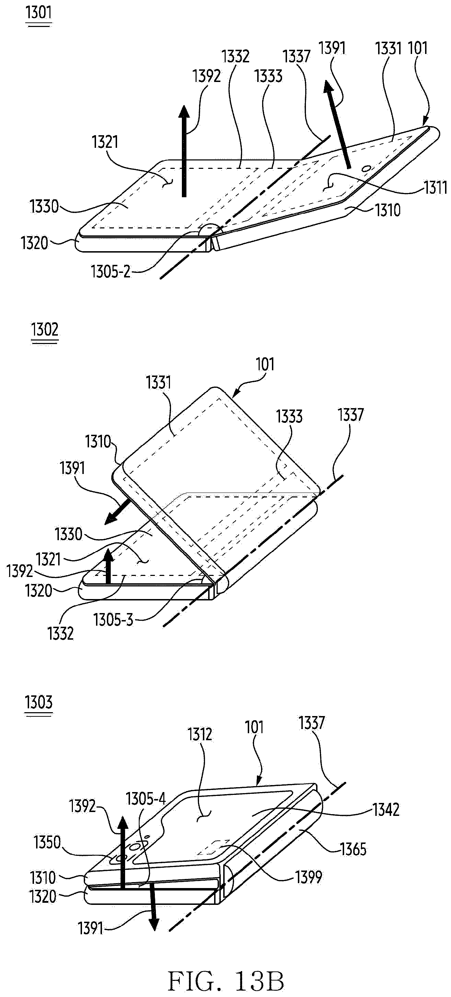

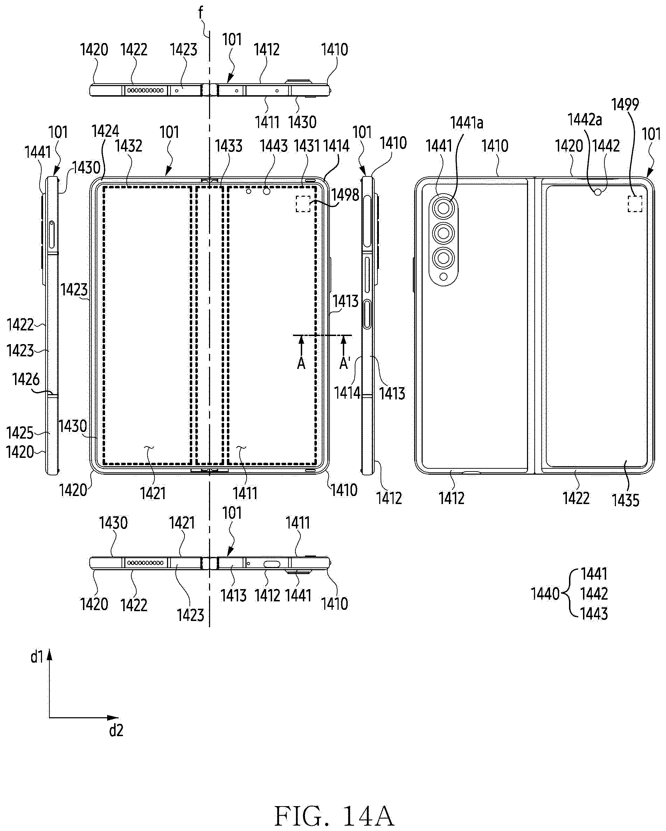

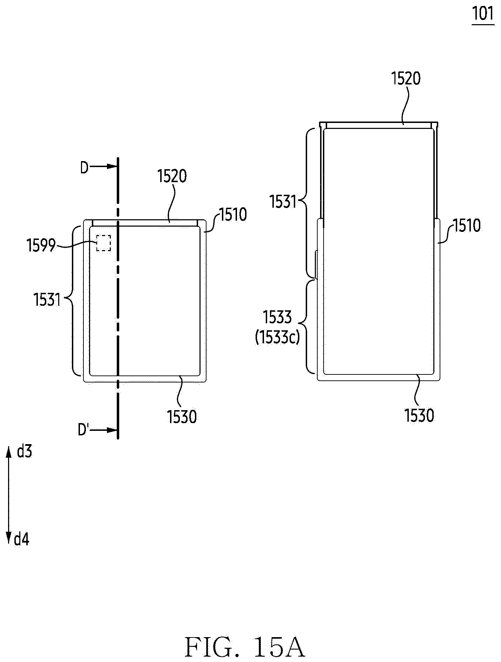

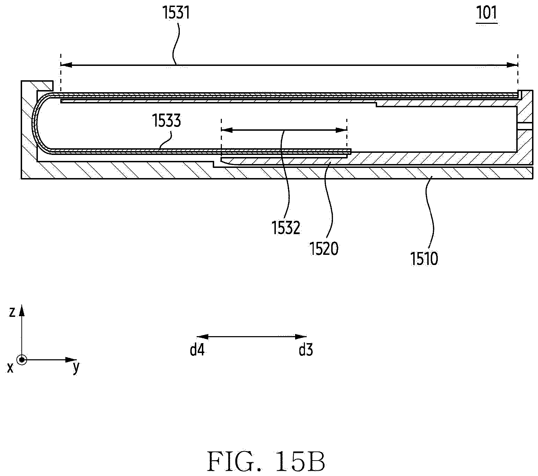

Referring to FIG. 2, the electronic device 101 may include at least one camera 210, a display 220, an illuminance sensor 230, and a housing 240. The electronic device 101 of FIG. 2 may illustrate an example of the electronic device 101 of FIG. 3 to be described later. For example, the display 220 may be a cover display 325 of FIG. 3. However, embodiments of the disclosure are not limited thereto. For example, the display 220 may represent examples of a display 1201 of FIG. 12, a first display 1341 or a second display 1342 of FIGS. 13A and 13B, a display 1430 or a sub-display 1435 of FIGS. 14A to 14C, or a display 1530 of FIGS. 15A and 15B. For example, the illuminance sensor 230 may represent examples of an illuminance sensor 1299 of FIG. 12, an illuminance sensor 1398 or an illuminance sensor 1399 of FIGS. 13A and 13B, an illuminance sensor 1498 or an illuminance sensor 1499 of FIGS. 14A to 14C, or an illuminance sensor 1599 of FIGS. 15A and 15B.

Referring to an example 200, the electronic device 101 is illustrated in which at least one camera 210 is disposed in an area 241 located in the -y direction of the housing 240. Referring to the example 200, the illuminance sensor 230 of the electronic device 101 may be disposed in an area 243 located in the +y direction of the housing 240. For example, the illuminance sensor 230 may be disposed in the area 243, which is a portion of a display area of the display 220 of the electronic device 101. Referring to example 200, while a user uses the electronic device 101, the illuminance sensor 230 may not be covered by an external object 250 which is a part of the user's body. The electronic device 101 may identify a first illuminance value through the illuminance sensor 230. For example, the electronic device 101 may identify the first illuminance value, based on identifying an event for changing the display 220 from 'off' state to 'on' state. For example, the electronic device 101 may identify the first illuminance value based on identifying that the display 220 is changed from the off state to the on state. The first illuminance value may indicate an intensity of light outside the electronic device 101 identified through the illuminance sensor 230. For example, the electronic device 101 may identify a brightness of the display 220 based on the first illuminance value. For example, the electronic device 101 may identify the brightness of the display 220 as a first brightness, based on the first illuminance value, and may display a screen having the first brightness via the display 220.

In contrast to the above example, an example 205 illustrates a state in which the electronic device 101 of the example 200 is rotated by 180° in the z-axis direction. Referring to the example 205, the electronic device 101 is illustrated in which the at least one camera 210 is disposed in an area 245 located in the +y direction of the housing 240. Referring to the example 205, the illuminance sensor 230 of the electronic device 101 may be disposed in an area 247 located in the -y direction of the housing 240. Referring to example 205, while the user uses the electronic device 101, the illuminance sensor 230 may be covered by the external object 250 that is a part of the user's body. With the illuminance sensor 230 hidden by the external object 250, the electronic device 101 may identify a second illuminance value through the illuminance sensor 230. The second illuminance value may be lower than the first illuminance value. For example, the electronic device 101 may identify the second illuminance value in a state in which the screen having the first brightness is displayed. For example, the electronic device 101 may identify the brightness of the display 220 based on the second illuminance value. For example, the electronic device 101 may identify the brightness of the display 220 as the second brightness changed from the first brightness, based on the second illuminance value. The second brightness may be less (or darker) than the first brightness. The electronic device 101 may display a screen having the second brightness via the display 220.

Referring to the foregoing description, as in the example 200, when the electronic device 101 is used without any rotation, the illuminance sensor 230 may not be covered by the external object 250 (or its shadow). However, as in the example 205, when the electronic device 101 is used in the rotated state, the illuminance sensor 230 may be easily covered by the external object 250. As the illuminance sensor 230 is hidden, the electronic device 101 may be subject to undesired brightness control.

In various embodiments of the disclosure, description will be made of an electronic device and a method of performing brightness control according to whether a touch input is generated with respect to an area at least partially corresponding to a position of the illuminance sensor 230. Hereinafter, an area at least partially corresponding to the position of the illuminance sensor 230 and identifying the touch input may be referred to as a touch area. An electronic device and a method according to embodiments of the disclosure may adjust or maintain brightness of a display area (or screen) of the display 220 according to whether a touch input to such a touch area is identified. Accordingly, an electronic device and a method according to embodiments of the disclosure may secure better visibility by preventing brightness control according to an unintended touch input. In addition, the electronic device and method according to embodiments of the disclosure may identify the touch area, based on a rotation state of the electronic device 101 or a state (e.g., a folded (or folding) state/unfolded (unfolding) state or a slide-in state/slide-out state) of a display area of the electronic device 101 including a flexible display. Further, the electronic device and method according to embodiments of the disclosure may further include at least one sensor (e.g., a second illuminance sensor) different from the illuminance sensor 230 (e.g., a first illuminance sensor), and when the at least one sensor is capable of identifying an illuminance value, the brightness of a screen may be controlled based on the illuminance value identified using the at least one sensor. For example, the at least one sensor may include another illuminance sensor, a flick sensor (or a flicker sensor), a heart rate measurement (HRM) sensor, or a camera sensor.

The electronic device 101 of FIG. 2 illustrates an example of the electronic device 101 including a flexible display and a cover display that are deformable to either a folded (or folding) state or an unfolded (unfolding) state as described in FIGS. 13A and 13C or FIGS. 14A to 14C, but embodiments of the disclosure are not limited thereto. For example, the electronic device 101 of FIG. 2 may include a flat (or bar) type of display of FIG. 12. Alternatively, for example, the electronic device 101 of FIG. 2 may include a flexible display that is changeable to a plurality of folded states or an unfolded state. Alternatively, for example, the electronic device 101 of FIG. 2 may include a flexible display changeable to the slide-in state and the slide-out state of FIGS. 15A and 15B.

FIG. 3 is an example block diagram of an electronic device according to an embodiment.

The electronic device 101 of FIG. 3 may include at least a part of the electronic device 101 of FIG. 1. Referring to FIG. 3, the electronic device 101 according to an embodiment may include at least one of a processor 310, a display 320, a sensor 330, or a memory 340. The processor 310, the display 320, the cover display 325, the sensor 330, and the memory 340 may be electronically and/or operably coupled with each other by an electronic component such as e.g., a communication bus 302. In an embodiment, the electronic device 101 may further include the cover display 325.

According to an embodiment, the electronic device 101 includes at least one of an electronic device 391-1 (e.g., the electronic device 101 of FIG. 12) including a bar-type display, an electronic device 391-2 (e.g., the electronic device 101 of FIGS. 13A and 13B or the electronic device 101 of FIGS. 14A to 14C) including a flexible display having a folded state and an unfolded state, an electronic device 391-3 (or a multi-foldable electronic device) including a flexible display having a plurality of folded states and unfolded states based on a plurality of folding axes, an electronic device 391-4 (e.g., the electronic device 101 of FIGS. 15A and 15B) including a flexible display in a slide-in or slide-out state, a tablet 392, or a wearable device 393 (e.g., a smart watch).

In an embodiment, the hardware components of the electronic device 101 being operably coupled with each other may mean that a direct connection or an indirect connection between the hardware components is established either by wire or wirelessly such that a second hardware component is controlled by a first hardware component among the hardware components. Although the disclosure is illustrated based on different blocks, embodiments of the disclosure are not limited thereto, and some of the hardware of FIG. 3 (e.g., the processor 310, the memory 340, and at least a portion of a communication circuit (not shown)) may be incorporated into a single integrated circuit such as e.g., a system-on-chip (SoC). The type and/or the number of hardware components included in the electronic device 101 are not limited to those illustrated in FIG. 3. For example, the electronic device 101 may include only some of the hardware components illustrated in FIG. 3.

According to an embodiment, the processor 310 of the electronic device 101 may include hardware for processing data based on one or more instructions. The hardware for processing data may include, for example, an arithmetic and logic unit (ALU), a floating-point unit (FPU), a field programmable gate array (FPGA), a central processing unit (CPU), and/or an application processor (AP). The number of processors 310 may be one or more. For example, the processor 310 may have a structure of a multi-core processor such as a dual-core, a quad-core, or a hexa-core.

According to an embodiment, the display 320 of the electronic device 101 may output visualized information to a user. For example, the display 320 may be controlled by a controller such as e.g., a graphic processing unit (GPU) to output the visualized information to the user. The display 320 may include a liquid crystal display (LCD), a plasma display panel (PDP), and/or one or more light emitting diodes (LEDs). The LED may include an organic LED (OLED). The display 320 may include an electronic paper. According to an embodiment, the display 320 may include a flexible display. For example, the flexible display may have a shape that is at least partially curved and/or deformable.

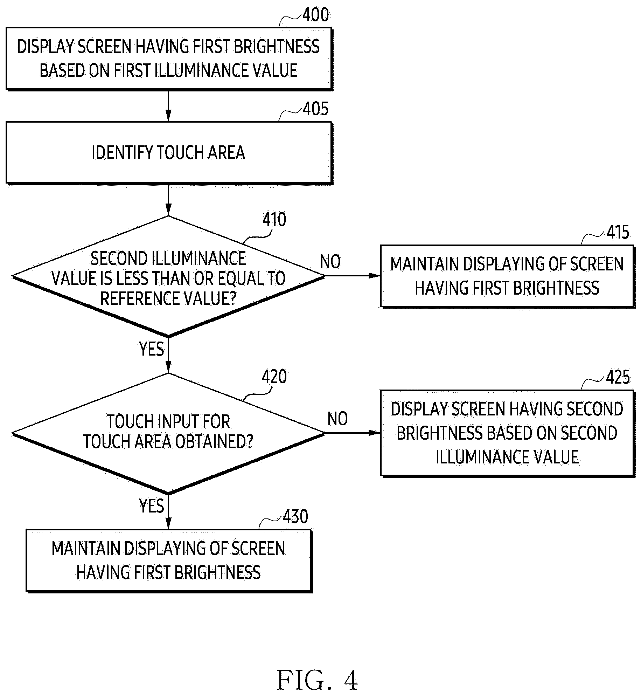

The display 320 of the electronic device 101 according to an embodiment may include a sensor (e.g., a touch sensor panel (TSP)) for detecting an external object (e.g., a user's finger) on the display 320. For example, based on the TSP, the electronic device 101 may detect an external object that comes into contact with the display 320 or floats on the display 320. In other words, the electronic device 101 may identify a touch input based on the TSP. The touch input may include an input including a contact point on the display 320 or a hovering input. According to an embodiment, the electronic device 101 may adjust brightness of a light emitting element (e.g., LED) of the display 320, in response to identifying the external object. For example, the electronic device 101 may adjust the brightness of the screen to be displayed on the display 320 in response to identifying the external object. Specific details related thereto will be described below with reference to FIG. 4.

According to an embodiment, the cover display 325 (e.g., the second display 1342 of FIGS. 13A and 13B or the sub-display 1435 of FIGS. 14A to 14C) of the electronic device 101 may be provided to output visualized information to the user, similar to the display 320. The cover display 325 may be disposed on a surface different from one surface of the electronic device 101 on which the display 320 is disposed. The position of the cover display 325 may be disposed on one surface of a housing that is viewable in a state in which the display 320 is covered (e.g., a folded state). The cover display 325 may be implemented similarly to the display 320. Any description of the cover display 325 that is redundant to the display 320 is omitted for convenience of description. For example, the cover display 325 may be referred to as a sub-display, an external display, or a rear display.

According to an embodiment, the sensor 330 of the electronic device 101 may generate electrical information capable of being processed by the processor 310 and/or the memory 340 from non-electronic information related to the electronic device 101. For example, the sensor 330 may include a global positioning system (GPS) sensor for detecting a geographic location of the electronic device 101. In addition to the GPS scheme, the sensor 330 may generate information indicating the geographical location of the electronic device 101 based on, for example, a global navigation satellite system (GNSS) such as e.g., Galileo and Beidou. The information may be stored in the memory 340, processed by the processor 310, and/or transmitted to another electronic device distinct from the electronic device 101 over a communication circuit (not shown). The sensor 330 is not limited thereto, and may include an image sensor, an illuminance sensor, a proximity sensor, a grip sensor, and/or a Time of Flight (ToF) sensor for detecting electromagnetic waves inclusive of light.

Referring to FIG. 3, an illuminance sensor 331 (e.g., an illuminance sensor 1399 of FIG. 13B or an illuminance sensor 1499 of FIGS. 14A to 14C) is illustrated as an example of the sensor 330. For example, the illuminance sensor 331 may output an electrical signal indicating an intensity (or amount of light) of light reaching at least a portion of the illuminance sensor 331 exposed to the outside. For example, the illuminance sensor 331 may output sensor data indicating brightness of ambient light of the electronic device 101. The illuminance sensor 331 may include an element having a photoelectric effect, whereby electrons are generated upon receiving ambient light, causing a change in conductivity. The illuminance sensor 331 may be an example of a CdS sensor using cadmium sulfide as an element. For example, the sensor data may include an analog-to-digital converter (ADC) value. For example, a value indicating illuminance based on the sensor data may be referred to as an illuminance value. Hereinafter, the illuminance sensor 331 may be referred to as a first illuminance sensor, an illuminance sensor, a primary illuminance sensor, or a main illuminance sensor. For example, the illuminance sensor 331 may be incorporated into the housing of the electronic device 101. For example, the illuminance sensor 331 may be disposed at a first position in the housing. For example, the first position may at least partially overlap the display 320 or may include an area of the housing different from the display 320. For example, the illuminance sensor 331 may receive light outside the electronic device 101 through one surface of the housing.

According to an embodiment, the electronic device 101 may adjust the brightness of the display 320 (or the cover display 325) based on the intensity of light identified using the illuminance sensor 331. For example, the brightness may be referred to as luminance of a screen of the display 320. For example, adjusting the brightness may be understood to be substantially the same as adjusting the level of the brightness. The following description will be made on the basis of an embodiment of the display 320, but embodiments of the disclosure are not limited thereto. Hereinafter, the description made of the display 320 may be applied substantially the same to the cover display 325. For example, the electronic device 101 may identify illuminance values using the illuminance sensor 331. For example, the electronic device 101 may set a brightness of a screen to be displayed on the display 320, based on the illuminance value. For example, the electronic device 101 may display the screen with the set brightness. For example, the electronic device 101 may identify at least one reference value corresponding to the identified illuminance value. For example, the at least one reference value may be a value specified for the illuminance value. The at least one reference value according to the illuminance value may be illustrated as shown in the following table.

**Table 1**

| **Default Value** | | **Case 1** | | **Case 2** | |
|---|---|---|---|---|---|
| **Illuminance (lux)** | **Brightness (cd/m²)** | **First Reference Value** | **Brightness** | **Second Reference Value** | **Brightness** |
| 0 | 13 | - | - | 10 | 55 |
| 10 | 55 | 3 | 27 | 80 | 119 |
| 15 | 75 | 4 | 31 | 120 | 119 |
| 20 | 95 | 5 | 35 | 152 | 122 |
| 25 | 106 | 5 | 35 | 182 | 126 |
| 50 | 112 | 10 | 55 | 300 | 134 |
| 100 | 119 | 40 | 108 | 400 | 147 |
| 300 | 134 | 50 | 112 | 900 | 206 |
| 500 | 157 | 60 | 115 | 1300 | 272 |
| 1000 | 220 | 200 | 126 | 2000 | 442 |
| 2000 | 450 | 600 | 172 | 3000 | 545 |
| 3000 | 545 | 800 | 195 | 5000 | 635 |
| 4000 | 590 | 2999 | 220 | 6000 | 680 |
| 5000 | 635 | 2999 | 450 | 7000 | 725 |
| 10000 | 860 | 5000 | 635 | 20000 | 900 |
| 20000 | 900 | 6000 | 680 | 40000 | 900 |
| 40000 | 900 | 20000 | 900 | 999999 | 900 |

The default value may indicate the brightness of the screen according to the identified illuminance value when the display 320 is changed from the off state to the on state. The Case 1 above may represent decreasing the brightness (or changing to darker) when the illuminance value decreases, while displaying the screen having the brightness according to the identified illuminance value. The Case 2 above may represent increasing the brightness (or changing to brighter) when the illuminance value increases, while displaying the screen having the brightness according to the identified illuminance value.

For example, the electronic device 101 may change the display 320 from an off state to an on state, based on identifying an event for changing the display 320 to an on state. For example, the electronic device 101 may identify the first illuminance value using the illuminance sensor 331. Based on the first illuminance value (e.g., 500lux), the electronic device 101 may display a screen with a first brightness 157nit. In this case, a first reference value (e.g., 60 lux) and a second reference value (e.g., 1300 lux) may be set for the first illuminance value, respectively. The first reference value may refer to a reference value for identifying a second brightness (e.g., 115 nit) that is changed from the first brightness and is lower (or darker) than the first brightness. In other words, in the state in which the screen with the first brightness identified based on the first illuminance value is displayed, when a second illuminance value less than the first reference value is identified, the electronic device 101 may display the screen having the second brightness changed from the first brightness. The second reference value may refer to a reference value for identifying a third brightness (e.g., 272 nit) that is changed from the first brightness and is higher (or brighter) than the first brightness. In other words, the electronic device 101 may display the screen having the third brightness changed from the first brightness when identifying a third illuminance value greater than or equal to the second reference value, while displaying the screen having the first brightness identified based on the first illuminance value. The first reference value and the second reference value may be referred to as a first threshold value and a second threshold value, respectively. A range between the first reference value and the second reference value may be referred to as a reference range. As described above, adjusting the brightness according to the changed illuminance value, in the state in which the electronic device 101 displays the screen having a specific brightness based on the illuminance value, may be referred to as an automatic brightness adjustment, an automatic brightness adjustment function, or an automatic brightness hysteresis.

According to an embodiment, the sensor 330 may include a touch sensor 332. For example, the touch sensor 332 may be used to detect an input including a contact point for a certain position of the display 320 (or the display panel) or a hovering input. For example, the touch sensor 332 may include the TSP of the display 320. Hereinafter, the touch input may include at least one of an input including the contact point or the hovering input. Although not illustrated in FIG. 3, the touch sensor 332 may be connected to a touch sensor integrated circuit (IC) for controlling the touch sensor 332. The touch sensor IC may detect the touch input by measuring a change in signal (e.g., voltage, amount of light, resistance, amount of charge, etc.) for a specific position of the display 320. The touch sensor IC may provide information (e.g., position, area, pressure, time, etc.) about the detected touch input to the processor 310.

According to an embodiment, the sensor 330 may include a motion sensor 333. For example, the motion sensor 330 may be used to identify a position, a movement, a direction, or a rotation state of the electronic device 101. For example, the electronic device 101 may identify the position, the movement, the direction, or the rotation state of the electronic device 101, based on information obtained from the motion sensor 330. For example, the motion sensor 333 may include a gyro sensor or an acceleration sensor.

According to an embodiment, the sensor 330 may further include at least one sensor distinct from the illuminance sensor 331, the touch sensor 332, and the motion sensor 333. For example, the at least one sensor may include a sensor (or an optical sensor) for outputting an electrical signal indicating the intensity (or amount of light) of light. For example, the at least one sensor may include another illuminance sensor, a flick sensor, a heart rate measurement (HRM) sensor, or a camera sensor. However, embodiments of the disclosure are not limited thereto. Hereinafter, the at least one sensor may be referred to as a second illuminance sensor, another illuminance sensor, an auxiliary illuminance sensor, or a sub illuminance sensor. According to an embodiment, the second illuminance sensor may be located in another area of one surface of the display 320 on which the first illuminance sensor is disposed. For example, the first illuminance sensor may be located in a first area on the one surface of the display 320. For example, the second illuminance sensor may be located in a second area different from the first area on the one surface of the display 320. In the above-described example, the one surface is described as a surface of the display 320, but embodiments of the disclosure are not limited thereto. For example, the one surface may refer to one surface of a housing included in the electronic device 101. For example, the at least one sensor may be included in the housing of the electronic device 101. For example, the at least one sensor may be disposed at a second position in the housing. For example, the second position may at least partially overlap the display 320 or may include an area of the housing distinct from the display 320. The second position may be different from the first position where the illuminance sensor 331 is disposed. For example, the at least one sensor may receive light outside the electronic device 101 through the one surface of the housing. In other words, the one surface on which the at least one sensor and the illuminance sensor 331 receive the light may be the same. However, embodiments of the disclosure are not limited thereto. For example, the one surface where the at least one sensor receives light may be different (e.g., an opposite surface) from the surface where the illuminance sensor 331 receives light.

According to an embodiment, the memory 340 of the electronic device 101 may include hardware components for storing data and/or instructions inputted to and/or outputted from the processor 310. The memory 340 may include, for example, a volatile memory such as a random-access memory (RAM) and/or a non-volatile memory such as a read-only memory (ROM). The volatile memory may include, for example, at least one of a dynamic RAM (DRAM), a static RAM (SRAM), a cache RAM, a pseudo SRAM (PSRAM) or the like. The non-volatile memory may include, for example, at least one of a programmable ROM (PROM), an erasable PROM (EPROM), an electrically erasable PROM (EEPROM), a flash memory, a hard disk, a compact disk, a solid state drive (SSD), an embedded multimedia card (eMMC) or the like.

According to an embodiment, one or more instructions (or commands) indicating operations and/or actions for the processor 310 to perform on data may be stored in the memory 340 of the electronic device 101. A set of one or more instructions may be referred to as firmware, an operating system, a process, a routine, a sub-routine, and/or an application. For example, when a set of a plurality of instructions distributed in the form of an operating system, firmware, a driver, and/or an application is executed, the electronic device 101 and/or the processor 310 may perform at least one of operations of FIG. 4, FIG. 6, FIG. 8, FIG. 9, or FIG. 10. Hereinafter, having an application installed in the electronic device 101 may mean that one or more instructions provided in the form of an application are stored in the memory 340 of the electronic device 101 such that the one or more applications are stored in an executable format (e.g., a file with an extension specified by the operating system of the electronic device 101) by the processor 310 of the electronic device 101.

Referring to FIG. 3, programs installed in the electronic device 101 may be classified into any one of different layers including an application layer 350, a framework layer 360, and/or a hardware abstraction layer (HAL) 370, based on a target. For example, programs (e.g., a driver program) designed to target hardware (e.g., the display 320 and/or the sensor 330) of the electronic device 101 may be classified into the hardware abstraction layer 370. For example, programs (e.g., a power manager (or power management system) 361 and a sensor manager (or sensor driver) 362) designed to target at least one of the hardware abstraction layer 370 and/or the application layer 350 may be classified into the framework layer 360. Programs classified into the framework layer 360 may provide an application programming interface (API) executable based on other programs.

For example, a program designed to target a user controlling the electronic device 101 may be classified into the application layer 350. As an example of programs classified into the application layer 350, the camera software application 351 is illustrated, but embodiments are not limited thereto. The camera software application 351 may indicate an application for executing functions of a camera (e.g., the camera module 180 of FIG. 1) of the electronic device 101. For example, programs (e.g., software applications) classified into the application layer 350 may invoke an API to cause execution of a function supported by programs classified into the framework layer 360.

Referring to FIG. 3, based on an execution of the sensor manager 362, the processor 310 may control the sensor 330 and/or obtain and/or receive sensor data from the sensor 330. Based on the execution of the sensor manager 362, the processor 310 may periodically (or repeatedly) obtain the sensor data from the sensor 330. The sensor manager 362 may be one or more depending on the number and/or type of the sensors 330 included in the electronic device 101. The sensor manager 362 may be a program for controlling a sensor.

For example, based on an execution of the power manager 361, the processor 310 may perform an operation for controlling the display 320 (or the cover display 325). For example, based on the execution of the power manager 361, the processor 310 may adjust the brightness of the display 320 (or the cover display 325). For example, the processor 310 may identify the brightness corresponding to the identified illuminance value, and control to display a screen with the brightness using the power manager 361.

For example, based on the execution of the sensor manager 362, the processor 310 may perform an operation for controlling the sensor 330. For example, based on the execution of the sensor manager 362, the processor 310 may generate a control signal for activating or deactivating the illuminance sensor 331 and transmit the control signal to the illuminance sensor 331. Based on the execution of the sensor manager 362, the processor 310 may obtain, from the illuminance sensor 331, information for obtaining an illuminance value of the outside of the electronic device 101. The illuminance value may refer to data indicating the intensity of light received from the outside of the electronic device 101 to the electronic device 101. Alternatively, for example, based on the execution of the sensor manager 362, the processor 310 may obtain, from the at least one sensor, information for obtaining an illuminance value for the outside of the electronic device 101. According to an embodiment, the information for obtaining the illuminance value may include data (or raw data) on the amount of external light obtained from the illuminance sensor 331 (or the at least one sensor). For example, the illuminance sensor 331 (or the at least one sensor) may measure the data and provide the measured data to the processor 310. The processor 310 may obtain an illuminance value based on the measured data. However, embodiments of the disclosure are not limited thereto. For example, the illuminance sensor 331 (or the at least one sensor) may identify an illuminance value based on the data and may provide the identified illuminance value to the processor 310.

FIG. 4 illustrates an example of an operation flow of a method of adjusting brightness of a screen based on an illuminance value, by identifying an input to a touch area according to an embodiment.

At least part of the method of FIG. 4 may be performed by the electronic device 101 of FIG. 3. For example, at least part of the method may be controlled by the processor 310 of the electronic device 101. Hereinafter, each operation of the embodiments may be performed sequentially, but is not necessarily performed sequentially. For example, the sequence of operations performed may be changed, and at least two operations of them may be performed in parallel.

Referring to operation 400, the electronic device 101 may display a screen having a first brightness based on a first illuminance value. For example, the electronic device 101 may identify the first illuminance value using the illuminance sensor 331. For example, the electronic device 101 may display the screen with the first brightness based on the first illuminance value, through the display 320. Alternatively, for example, the electronic device 101 may display the screen with the first brightness via the cover display 325. In other words, the following description of the display 320 may be applied substantially the same to the cover display 325.

According to an embodiment, the electronic device 101 may identify an event for changing the display 320 (or the cover display 325) to an on state. For example, the electronic device 101 may identify the event for changing the display 320 from the off state to the on state. For example, the event may include an input to a physical button of the electronic device 101, a touch input to the display 320, or a user's input (or gesture) to the electronic device 101. The off state of the display 320 may include a screen (e.g., always-on display (AOD) screen) for a low power condition. For example, the electronic device 101 may identify the first illuminance value using the illuminance sensor 331, based on identifying that the display 320 is changed from the off state to the on state. For example, the electronic device 101 may identify the first brightness according to the identified first illuminance value. For example, the electronic device 101 may display a screen having the first brightness through the display 320.

In operation 405, the electronic device 101 may identify a touch area. For example, the electronic device 101 may identify the touch area based on a position of the illuminance sensor 331. For example, the touch area may include at least part of the position of the illuminance sensor 331. For example, the touch area may be formed as a first size inclusive of the position of the illuminance sensor 331. The touch area at least partially including the position of the illuminance sensor 331 may represent that a virtual line extending from the position of the illuminance sensor 331 includes an area passing through the display 320. For example, the touch area at least partially including the position of the illuminance sensor 331 may be referred to as at least partially corresponding to the position of the illuminance sensor 331.

For example, the first size may be preset or may be set based at least in part on a user input of the electronic device 101. For example, the first size may include a periphery of the illuminance sensor 331 and indicate an area extending from the periphery by a specified length. The specified length may be preset or changed based at least in part on the user input. For example, the electronic device 101 may identify at least part of the user input, based on a grip sensor included in the electronic device 101. The electronic device 101 may identify a portion (e.g., an upper end or a lower end) of the electronic device 101 on which at least part of the user input is positioned, based on the grip sensor. For example, the portion may indicate a portion of the electronic device 101 adjacent to the position of the illuminance sensor 331. The electronic device 101 may identify that at least part of the user input may cause a touch input onto the touch area, based on the identified portion. Accordingly, the electronic device 101 may change the first size. For example, the first size and the position of the illuminance sensor 331 may be stored in the memory. For example, the memory may include a memory or a memory 340 in a processing circuit (e.g., a TSP integrated circuit (TSP IC)) for controlling the display 320.

For example, the electronic device 101 may identify the position of the illuminance sensor 331. For example, the electronic device 101 may identify coordinates indicating the position of the illuminance sensor 331. For example, the coordinates may include relative coordinates within the display 320 of the electronic device 101. For example, the relative coordinates may include coordinates indicating the position of the illuminance sensor 331 from one point (e.g., upper left) of the display 320. However, embodiments of the disclosure are not limited thereto. In addition, in the above-described example, it is described that the electronic device 101 identifies the position of the illuminance sensor 331, but embodiments of the disclosure are not limited thereto. For example, the electronic device 101 may store the position of the illuminance sensor 331 in the memory 340 and identify information on the position stored in the memory 340. Alternatively, for example, the electronic device 101 may identify the position of the illuminance sensor 331 as it identifies a change in state (e.g., a grip state, a display state, or a rotation state) of the electronic device 101. For example, the electronic device 101 may identify the position that is changeable according to the state, based on identifying the change in state.

In operation 410, the electronic device 101 may identify whether the second illuminance value is less than or equal to a reference value. For example, the electronic device 101 may identify whether the second illuminance value identified using the illuminance sensor 331 is less than or equal to the reference value.

According to an embodiment, the electronic device 101 may identify whether the second illuminance value identified using the illuminance sensor 331 is less than or equal to the reference value. For example, the electronic device 101 may identify the second illuminance value using the illuminance sensor 331, in the state in which the screen having the first brightness is displayed. For example, the second illuminance value may be changed from the first illuminance value by an external factor and indicate an illuminance value lower than the first illuminance value, in a state in which the display 320 of the electronic device 101 is turned on. In FIG. 4, the case in which the second illuminance value becomes lower than the first illuminance value (i.e., getting darker) is described as an example, but embodiments of the disclosure are not limited thereto. For example, the second illuminance value may have an illuminance value greater than the first illuminance value.

According to an embodiment, the electronic device 101 may identify whether the second illuminance value is less than or equal to the reference value. For example, the reference value may correspond to a first reference value set for the first illuminance value. However, as described above, when the second illuminance value is greater than the first illuminance value, the electronic device 101 may also identify whether the second illuminance value exceeds the reference value. In such a circumstance, the reference value may correspond to a second reference value set for the first illuminance value.

In operation 410, when the second illuminance value exceeds the reference value, the electronic device 101 may perform operation 415. In the example of FIG. 4, as described above, the case where the second illuminance value exceeds the reference value may indicate the case where the second illuminance value is less than or equal to the first illuminance value and exceeds the reference value. In operation 410, when the second illuminance value is less than or equal to the reference value, the electronic device 101 may perform operation 420.

In operation 415, the electronic device 101 may maintain displaying of the screen having the first brightness. For example, the electronic device 101 may maintain displaying of the screen having the first brightness, even if it identifies the second illuminance value changed from the first illuminance value, when the second illuminance value exceeds the reference value. In other words, the electronic device 101 may display the screen having the first brightness, in response to identifying the second illuminance value. The second illuminance value exceeding the reference value may represent that the second illuminance value is an illuminance value within a reference range for maintaining the brightness set for the first illuminance value. The reference range may be defined by a first reference value and a second reference value for the first illuminance value.

In operation 420, the electronic device 101 may identify whether a touch input to the touch area is obtained. For example, the touch area may have the first size. For example, the touch input may be caused by an external object (e.g., a user's body part). For example, the touch input may include an input including a contact point to the touch area or a hovering input. For example, the touch input may be referred to as a touch event, an external input, a user input, or an input by an external object.

In operation 420, when the touch input is not obtained, the electronic device 101 may perform operation 425. In operation 420, when the touch input is obtained, the electronic device 101 may perform operation 430.

In operation 425, the electronic device 101 may display a screen having a second brightness based on the second illuminance value. For example, in response to the touch input to the touch area not being obtained, the electronic device 101 may display the screen having the second brightness based on the second illuminance value. The touch input to the touch area being not identified may represent that the amount of external light (or brightness) is actually lowered without the touch input. The amount of external light may be lowered based on an event different from the touch input. For example, the event different from the touch input may include a change in light source, a change in state (e.g., on/off) of the light source, or a change in posture of the electronic device 101. However, embodiments of the disclosure are not limited thereto.

For example, the second illuminance value may indicate an illuminance value less than or equal to the reference value. In other words, the second illuminance value may be an illuminance value less than the first reference value set for the first illuminance value. The electronic device 101 may identify the second brightness lower than the first brightness, based on the second illuminance value. The electronic device 101 may display a screen having the second brightness. However, embodiments of the disclosure are not limited thereto. As described above, when the second illuminance value exceeds the first illuminance value and the second illuminance value exceeds the second reference value for the first illuminance value, the second brightness may be greater than the first brightness.

In operation 430, the electronic device 101 may maintain displaying of the screen having the first brightness. For example, when the touch input to the touch area is obtained, the electronic device 101 may display the screen having the first brightness. For example, the electronic device 101 may identify the second illuminance value as a value changed by an external object, in a state in which the screen having the first brightness is displayed. In other words, the electronic device 101 may identify that the illuminance value has changed by the external object, rather than the amount of external light (or brightness) having been actually lowered. Accordingly, the electronic device 101 may not change the brightness of the screen based on the second illuminance value. For example, the electronic device 101 may maintain displaying of the screen having the first brightness.

In FIG. 4, it is described that the electronic device 101 identifies whether the second illuminance value is less than or equal to the reference value in operation 410 and then identifies whether the touch input to the touch area is obtained in operation 420, but the embodiment of the disclosure is not limited thereto. For example, the electronic device 101 may perform the operation 410 and the operation 420 simultaneously (or in parallel). Alternatively, for example, when the touch input is obtained after performing the operation 420, the electronic device 101 may identify whether the second illuminance value changed according to the touch input is less than or equal to the reference value, through operation 410.

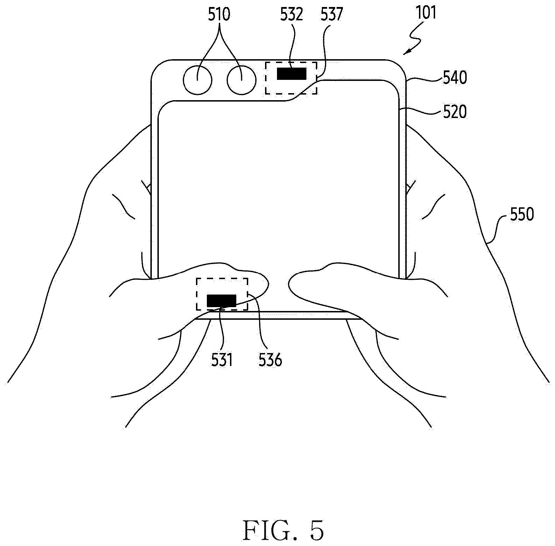

FIG. 5 illustrates an example of an electronic device including a plurality of sensors for identifying an illuminance value according to an embodiment.

The electronic device 101 of FIG. 5 may illustrate an example of the electronic device 101 of FIG. 3. For example, the plurality of sensors may include a first illuminance sensor 531 and a second illuminance sensor 532. For example, the first illuminance sensor 531 may illustrate an example of the illuminance sensor 331 of FIG. 3. For example, the second illuminance sensor 532 may illustrate an example of the at least one sensor of FIG. 3, which may be used as an auxiliary illuminance sensor.

The electronic device 101 of FIG. 5 may include at least one camera 510, a display 520, a first illuminance sensor 531 (e.g., an illuminance sensor 1399 of FIGS. 13A and 13B, or an illuminance sensor 1499 of FIGS. 14A to 14C), a second illuminance sensor 532, and a housing 540. For example, the display 520 may represent an example of the cover display 325 of FIG. 3 (or a second display 1342 of FIGS. 13A and 13B or a sub-display 1435 of FIGS. 14A to 14C). For example, the housing 540 may include a plurality of housings (or housing parts), as will be described later. For example, the plurality of housing parts may include a first housing (e.g., a first housing 1310 of FIGS. 13A and 13B, a first housing 1410 of FIGS. 14A to 14C, or a first housing 1510 of FIGS. 15A and 15B) and a second housing (e.g., a second housing 1320 of FIGS. 13A and 13B, a second housing 1420 of FIGS. 14A to 14C, or a second housing 1520 of FIGS. 15A and 15B) (or the first housing part and the second housing part). For example, at least one camera 510 and a display 520 may be disposed on one surface of some (e.g., the first housing part) of the plurality of housings. The first illuminance sensor 531 and the second illuminance sensor 532 may receive light through the one surface. For example, the first illuminance sensor 531 and the second illuminance sensor 532 may be disposed in the portion and may receive light through the one surface. For example, the portion may include an area of the housing or the display 520.

Referring to the example, the first illuminance sensor 531 and the second illuminance sensor 532 may be disposed on the one surface of the portion. For example, the first illuminance sensor 531 may be disposed in the first area 536. For example, the second illuminance sensor 532 may be disposed in the second area 537. The first area 536 and the second area 537 may represent areas on the one surface.

Referring to FIG. 5, the first illuminance sensor 531 may be covered by an external object 550. For example, while the user of the electronic device 101 uses the electronic device 101, the first illuminance sensor 531 may be covered by the external object 550 that is the body part of the user. Accordingly, the illuminance value identified by the first illuminance sensor 531 may be lowered. The electronic device 101 may adjust the brightness as it identifies such a low illuminance value. However, the intensity of the light emitted from the actual light source may be unchanged, but the intensity of the light may be changed by means of a touch input by the external object 550.

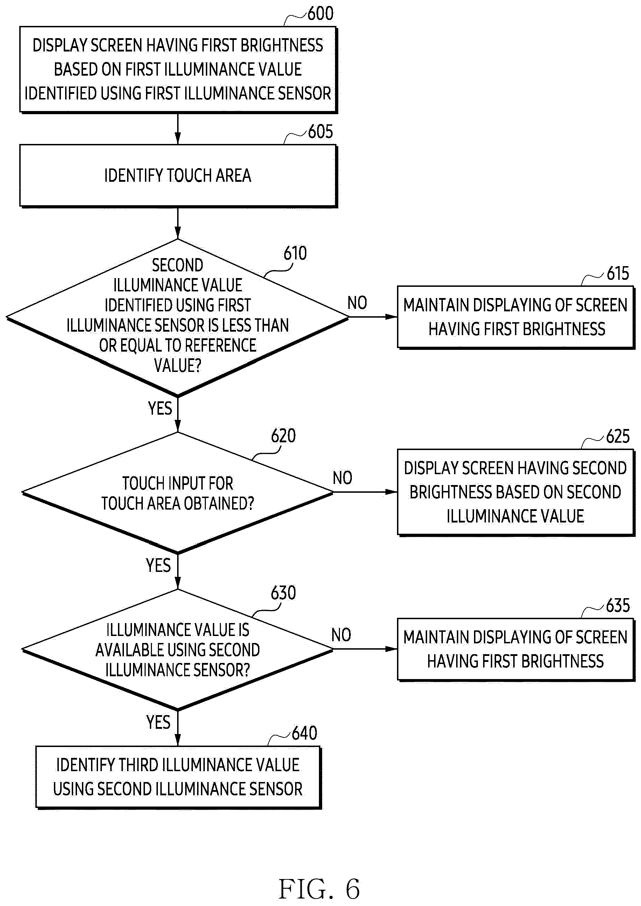

According to an embodiment, the electronic device 101 may use the second illuminance sensor 532 together with the first illuminance sensor 531. For example, when the first illuminance sensor 531 is covered with the external object 550, the electronic device 101 may adjust the brightness of the screen of the display 520, based on an illuminance value obtained using the second illuminance sensor 532 instead of the first illuminance sensor 531. Details of the operation flow of the electronic device 101 related thereto will be described below with reference to FIG. 6.

FIG. 6 illustrates an example of an operation flow of a method of adjusting brightness of the screen based on illuminance values identified using a plurality of sensors according to an embodiment.

At least part of the method of FIG. 6 may be performed by the electronic device 101 of FIG. 3. For example, at least part of the method may be controlled by the processor 310 of the electronic device 101. In the following embodiments, each operation may be performed in sequentially, but it is not necessarily performed sequentially. For example, the order of each operation may be changed, and at least two of the operations may be performed in parallel.

Referring to operation 600, the electronic device 101 may display a screen having a first brightness based on the first illuminance value identified using the first illuminance sensor. For example, the electronic device 101 may display the screen having the first brightness through the display 320. Alternatively, for example, the electronic device 101 may display the screen having the first brightness through the cover display 325 (or the display 520 of FIG. 5). In other words, the following description of the display 320 may be applied substantially the same to the cover display 325. For example, the first illuminance sensor may be an example of the first illuminance sensor 531 of FIG. 5 (or the illuminance sensor 331 of FIG. 3).

According to an embodiment, the electronic device 101 may identify an event for changing the display 320 (or the cover display 325) to an on state. For example, the electronic device 101 may identify the event for changing the display 320 from the off state to the on state. For example, the event may include an input to a physical button of the electronic device 101, a touch input to the display 320, or a user's input (or gesture) to the electronic device 101. The state in which the display 320 is turned off may include a screen (e.g., always-on display (AOD) screen) for a low power condition. For example, in response to identifying the event, the electronic device 101 may identify the first illuminance value using the first illuminance sensor. For example, the electronic device 101 may identify the first brightness according to the identified first illuminance value. For example, the electronic device 101 may display the screen having the first brightness through the display 320.

In operation 605, the electronic device 101 may identify a touch area. For example, the electronic device 101 may identify the touch area based on a position of the first illuminance sensor. For example, the touch area may include at least a portion of the position of the first illuminance sensor. For example, the touch area may be formed in a first size including the position of the first illuminance sensor. The touch area including at least part of the position of the first illuminance sensor may indicate that a virtual line extending from the position of the first illuminance sensor includes an area passing through the display 320. For example, the including at least part of the position of the first illuminance sensor may be referred to as at least partially corresponding to the position of the first illuminance sensor.

For example, the first size may be preset or may be set based at least in part on a user input of the electronic device 101. For example, the first size may include a periphery of the illuminance sensor 331 and may indicate an area extending from the periphery by a specified length. The specified length may be preset or may be changed based at least in part on the user input. For example, the electronic device 101 may identify at least a portion of the user input, based on a grip sensor included in the electronic device 101. The electronic device 101 may identify a portion (e.g., an upper end or a lower end) of the electronic device 101 on which at least a portion of the user input is positioned, based on the grip sensor. For example, the portion may indicate a portion of the electronic device 101 adjacent to the position of the illuminance sensor 331. The electronic device 101 may identify that at least a portion of the user input may cause a touch input to the touch area, based on the identified portion. Accordingly, the electronic device 101 may change the first size.

For example, the first size and the position of the first illuminance sensor may be stored in a memory. For example, the memory may include a memory or a memory 340 in a processing circuit (e.g., a TSP IC (integrated circuit)) for controlling the display 320.

In FIG. 6, an example is described of the touch area in which the size is changed, but embodiments of the disclosure are not limited thereto. For example, the electronic device 101 may identify the touch area in which its attribute is changeable. For example, the attribute may include a size, a shape, or a position of the touch area.

For example, the electronic device 101 may identify the position of the first illuminance sensor. For example, the electronic device 101 may identify coordinates indicating the position of the first illuminance sensor. For example, the coordinates may include relative coordinates in the display 320 of the electronic device 101. For example, the relative coordinates may include coordinates indicating a position of the first illuminance sensor from a point (e.g., an upper left end) of the display 320. However, embodiments of the disclosure are not limited thereto. In the above-described example, while it is described that the electronic device 101 identifies the position of the first illuminance sensor, embodiments of the disclosure are not limited thereto. For example, the electronic device 101 may store the position of the first illuminance sensor in the memory (e.g., the memory 340) and may identify information on the position stored in the memory. Alternatively, for example, as the electronic device 101 identifies a change in state (e.g., a grip state, a display state, or a rotation state) of the electronic device 101, the electronic device 101 may identify the position of the first illuminance sensor. For example, the electronic device 101 may identify the position that is changeable according to the state, based on identifying the change in the state.

In operation 610, the electronic device 101 may identify whether the second illuminance value identified using the first illuminance sensor is less than or equal to a reference value. For example, the electronic device 101 may identify the second illuminance value using the first illuminance sensor, while the screen having the first brightness is displayed. For example, the second illuminance value may be changed from the first illuminance value by an external factor and may indicate an illuminance value lower than the first illuminance value, in a state in which the display 320 of the electronic device 101 is turned on. In FIG. 6, a case in which the second illuminance value is lower than the first illuminance value (i.e., darker) is described as an example, but embodiments of the disclosure are not limited thereto. For example, the second illuminance value may have an illuminance value greater than the first illuminance value.

According to an embodiment, the electronic device 101 may identify whether the second illuminance value is less than or equal to a reference value. For example, the reference value may correspond to a first reference value set for the first illuminance value. However, as described above, when the second illuminance value is greater than the first illuminance value, the electronic device 101 may identify whether the second illuminance value exceeds the reference value. In this case, the reference value may correspond to a second reference value set for the first illuminance value.

In operation 610, when the second illuminance value exceeds the reference value, the electronic device 101 may perform operation 615. In the example of FIG. 6, as described above, the case where the second illuminance value exceeds the reference value may represent the case where the second illuminance value is less than or equal to the first illuminance value and exceeds the reference value. In operation 610, when the second illuminance value is less than or equal to the reference value, the electronic device 101 may perform operation 620.

In operation 615, the electronic device 101 may maintain displaying of the screen having the first brightness. For example, the electronic device 101 may maintain displaying of the screen having the first brightness, even if it identifies the second illuminance value changed from the first illuminance value, when the second illuminance value exceeds the reference value. In other words, the electronic device 101 may display the screen having the first brightness in response to identifying the second illuminance value. The second illuminance value exceeding the reference value may represent that the second illuminance value is an illuminance value within a reference range for maintaining brightness set for the first illuminance value. The reference range may be defined by a first reference value and a second reference value for the first illuminance value.

In operation 620, the electronic device 101 may identify whether a touch input to the touch area is obtained. For example, the touch area may have the first size. For example, the touch input may be caused by an external object (e.g., a user's body part). For example, the touch input may include an input including a contact point for the touch area or a hovering input.

In operation 620, when the touch input is not obtained, the electronic device 101 may perform operation 625. In operation 620, when the touch input is obtained, the electronic device 101 may perform operation 630.

In operation 625, the electronic device 101 may display a screen having a second brightness based on the second illuminance value. For example, in response to the touch input to the touch area not being obtained, the electronic device 101 may display the screen having the second brightness based on the second illuminance value. The state of the touch input being obtained may be referred to as a first state. Alternatively, the state of the touch input being not obtained may be referred to as a second state distinct from the first state. For example, in the second state, the electronic device 101 may display the screen having the second brightness.

The touch input to the touch area being not identified may represent that the amount of external light (or brightness) is actually lowered without the touch input. The external light amount may be lowered based on an event different from the touch input. For example, the event different from the touch input may include a change in light source, a change in state (e.g., on/off) of the light source, or a change in posture of the electronic device 101. However, embodiments of the disclosure are not limited thereto.

For example, the second illuminance value may indicate an illuminance value less than or equal to the reference value. In other words, the second illuminance value may be an illuminance value less than the first reference value set for the first illuminance value. The electronic device 101 may identify the second brightness lower than the first brightness, based on the second illuminance value. The electronic device 101 may display the screen having the second brightness. However, embodiments of the disclosure are not limited thereto. As described above, when the second illuminance value exceeds the first illuminance value and the second illuminance value exceeds a second reference value for the first illuminance value, the second brightness may be greater than the first brightness.

In operation 630, the electronic device 101 may identify whether the second illuminance sensor is available. For example, in response to identifying that the touch input is obtained, the electronic device 101 may identify whether the second illuminance sensor is available. For example, in the first state, the electronic device 101 may identify whether the second illuminance sensor is available.

According to an embodiment, the second illuminance sensor may represent a sensor facing the same direction as the first illuminance sensor. Alternatively, the first illuminance sensor and the second illuminance sensor may receive light through one surface. In other words, the first illuminance sensor and the second illuminance sensor may be disposed in the housing of the electronic device 101 to face the one surface, and may face the same direction. For example, the one surface may represent a housing (e.g., the housing 540 of FIG. 5 or a partial housing part of the housing 540) of the electronic device 101 or a surface of the display 320 (or the cover display 325).

According to an embodiment, the electronic device 101 may identify whether the second illuminance sensor is available, based on a field of view (FOV) of the second illuminance sensor. For example, when the light source is located in the FoV, the electronic device 101 may identify that the second illuminance sensor is available. In contrast, when the light source is located out of the FoV, the electronic device 101 may identify that the second illuminance sensor is not available. For example, when the light source is positioned in the FoV, it may be understood that the reliability of the second illuminance sensor is relatively high. In other words, the high reliability may represent that the illuminance value measured through the second illuminance sensor is a relatively accurate illuminance value.

Alternatively, according to an embodiment, when an illuminance value is obtained through the second illuminance sensor, the electronic device 101 may identify that the second illuminance sensor is available. In contrast, when any illuminance value is not obtained through the second illuminance sensor, the electronic device 101 may identify that the second illuminance sensor is not available.

In operation 630, when it is identified that the second illuminance sensor is not available, the electronic device 101 may perform operation 635. In operation 630, when it is identified that the second illuminance sensor is available, the electronic device 101 may perform operation 640.

In operation 635, the electronic device 101 may maintain displaying of the screen having the first brightness. For example, when the touch input to the touch area is not obtained, the electronic device 101 may display the screen having the first brightness. For example, the electronic device 101 may identify the second illuminance value as a value changed by an external object, in a state of the screen having the first brightness being displayed. In other words, the electronic device 101 may identify that the illuminance value is changed by the external object, rather than the amount of external light (or brightness) being lowered. Accordingly, the electronic device 101 may not change the brightness of the screen based on the second illuminance value. For example, the electronic device 101 may maintain displaying of the screen having the first brightness.

In operation 640, the electronic device 101 may identify a third illuminance value using the second illuminance sensor. For example, the electronic device 101 may identify the third illuminance value using the second illuminance sensor, based on identifying that the second illuminance sensor is available.

According to an embodiment, when the third illuminance value is less than or equal to the reference value, the electronic device 101 may identify a third brightness lower than the first brightness. For example, the electronic device 101 may identify the third brightness, based on the third illuminance value that is less than or equal to the first reference value set for the first illuminance value. Accordingly, the electronic device 101 may display the screen having the third brightness. In an example, the third brightness may correspond to the second brightness. In other words, the second brightness according to the second illuminance value that is less than or equal to the reference value may be the same as the third brightness according to the third illuminance value that is less than or equal to the reference value. However, embodiments of the disclosure are not limited thereto.

In the above example, it is described an example in which the third illuminance value lower than the first illuminance value is identified, but embodiments of the disclosure are not limited thereto. According to an embodiment, when the third illuminance value exceeds the second reference value for the first illuminance value, the electronic device 101 may identify a fourth brightness greater than the first brightness. For example, the electronic device 101 may identify the fourth brightness based on identifying the third illuminance value exceeding the second reference value. The electronic device 101 may display a screen having the fourth brightness. Alternatively, according to an embodiment, when the third illuminance value is a value between the first reference value and the second reference value, the electronic device 101 may identify the first brightness. For example, the electronic device 101 may maintain displaying of the screen having the first brightness, even if it identifies the third illuminance value in the state of the screen having the first brightness being displayed, when the third illuminance value is a value between the first reference value and the second reference value.

Although not illustrated in FIG. 6, the electronic device 101 may identify whether a third illuminance sensor different from the first illuminance sensor and the second illuminance sensor is available. For example, when it is identified that the second illuminance sensor is not available, the electronic device 101 may identify whether the third illuminance sensor is available. For example, the third illuminance sensor may refer to a sensor facing the same direction as the first illuminance sensor and the second illuminance sensor. Alternatively, the third illuminance sensor may be disposed on the one surface on which the first illuminance sensor and the second illuminance sensor are disposed. The above description of the third illuminance sensor may be applied in substantially the same manner as that of the second illuminance sensor.

According to an embodiment, when the plurality of illuminance sensors are available, the electronic device 101 may identify an illuminance value, based on a representative value of values obtained using the plurality of illuminance sensors. For example, the electronic device 101 may identify a first value using the first illuminance sensor, a second value using the second illuminance sensor, and a third value using the third illuminance sensor, respectively. Accordingly, the electronic device 101 may identify the first illuminance value (or the second illuminance value or the third illuminance value), based on the representative value (e.g., an average value or an intermediate value) of the first value, the second value, and the third value.

In the above-described example, it is described that the second illuminance sensor is disposed (or receives light through the one surface) to face the same direction as the first illuminance sensor, but embodiments of the disclosure are not limited thereto. In the electronic device 101 in the folded state illustrated in FIG. 5, the first illuminance sensor may correspond to the first illuminance sensor 531 of FIG. 5. Unlike FIG. 5, in the electronic device 101 in the unfolded state, the second illuminance sensor may receive light through a surface (e.g., a first surface 1311 of FIG. 13A) opposite to a surface (e.g., a second surface 1312 of FIG. 13B) that the first illuminance sensor receives light. For example, the second illuminance sensor may include a front camera. According to an embodiment, the electronic device 101 may identify (or detect) at least one item of position, brightness (or illuminance), or color temperature of the light source, based on an image (or image frame) obtained through the second illuminance sensor. For example, the electronic device 101 may obtain the image through the second illuminance sensor based on a specified period or a specified number of times. Accordingly, the electronic device 101 may reduce current consumption (or power). In this case, the electronic device 101 may identify the at least one item by processing the image through a processing circuit (e.g., an image signal processor (ISP)) for the second illuminance sensor which is the front camera. However, embodiments of the disclosure are not limited thereto. For example, the electronic device 101 may skip or bypass obtaining the image through the second illuminance sensor, and may obtain only the at least one item of information.

In FIG. 6, while it is described that the operation 610, the operation 620, and the operation 630 are sequentially performed by the electronic device 101, but embodiments of the disclosure are not limited thereto. For example, the electronic device 101 may simultaneously (or in parallel) perform the operation 610, the operation 620, and the operation 630. Alternatively, for example, when the touch input is obtained after performing the operation 620, the electronic device 101 may identify whether the second illuminance value changed according to the touch input is equal to or less than the reference value through operation 610. In addition, for example, the electronic device 101 may perform the operation 610 and the operation 620, in a state of previously identifying whether the second illuminance sensor of the operation 630 is available.

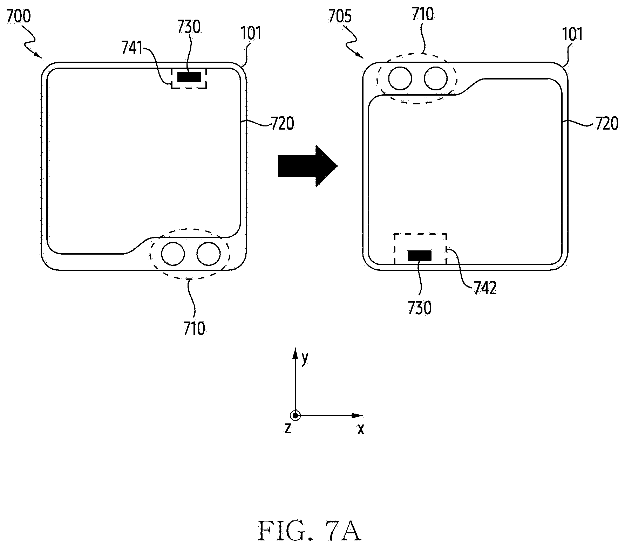

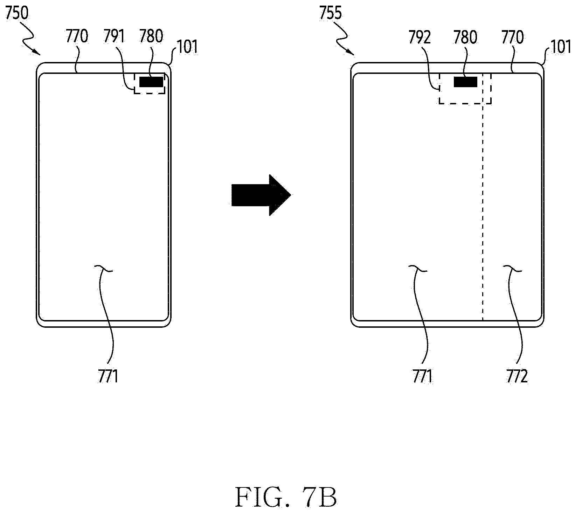

FIGS. 7A and 7B illustrate examples of a designated condition for changing a touch area for an illuminance sensor according to an embodiment.

FIG. 7A illustrates examples 700 and 705 of a method of changing the touch area, based on identifying the designated condition in which the rotation state of the electronic device 101 is changed. The electronic device 101 of FIG. 7A may illustrate an example of the electronic device 101 of FIG. 3.

Referring to the example 700, the electronic device 101 in a first rotation state is illustrated. For example, the electronic device 101 may identify the rotation state of the electronic device 101 through a gyro sensor. For example, the rotation state may be identified based on an orientation of the electronic device 101. For example, the first rotation state may indicate a rotation state corresponding to a specified orientation. The specified orientation may include a state in which a status bar displayed on the electronic device 101 is positioned at an upper end, and its rotated angle is substantially 0°. Alternatively, the specified orientation may include a state in which a position of a charging terminal included in the electronic device 101 is positioned at a lower end, and its rotated angle is substantially 0°. Alternatively, the specified orientation may include a state in which the at least one camera 710 of the electronic device 101 is positioned in the -y direction relative to the cover display 720 (e.g., the cover display 325 of FIG. 3) in the folded state of the electronic device 101, and its rotated angle is substantially 0°. The first rotation state may be referred to as a default state of the electronic device 101.

Referring to the example 705, the electronic device 101 may identify a designated condition for changing the touch area, based on identifying a second rotation state rotated by a specified angle or more from the first rotation state. For example, the electronic device 101 may identify the second rotation state rotated by approximately 180° about the z-axis from the first rotation state. The second rotation state may refer to a state in which the at least one camera 710 is positioned in the +y direction relative to the cover display 720, and its rotated angle is about 180°. For example, the specified angle may include an angle between 90° and 180°. However, embodiments of the disclosure are not limited thereto.

According to an embodiment, the electronic device 101 may identify the designated condition, based on identifying the second rotation state changed from the first rotation state. Accordingly, the electronic device 101 may change from the touch area 741 having the first size to the touch area 742 having the second size. For example, the second size may be extended from the first size. The electronic device 101 may more broadly identify a touch input to the touch area 742 within the second rotation state. Accordingly, the electronic device 101 may maintain the brightness of the screen displayed through the cover display 720, based on the touch input. In other words, even if the illuminance value obtained through the illuminance sensor 730 is changed as the touch input is obtained, the electronic device 101 may not adjust the brightness of the screen displayed through the cover display 720.

In FIG. 7A, examples of the touch areas 741 and 742 of which sizes are changed are described, but embodiments of the disclosure are not limited thereto. For example, the electronic device 101 may identify the touch areas 741 and 742 of which attributes are changeable. For example, the attribute may include a size, a shape, or a position of the touch areas 741 and 742. According to an embodiment, the electronic device 101 may identify a portion of the electronic device 101 on which the user's body part for the touch input is positioned, based on a grip sensor included in the electronic device 101. In the electronic device 101 rotated as in the example 705, when the user uses the electronic device 101 with the left hand, the user may grip the electronic device 101 with the left side (e.g., the -x direction) of the electronic device 101. The electronic device 101 may identify that the touch input on the left side is more likely to be obtained, based on the grip sensor. Accordingly, when changing from the touch area 741 to the touch area 742, the electronic device 101 may identify the touch area 742 having a wide left area (or extending longer to the left area) with respect to the illuminance sensor 730. As described above, the electronic device 101 may identify the portion through the grip sensor, and may identify the touch area 742 of which a size and a shape are changed from the touch area 741, based on the identified portion.

FIG. 7B illustrates examples 750 and 755 of a method of changing the touch area, based on identifying the designated condition in which the state of the display area of the electronic device 101 is changed. The electronic device 101 of FIG. 7B may illustrate an example of the electronic device 101 of FIG. 3. The electronic device 101 of FIG. 7B may operate in a slide-in state or a slide-out state, as in the electronic device 101 of FIGS. 15A and 15B.

Referring to the example 750, illustrated is the electronic device 101 in which the state of the display area is the first display state. For example, when the state of the display area is the first display state, it may include a slide-in state. For example, the electronic device 101 may include a housing including a first housing (or a first housing part) and a second housing (or a second housing part) movably coupled to each other. For example, the display 770 (or flexible display) included in the electronic device 101 may include a first display area 771, and a second display area 772 that may be at least partially bent into the first housing part based on movement of the first housing part or the second housing part. In the slide-in state, at least a portion of the second display area 772 may be rolled into the first housing part. Referring to the example 755, on the contrary, in the slide-out state (or the second state), at least a portion of the second display area 772 may be drawn out from the inside of the first housing part to the outside of the first housing part.

According to an embodiment, the electronic device 101 may identify the designated condition, based on identifying the second display state changed from the first display state. Accordingly, the electronic device 101 may change from the touch area 791 having the first size to the touch area 792 having the second size. For example, the second size may be extended from the first size. The electronic device 101 may more broadly identify a touch input to the touch area 792, within the second display state. Accordingly, the electronic device 101 may maintain the brightness of the screen displayed through the display 770, based on the touch input. In other words, even if the illuminance value obtained through the illuminance sensor 780 is changed as the touch input is obtained, the electronic device 101 may not adjust the brightness of the screen displayed through the display 770.

According to an embodiment, the position of the illuminance sensor 780 included in the electronic device 101 may be fixed regardless of the first display state and the second display state. For example, as the illuminance sensor 780 is disposed at a specific position inside the housing of the electronic device 101 or underneath the display 770, the position of the illuminance sensor 780 may be fixed even if the display state is changed. However, embodiments of the disclosure are not limited thereto. For example, the illuminance sensor 780 may be disposed being engaged with one area (e.g., a portion of the second display area 772) of the display 770. In this case, as the display state of the illuminance sensor 780 is changed, the position of the illuminance sensor 780 may be changed.

In the examples 750 and 755 of FIG. 7B, described is an example of changing to the touch area 792 having the second size extended from the touch area 791 having the first size, as the display state is changed from the first display state to the second display state, but embodiments of the disclosure are not limited thereto. For example, as the display state is changed from the first display state to the second display state, the electronic device 101 may change an attribute of the touch area. For example, the attribute may include a size, a shape, or a position of the touch areas 791 and 792.

For example, as the display state is changed from the first display state to the second display state, the touch area may be changed from the touch area 791 having the first size to a touch area having a third size reduced therefrom. As in the example of FIG. 7A, when the display state is changed from the first display state to the second display state while using by the user the electronic device 101 of the example 750 in a state of being rotated by 180°, the electronic device 101 may identify the touch area having the third size reduced from the touch area 791 having the first size. This is because it is less likely that the user's body part covers the illuminance sensor 780, as the display state is changed from the first display state to the second display state. However, embodiments of the disclosure are not limited thereto. For example, when the display state is changed from the first display state to the second display state, the user may set to reduce or expand the size of the touch area.

Alternatively, for example, when the illuminance sensor 780 is disposed coupled to the one area of the display 770, the position of the touch area may be changed as it changes from the first display state to the second display state. For example, as the display state is changed from the first display state to the second display state, the position of the illuminance sensor 780 may be changed, and the position of the touch area including at least a portion of the position of the illuminance sensor 780 may be changed.

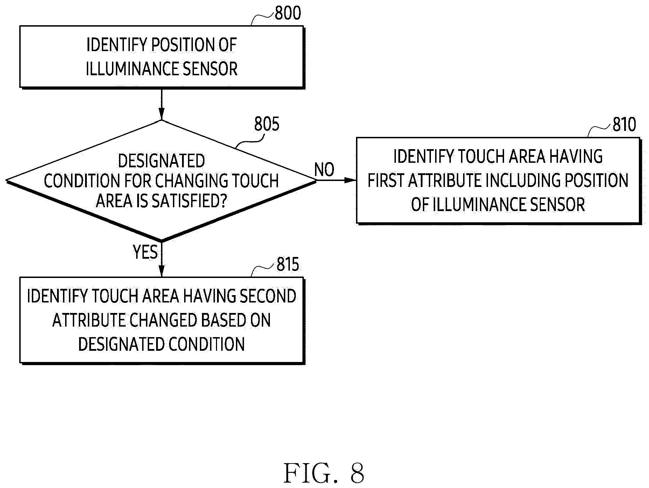

FIG. 8 illustrates an example of an operation flow of a method of identifying a touch area based on a designated condition for changing a touch area for an illuminance sensor according to an embodiment.

At least part of the method of FIG. 8 may be performed by the electronic device 101 of FIG. 3. For example, at least part of the method may be controlled by the processor 310 of the electronic device 101. In the following embodiments, each operation may be performed sequentially, but is not necessarily performed sequentially. For example, the order of each operation may be changed, and at least two operations may be performed in parallel.

In operation 800, the electronic device 101 may identify the position of the illuminance sensor. For example, the illuminance sensor may represent an example of the illuminance sensor 331 of FIG. 3. For example, the electronic device 101 may identify coordinates indicating the position of the illuminance sensor. For example, the coordinates may include relative coordinates in the display 320 of the electronic device 101. For example, the relative coordinates may include coordinates indicating a position of the illuminance sensor from a point (e.g., an upper left end) of the display 320. However, embodiments of the disclosure are not limited thereto. In the above-described example, it is described that the electronic device 101 identifies the position of the illuminance sensor, but the embodiment of the disclosure is not limited thereto. For example, the electronic device 101 may store the position of the first illuminance sensor in the memory 340 (or a processing circuit for controlling the display 320), and may identify information on the position stored in the memory 340. Alternatively, for example, the electronic device 101 may identify the position of the illuminance sensor as it identifies a change in state (e.g., a grip state, a display state, or a rotation state) of the electronic device 101. For example, the electronic device 101 may identify the position that is changeable according to the state, based on identifying the change in the state.

In operation 805, the electronic device 101 may identify whether a designated condition for changing a touch area is satisfied. The touch area may include at least a portion of the position of the illuminance sensor, and may indicate an area for identifying a touch input with respect to the illuminance sensor. For example, the touch area may be referred to as a touch input area, an identification area, a touch area, an illuminance sensor portion, or an illuminance sensor area. For example, the designated condition for changing the touch area may include a change in the grip state of the user with respect to the electronic device 101, a change in the rotation state of the electronic device 101, or a change in the state with respect to the display area of the flexible display when the display 320 is a flexible display. For example, the designated condition for changing the touch area may be referred to as a change event, an identification event, a change condition, or an identification condition.

For example, the change in the grip state may indicate a change in the state in which the user holds the electronic device 101 with his/her body part (e.g., a hand). For example, the electronic device 101 may identify a portion of the electronic device 101 in which the body part is positioned relative to the electronic device 101, based on the grip sensor included in the electronic device 101. The electronic device 101 may identify that the body part may cause a touch input to the touch area, based on the identified portion. For example, the electronic device 101 may identify that the touch input is highly likely to occur, based on a relative positional relationship between the portion where the body part is located and the illuminance sensor. For example, the electronic device 101 may identify the designated condition for changing the touch area, based on identifying that the identified portion is within a specified distance from the position of the illuminance sensor. In the above example, an example of using the grip sensor has been described, but embodiments of the disclosure are not limited thereto. For example, the electronic device 101 may identify that the body part is highly likely to cause the touch input to the touch area, based on the grip sensor or another sensor.

For example, the change in the rotation state may indicate a case in which the electronic device 101 is rotated by a specified angle or more from a specified orientation. For example, the electronic device 101 may identify a rotation state of the electronic device 101 through a gyro sensor. For example, the electronic device 101 may identify the specified orientation in the first rotational state. The specified orientation may include a state in which a status bar displayed on the electronic device 101 is positioned at an upper end, and its rotated angle is substantially 0°. Alternatively, the specified orientation may include a state in which the position of the charging terminal included in the electronic device 101 is positioned at a lower end, and its rotated angle substantially is 0°. Alternatively, the specified orientation may include a state in which at least one camera (e.g., the at least one camera 710 of FIG. 7A) of the electronic device 101 is positioned in a specific direction (e.g., the -y direction of FIG. 7A) relative to the cover display (e.g., the cover display 720 of FIG. 7A) in the folded state of the electronic device 101, and its rotated angle is substantially 0°. The first rotation state may be referred to as a default state of the electronic device 101. For example, the electronic device 101 may identify the designated condition for changing the touch area, based on identifying the second rotation state rotated by the specified angle or more from the first rotation state.

For example, the state of the display area may include a folded state/unfolded state or a slide-in state/slide-out state. For example, the unfolded state or the slide-in state may be included in the specified orientation. In other words, the folded state or the slide-in state may be referred to as the default state of the electronic device 101. For example, the electronic device 101 may identify the display size of the display area of the display 320 in the folded state or the slide-in state. For example, the electronic device 101 may identify the display size in the folded state or the slide-in state as a first display size. Referring to FIG. 7B, the first display size may include a first display area 771. In the unfolded state (or the slide-out state) changed from the folded state (or the slide-in state), the electronic device 101 may identify a second display size extended from the first display size as the display size. For example, the second display size may include the first display area 771 and at least a portion of the second display area 772. For example, the electronic device 101 may identify a designated condition for changing the touch area, based on identifying the second display size extended from the first display size.

In operation 805, when the designated condition is not satisfied, the electronic device 101 may perform operation 810. Alternatively, in the operation 805, when the designated condition is satisfied, the electronic device 101 may perform operation 815.

In operation 810, the electronic device 101 may identify the touch area having the first attribute including the position of the illuminance sensor. For example, the attribute of the touch area may include a size, a shape, or a position of the touch area. Hereinafter, an example of the size of those attributes will be described for convenience of description, but embodiments of the disclosure are not limited thereto. The touch area including at least partially the position of the illuminance sensor may indicate that a virtual line extending from the position of the illuminance sensor includes an area passing through the display. For example, the including at least partially the position of the illuminance sensor may be referred to as at least partially corresponding to the position of the illuminance sensor. For example, with respect to the electronic device 101 in the default state, the electronic device 101 may identify the size of the touch area as the first size including the position. The first size may be preset or may be set based at least in part on a user input of the electronic device 101.

In operation 815, the electronic device 101 may identify the touch area having the second attribute changed based on the designated condition. For example, the electronic device 101 may identify the size of the touch area as the second size changed from the first size, based on the designated condition. For example, the second size may be expanded to be larger than the first size. For example, the second size may be identified based on a changed position of the illuminance sensor, based on the rotation state. Further, for example, the second size may be identified based on a changed position of the illuminance sensor and a changed size of the display area around the position of the illuminance sensor, based on the state of the display area. For example, when the display size is changed from the first display size in the folded state to the second display size in the unfolded state, the second size may be identified based on a difference between the second display size and the first display size. For example, the first display size may indicate a size of the display area of the flexible display in the folded state. For example, the second display size may indicate a size of the display area of the flexible display in the unfolded state. In addition, for example, when it is changed from a third display size in the slide-in state to a fourth display size in the slide-out state, the second size may be identified based on a difference between the fourth display size and the third display size. For example, the third display size may indicate a size of the display area of the flexible display in the slide-in state. For example, the fourth display size may indicate a size of the display area of the flexible display in the slide-out state.

Although not illustrated in FIG. 8, according to an embodiment, the electronic device 101 may identify whether a touch input is obtained for the touch area having the first size or the second size. For example, when the touch input is obtained, the electronic device 101 may maintain displaying of a screen having brightness based on a first illuminance value before the touch input is obtained. In contrast, when the touch input is not obtained, the electronic device 101 may display a screen having brightness based on a second illuminance value identified based on the illuminance sensor. When the touch input is not obtained, the second illuminance value may be changed from the first illuminance value based on a different event. For example, the event different from the touch input may include a change in light source, a change in state (e.g., on/off) of the light source, or a change in orientation of the electronic device 101. However, embodiments of the disclosure are not limited thereto.

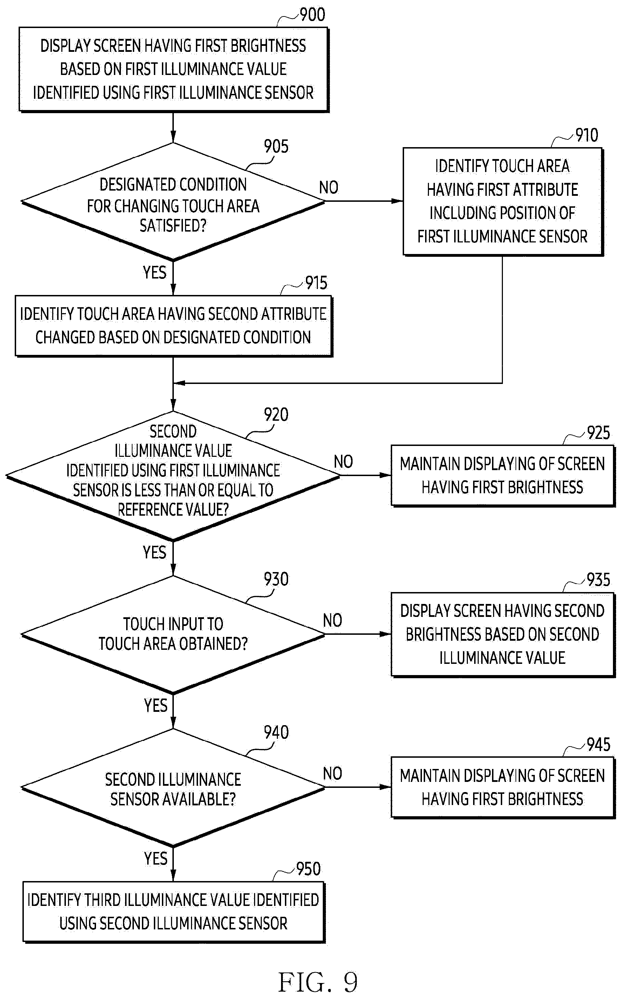

FIG. 9 illustrates an example of an operation flow of a method of adjusting brightness of a screen based on an illuminance value according to an embodiment.

At least part of the method of FIG. 9 may be performed by the electronic device 101 of FIG. 3. For example, at least part of the method may be controlled by the processor 310 of the electronic device 101. In the following embodiments, each operation may be performed sequentially, but it is not required to be necessarily performed sequentially. For example, the order of each operation may be changed, and at least two operations may be performed in parallel.

Referring to operation 900, the electronic device 101 may display a screen having a first brightness based on the first illuminance value identified using the first illuminance sensor. For example, the electronic device 101 may display the screen having the first brightness through the display 320. Alternatively, for example, the electronic device 101 may display the screen having the first brightness through the cover display 325. In other words, the following description of the display 320 may be also applied substantially the same to the cover display 325. For example, the first illuminance sensor may include the illuminance sensor 331.

According to an embodiment, the electronic device 101 may identify an event for changing the display 320 (or the cover display 325) to an on state. For example, the electronic device 101 may identify the event for changing the display 320 from an off state to an on state. For example, the event may include an input to a physical button of the electronic device 101, a touch input to the display 320, or a user input (or gesture) to the electronic device 101. The off state of the display 320 may include a screen (e.g., always-on display (AOD) screen) for a low power condition. For example, in response to identifying the event, the electronic device 101 may identify the first illuminance value using the first illuminance sensor. For example, the electronic device 101 may identify the first brightness according to the identified first illuminance value. For example, the electronic device 101 may display a screen having the first brightness through the display 320.

According to an embodiment, the electronic device 101 may identify a position of the first illuminance sensor. For example, the electronic device 101 may identify coordinates indicating the position of the first illuminance sensor. For example, the coordinates may include relative coordinates in the display 320 of the electronic device 101. For example, the relative coordinates may include coordinates indicating the position of the first illuminance sensor from a point (e.g., an upper left end) of the display 320. However, embodiments of the disclosure are not limited thereto. In the above-described example, it is described that the electronic device 101 identifies the position of the first illuminance sensor, but embodiments of the disclosure are not limited thereto. For example, the electronic device 101 may store the position of the first illuminance sensor in the memory 340 (or a processing circuit for controlling the display 320), and may identify information on the position stored in the memory 340. Alternatively, for example, the electronic device 101 may identify the position of the first illuminance sensor, as the electronic device 101 identifies a change in the state (e.g., a grip state, a display state, or a rotation state) of the electronic device 101. For example, the electronic device 101 may identify the position that is changeable according to the state, based on identifying the change in the state.

In operation 905, the electronic device 101 may identify whether a designated condition for changing the touch area is satisfied. The touch area may include at least part of a position of the first illuminance sensor, and may indicate an area for identifying a touch input with respect to the first illuminance sensor. The touch area including at least partially the position of the first illuminance sensor may indicate that a virtual line extending from the position of the first illuminance sensor includes an area passing through the display 320. For example, the including at least partially the position of the first illuminance sensor may be referred to as at least partially corresponding to the position of the first illuminance sensor. For example, the touch area may be referred to as a touch input area, an identification area, a touch area, an illuminance sensor portion, or an illuminance sensor area. For example, the designated condition for changing the touch area may include a change in the grip state of the electronic device 101, a change in the rotation state of the electronic device 101, or a change in the state of the display area of the flexible display when the display 320 is a flexible display. For example, the designated condition for changing the touch area may be referred to as a change event, an identification event, a change condition, or an identification condition.

For example, the change in the grip state may indicate a change in the state in which the user holds the electronic device 101 through a body part (e.g., a hand). For example, the electronic device 101 may identify a portion of the electronic device 101 on which the body part is positioned relative to the electronic device 101, based on the grip sensor included in the electronic device 101. The electronic device 101 may identify that the body part is capable of causing a touch input to the touch area, based on the identified portion. For example, the electronic device 101 may identify that the touch input is highly likely to occur, based on a relative positional relationship between the portion where the body part is located and the illuminance sensor. For example, the electronic device 101 may identify the designated condition for changing the touch area, based on identifying that the identified portion is within a specified distance from the position of the illuminance sensor. In the above example, an example of using the grip sensor has been described, but embodiments of the disclosure are not limited thereto. For example, the electronic device 101 may identify that the body part is highly likely to cause the touch input to the touch area, based on the grip sensor or another sensor.

For example, the change in the rotation state may indicate a circumstance in which the electronic device 101 is rotated by a specified angle or more from its specified orientation. For example, the electronic device 101 may identify the rotation state of the electronic device 101 through a gyro sensor. For example, the electronic device 101 may identify the specified orientation which is the first rotational state. The specified orientation may include a state in which a status bar displayed on the electronic device 101 is positioned at an upper end, and its rotated angle is substantially 0°. Alternatively, the specified orientation may include a state in which the position of the charging terminal included in the electronic device 101 is positioned at the lower end, and its rotated angle is substantially 0°. Alternatively, the specified orientation may include a state in which at least one camera (e.g., the at least one camera 710 of FIG. 7A) of the electronic device 101 is positioned in a specific direction (e.g., the -y direction of FIG. 7A) relative to the cover display (e.g., the cover display 720 of FIG. 7A) in the folded state of the electronic device 101, and its rotated angle is substantially 0°. The first rotation state may be referred to as a default state of the electronic device 101. For example, the electronic device 101 may identify the designated condition for changing the touch area, based on identifying the second rotation state rotated by the specified angle or more from the first rotation state.

For example, the state of the display area may include a folded (or folding) state/unfolded (or unfolding) state or a slide-in state/slide-out state. For example, the unfolded state or the slide-in state may be included in the specified orientation. In other words, the folded state or the slide-in state may be referred to as a default state of the electronic device 101. For example, the electronic device 101 may identify a display size of the display area of the display 320 in the folded state or the slide-in state. For example, the electronic device 101 may identify the display size in the folded state or the slide-in state as a first display size. In the unfolded state (or the slide-out state) changed from the folded state (or the slide-in state), the electronic device 101 may identify its display size as a second display size extended from the first display size. For example, the electronic device 101 may identify the designated condition for changing the touch area, based on identifying the second display size extended from the first display size.

In operation 905, when the designated condition is not satisfied, the electronic device 101 may perform operation 910. Alternatively, in operation 905, when the designated condition is satisfied, the electronic device 101 may perform operation 915.

In operation 910, the electronic device 101 may identify the touch area having a first attribute including the position of the first illuminance sensor. For example, the attribute of the touch area may include a size, a shape, or a position of the touch area. Hereinafter, an example of the size of the attributes will be described for convenience of description, but embodiments of the disclosure are not limited thereto. For example, with respect to the electronic device 101 in the default state, the electronic device 101 may identify the size of the touch area as the first size including the position. The first size may be preset or may be set based at least in part on a user input of the electronic device 101.

In operation 915, the electronic device 101 may identify the touch area having a second attribute changed based on the designated condition. For example, based on identifying the designated condition, the electronic device 101 may identify the size of the touch area as the second size changed from the first size. For example, the second size may be expanded to be larger than the first size. For example, the second size may be identified based on a changed position of the first illuminance sensor, based on the rotation state. Further, for example, the second size may be identified based on a changed position of the first illuminance sensor and a changed size of the display area around the position of the first illuminance sensor, based on a state of the display area. For example, when the display size is changed from the first display size in the folded state to the second display size in the unfolded state, the second size may be identified based on a difference between the second display size and the first display size. For example, the first display size may indicate a size of the display area of the flexible display in the folded state. For example, the second display size may indicate a size of the display area of the flexible display in the unfolded state. In addition, for example, when it is changed from a third display size in the slide-in state to a fourth display size in the slide-out state, the second size may be identified based on a difference between the fourth display size and the third display size. For example, the third display size may indicate a size of the display area of the flexible display in the slide-in state. For example, the fourth display size may indicate a size of the display area of the flexible display in the slide-out state.

In operation 920, the electronic device 101 may identify whether the second illuminance value identified using the first illuminance sensor is less than or equal to a reference value. For example, the electronic device 101 may identify the second illuminance value using the first illuminance sensor in the state of displaying the screen having the first brightness. For example, the second illuminance value may indicate an illuminance value that is changed from the first illuminance value by an external factor and lower than the first illuminance value, in an on state of the display 320 of the electronic device 101. In FIG. 9, an example in which the second illuminance value becomes lower than the first illuminance value (i.e., darker) is illustrated, but embodiments of the disclosure are not limited thereto. For example, the second illuminance value may have an illuminance value greater than the first illuminance value.

According to an embodiment, the electronic device 101 may identify whether the second illuminance value is less than or equal to the reference value. For example, the reference value may correspond to the first reference value set for the first illuminance value. However, as described above, when the second illuminance value is greater than the first illuminance value, the electronic device 101 may identify whether the second illuminance value exceeds the reference value. In such a circumstance, the reference value may correspond to the second reference value set for the first illuminance value.

In operation 920, when the second illuminance value exceeds the reference value, the electronic device 101 may perform operation 925. In the example of FIG. 9, as described above, the case where the second illuminance value exceeds the reference value may represent the case where the second illuminance value is less than or equal to the first illuminance value and exceeds the reference value. In operation 920, when the second illuminance value is less than or equal to the reference value, the electronic device 101 may perform operation 930.

In operation 925, the electronic device 101 may maintain displaying of the screen having the first brightness. For example, the electronic device 101 may maintain displaying of the screen having the first brightness, even if it identifies the second illuminance value changed from the first illuminance value, when the second illuminance value exceeds the reference value. In other words, the electronic device 101 may display the screen having the first brightness in response to identifying the second illuminance value. The second illuminance value exceeding the reference value may indicate that the second illuminance value is an illuminance value within a reference range for maintaining brightness set for the first illuminance value. The reference range may be defined by the first reference value and the second reference value for the first illuminance value.

In operation 930, the electronic device 101 may identify whether a touch input to the touch area is obtained. For example, the touch area may have the first size or the second size identified based on the designated condition. For example, the touch input may be caused by an external object (e.g., a user's body part). For example, the touch input may include an input including a contact point with respect to the touch area or a hovering input. For example, the touch input may be referred to as a touch event, an external input, a user input, or an input by an external object.

In operation 930, when the touch input is not obtained, the electronic device 101 may perform operation 935. In operation 930, when the touch input is obtained, the electronic device 101 may perform operation 940.

In operation 935, the electronic device 101 may display a screen having a second brightness based on the second illuminance value. For example, in response to the touch input to the touch area not being obtained, the electronic device 101 may display the screen having the second brightness based on the second illuminance value. The touch input to the touch area being not identified may indicate that the amount of external light (or brightness) is actually lowered without the touch input. The amount of external light may be lowered based on an event different from the touch input. For example, the event different from the touch input may include a change in light source, a change in state (e.g., on/off) of the light source, or a change in orientation of the electronic device 101. However, embodiments of the disclosure are not limited thereto.

For example, the second illuminance value may indicate an illuminance value less than or equal to the reference value. In other words, the second illuminance value may be an illuminance value less than the first reference value set with respect to the first illuminance value. The electronic device 101 may identify the second brightness lower than the first brightness, based on the second illuminance value. The electronic device 101 may display the screen having the second brightness. However, embodiments of the disclosure are not limited thereto. As described above, when the second illuminance value exceeds the first illuminance value and the second illuminance value exceeds a second reference value for the first illuminance value, the second brightness may be greater than the first brightness.

In operation 940, the electronic device 101 may identify whether the second illuminance sensor is available. For example, in response to identifying that the touch input is obtained, the electronic device 101 may identify whether the second illuminance sensor is available.

According to an embodiment, the second illuminance sensor may indicate a sensor facing the same direction as the first illuminance sensor. Alternatively, the second illuminance sensor may be disposed on one surface on which the first illuminance sensor is disposed. In other words, the first illuminance sensor and the second illuminance sensor may be disposed on the one surface and may face the same direction. For example, the one surface may represent the housing of the electronic device 101 or one surface of the display 320 (or the cover display 325).

According to an embodiment, the electronic device 101 may identify whether the second illuminance sensor is available, based on a field of view (FOV) of the second illuminance sensor. For example, when a light source is located in the FoV, the electronic device 101 may identify that the second illuminance sensor is available. Alternatively, when the light source is located out of the FoV, the electronic device 101 may identify that the second illuminance sensor is not available. For example, when the light source is positioned within the FoV, it may be understood that the reliability of the second illuminance sensor is relatively high. In other words, the high reliability may represent that an illuminance value measured through the second illuminance sensor is a relatively accurate illuminance value.

Alternatively, according to an embodiment, when the illuminance value is obtained through the second illuminance sensor, the electronic device 101 may identify that the second illuminance sensor is available. In contrast, when the illuminance value is not obtained through the second illuminance sensor, the electronic device 101 may identify that the second illuminance sensor is not available.

In operation 940, when it is identified that the second illuminance sensor is not available, the electronic device 101 may perform operation 945. In operation 940, when it is identified that the second illuminance sensor is available, the electronic device 101 may perform operation 950.

In operation 945, the electronic device 101 may maintain displaying of the screen having the first brightness. For example, the electronic device 101 may display the screen having the first brightness, based on identifying that the second illuminance sensor is not available. For example, the electronic device 101 may identify the second illuminance value as a value changed by an external object, while in the state of the screen having the first brightness being displayed. In other words, the electronic device 101 may identify that the illuminance value is changed by the external object, rather than the amount of external light (or brightness) having been actually lowered. Accordingly, the electronic device 101 may not change the brightness of the screen based on the second illuminance value. For example, the electronic device 101 may maintain displaying of the screen having the first brightness.

In operation 950, the electronic device 101 may identify a third illuminance value using the second illuminance sensor. For example, the electronic device 101 may identify the third illuminance value using the second illuminance sensor, based on identifying that the second illuminance sensor is available.

According to an embodiment, when the third illuminance value is less than or equal to the reference value, the electronic device 101 may identify a third brightness lower than the first brightness. For example, the electronic device 101 may identify the third brightness, based on the third illuminance value that is less than or equal to the first reference value set for the first illuminance value. Accordingly, the electronic device 101 may display the screen having the third brightness. In an example, the third brightness may correspond to the second brightness. In other words, the second brightness according to the second illuminance value that is less than or equal to the reference value may be the same as the third brightness according to the third illuminance value that is less than or equal to the reference value. However, embodiments of the disclosure are not limited thereto.

In the above example, an example is described in which the third illuminance value lower than the first illuminance value is identified, but embodiments of the disclosure are not limited thereto. According to an embodiment, when the third illuminance value exceeds the second reference value for the first illuminance value, the electronic device 101 may identify a fourth brightness brighter than the first brightness. For example, the electronic device 101 may identify the fourth brightness based on identifying the third illuminance value exceeding the second reference value. The electronic device 101 may display a screen having the fourth brightness. Alternatively, according to an embodiment, when the third illuminance value is a value between the first reference value and the second reference value, the electronic device 101 may identify the first brightness. For example, the electronic device 101 may maintain displaying of the screen having the first brightness, even if it identifies the third illuminance value while in the state of the screen having the first brightness being displayed, when the third illuminance value is a value between the first reference value and the second reference value.

In FIG. 9, it is described that the operation 920, the operation 930, and the operation 940 are sequentially performed by the electronic device 101, but embodiments of the disclosure are not limited thereto. For example, the electronic device 101 may perform the operation 920, the operation 930, and the operation 940 simultaneously (or in parallel). Alternatively, for example, when the touch input is obtained after performing the operation 930, the electronic device 101 may identify whether the second illuminance value changed according to the touch input through the operation 920 is equal to or less than the reference value. In addition, for example, the electronic device 101 may perform the operation 920 and the operation 930, in the state of having identified in advance whether the second illuminance sensor of the operation 940 is available.

In the disclosure are described an electronic device and a method for performing a brightness control according to whether a touch input is generated for a touch area including the position of the first illuminance sensor. An electronic device and a method according to embodiments of the disclosure may adjust or maintain brightness of a display area (or a screen) of a display according to whether a touch input to the touch area is identified. Accordingly, an electronic device and a method according to embodiments of the disclosure may ensure better visibility by preventing any inadvertent brightness control according to an unintended touch input. In addition, an electronic device and a method according to embodiments of the disclosure may identify the touch area, based on a rotation state of the electronic device 101 or a state (e.g., a folded state/unfolded state or a slide-in state/slide-out state) of a display area of the electronic device 101 including a flexible display. Further, an electronic device and a method according to embodiments of the disclosure may control brightness of a screen, based on the illuminance value identified using the second illuminance sensor, in case where an illuminance value can be identified using the second illuminance sensor different from the first illuminance sensor.

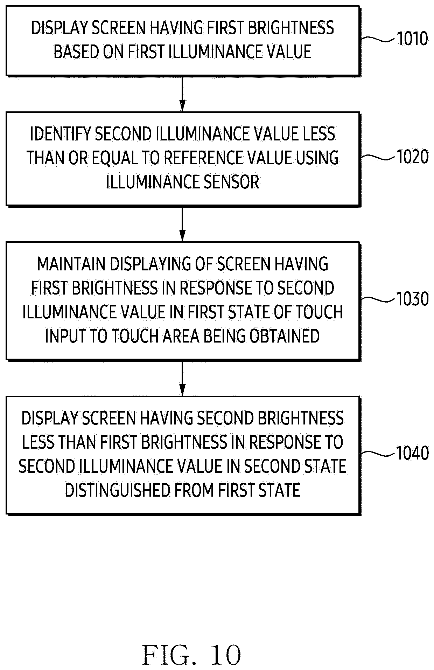

FIG. 10 illustrates an example of an operation flow of a method of adjusting brightness of a screen based on an illuminance value in an electronic device including a cover display according to an embodiment.

At least part of the method of FIG. 10 may be performed by the electronic device 101 of FIG. 3. For example, at least part of the method may be controlled by the processor 310 of the electronic device 101. In the following embodiments, each operation may be performed sequentially, but is not necessarily performed sequentially. For example, the order of each operation may be changed, and at least two operations may be performed in parallel.

For example, the electronic device 101 may include a housing including a first housing part (e.g., a first housing 1310 of FIGS. 13A and 13B or a first housing 1410 of FIGS. 14A to 14C) and a second housing part (e.g., a second housing 1320 of FIGS. 13A and 13B or a second housing 1420 of FIGS. 14A to 14C). For example, the electronic device 101 may include a hinge structure rotatably connecting the first housing part and the second housing part. For example, the electronic device 101 may include a flexible display (e.g., a first display 1341 of FIGS. 13A and 13B or a display 1430 of FIGS. 14A to 14C) that is disposed on the first housing part and the second housing part and deformable by rotation of the second housing part relative to the first housing part. For example, the electronic device 101 may include a cover display. For example, the cover display may include the cover display 325 of FIG. 3 (or a second display 1342 of FIGS. 13A and 13B or a sub-display 1435 of FIGS. 14A to 14C). For example, the cover display may be disposed on one surface of the first housing part. For example, the camera included in the electronic device 101 may be disposed on the one surface of the first housing part. For example, the illuminance sensor included in the electronic device 101 may be disposed within the first housing part or may be disposed underneath the cover display. A position where the illuminance sensor is disposed may be referred to as a first position. The illuminance sensor may receive light through the one surface.

In operation 1010, the electronic device 101 may display a screen having a first brightness based on a first illuminance value. For example, the electronic device 101 may display the screen having the first brightness based on the first illuminance value identified using the illuminance sensor (e.g., the illuminance sensor 331 of FIG. 3), through the cover display.

According to an embodiment, the electronic device 101 may identify the position of the illuminance sensor. For example, the electronic device 101 may identify coordinates indicating the position of the illuminance sensor. For example, the coordinates may include relative coordinates in the display 320 of the electronic device 101. Alternatively, for example, the electronic device 101 may identify the position of the illuminance sensor according to identifying a change in state (e.g., a grip state, a display state, or a rotation state) of the electronic device 101. For example, the electronic device 101 may identify the position that is changeable according to the state, based on identifying the change in the state.

According to an embodiment, the electronic device 101 may identify whether a designated condition for changing the touch area is satisfied. The touch area may include at least part of a position of the illuminance sensor, and may indicate an area for identifying a touch input with respect to the illuminance sensor. For example, the touch area may be an area where its attribute is changeable. For example, the attribute may include a size, a position, or a shape of the touch area. For example, the designated condition for changing the touch area may include a change in grip state of the electronic device 101, a change in rotation state of the electronic device 101, or a change in state of the display area of the flexible display included in the electronic device 101.

According to an embodiment, when the designated condition is not satisfied, the electronic device 101 may identify the touch area having a first size including at least part of the position of the illuminance sensor. The touch area including at least partially the position of the illuminance sensor may indicate that a virtual line extending from the position of the illuminance sensor includes an area passing through the flexible display. For example, the including at least partially the position of the illuminance sensor may be referred to as at least partially corresponding to the position of the illuminance sensor. In contrast, when the designated condition is satisfied, the electronic device 101 may identify the touch area having a second size that is changed based on the designated condition. For example, the second size may be expanded to be larger than the first size.

In operation 1020, the electronic device 101 may identify a second illuminance value less than or equal to the reference value using the illuminance sensor. For example, the electronic device 101 may identify the second illuminance value using the illuminance sensor while displaying the screen having the first brightness. For example, the second illuminance value may indicate an illuminance value that is lower than the first illuminance value and changed from the first illuminance value by an external factor, in an on state of the cover display of the electronic device 101. In the above example, a case where the second illuminance value is lower than the first illuminance value (i.e., a case where it becomes darker) is described as an example, but embodiments of the disclosure are not limited thereto. For example, the second illuminance value may have an illuminance value greater than the first illuminance value.

According to an embodiment, the electronic device 101 may identify whether the second illuminance value is less than or equal to the reference value. For example, the reference value may correspond to the first reference value set for the first illuminance value. When the second illuminance value exceeds the reference value, the electronic device 101 may maintain displaying of the screen having the first brightness. In contrast, when the second illuminance value is less than or equal to the reference value, the electronic device 101 may identify whether a touch input to the touch area is obtained. For example, the touch area may have the first size or the second size identified based on the designated condition. For example, the touch input may be caused by an external object (e.g., a user's body part). For example, the touch input may include an input including a contact point for the touch area or a hovering input.

In operation 1030, the electronic device 101 may maintain displaying of the screen having the first brightness, in response to the second illuminance value in the first state in which the touch input to the touch area is obtained. The first state may indicate a state in which the touch input to the touch area has been obtained. For example, when the touch input to the touch area is obtained, the electronic device 101 may identify the first state. For example, in the first state, the electronic device 101 may display a screen having the first brightness. For example, the electronic device 101 may identify the second illuminance value as a value changed by an external object, while the screen having the first brightness is displayed. In other words, the electronic device 101 may identify that the illuminance value has been changed by the external object, rather than the actual amount of external light (or brightness) having been lowered. Accordingly, the electronic device 101 may not change the brightness of the screen based on the second illuminance value. For example, the electronic device 101 may maintain displaying of the screen having the first brightness.

In operation 1040, the electronic device 101 may display the screen having a second brightness lower than the first brightness, in response to the second illuminance value in a second state distinguished from the first state. For example, the electronic device 101 may display the screen having the second brightness, in response to the second illuminance value in the second state in which the brightness of light received through the illuminance sensor is reduced. For example, the light may represent light outside the electronic device 101. The second state may indicate a state in which the touch input is not obtained. For example, when the electronic device 101 identifies the second illuminance value in the state of which the touch input being not obtained, the electronic device 101 may identify the second state. For example, the electronic device 101 may display the screen having the second brightness through the cover display, in response to the second illuminance value identified based on an event different from the touch input. The event may be distinguished from an input including the touch input to the touch area. The touch input to the touch area being not identified may indicate that the amount of external light (or brightness) has been actually lowered without the touch input. The amount of external light may be lowered based on the event different from the touch input. For example, the event different from the touch input may include a change in light source, a change in state (e.g., on/off) of the light source, or a change in orientation of the electronic device 101. However, embodiments of the disclosure are not limited thereto.

Although not illustrated in FIG. 10, when the touch input to the touch area is obtained, the electronic device 101 may identify whether another illuminance sensor (e.g., the at least one sensor of FIG. 3) is available. For example, in response to identifying that the touch input is obtained, the electronic device 101 may identify whether the other illuminance sensor is available.

For example, the other illuminance sensor may be included in the housing of the electronic device 101. For example, the other illuminance sensor may be disposed at a second position in the housing. For example, the second position may at least partially overlap the display 320 or may include an area of the housing different from the display 320. The second position may be different from the first position at which the illuminance sensor is disposed. For example, the other illuminance sensor may receive light outside the electronic device 101 through the one surface of the housing. In other words, the surfaces through which the other illuminance sensor and the illuminance sensor receive the light may be the same as each other. However, embodiments of the disclosure are not limited thereto. For example, the one surface on which the other illuminance sensor receives light may be different (e.g., of an opposite surface) from the one surface on which the illuminance sensor receives light. However, embodiments of the disclosure are not limited thereto.

According to an embodiment, the electronic device 101 may identify whether the other illuminance sensor is available, based on a field of view (FOV) of the other illuminance sensor. For example, when a light source is located in the FoV, the electronic device 101 may identify that the other illuminance sensor is available. In contrast, when the light source is located out of the FoV, the electronic device 101 may identify that no other illuminance sensor is available. For example, when the light source is positioned in the FoV, it may be understood that the reliability of the other illuminance sensor is relatively high. In other words, the high reliability may represent that the illuminance value measured through the other illuminance sensor is a relatively accurate illuminance value.

According to an embodiment, when it is identified that the other illuminance sensor is not available, the electronic device 101 may maintain displaying of the screen having the first brightness. For example, the electronic device 101 may display the screen having the first brightness, based on identifying that the other illuminance sensor is not available. For example, the electronic device 101 may identify the second illuminance value as a value changed by an external object, in a state in which the screen having the first brightness is displayed. In other words, the electronic device 101 may identify that the illuminance value has been changed by the external object, rather than the amount of external light (or brightness) having been actually lowered. Accordingly, the electronic device 101 may not change the brightness of the screen based on the second illuminance value. For example, the electronic device 101 may maintain displaying of the screen having the first brightness.

According to an embodiment, when it is identified that the other illuminance sensor is available, the electronic device 101 may identify the third illuminance value using the other illuminance sensor. For example, the electronic device 101 may identify the third illuminance value using the other illuminance sensor, based on identifying that the other illuminance sensor is available.

According to an embodiment, when the third illuminance value is less than or equal to the reference value, the electronic device 101 may identify a third brightness lower than the first brightness. For example, the electronic device 101 may identify the third brightness, based on the third illuminance value that is less than or equal to the first reference value set for the first illuminance value. Accordingly, the electronic device 101 may display the screen having the third brightness. In an example, the third brightness may correspond to the second brightness. In other words, the second brightness according to the second illuminance value that is less than or equal to the reference value may be the same as the third brightness according to the third illuminance value that is less than or equal to the reference value. However, embodiments of the disclosure are not limited thereto.

Further, in the above example, described is an example in which the third illuminance value lower than the first illuminance value is identified, but embodiments of the disclosure are not limited thereto. According to an embodiment, when the third illuminance value exceeds the second reference value for the first illuminance value, the electronic device 101 may identify a fourth brightness brighter than the first brightness. For example, the electronic device 101 may identify the fourth brightness based on identifying the third illuminance value exceeding the second reference value. The electronic device 101 may display a screen having the fourth brightness. Alternatively, according to an embodiment, when the third illuminance value is a value between the first reference value and the second reference value, the electronic device 101 may identify the first brightness. For example, even if the third illuminance value is identified in the state in which the screen having the first brightness is displayed, when the third illuminance value is a value between the first reference value and the second reference value, the electronic device 101 may maintain displaying of the screen having the first brightness.

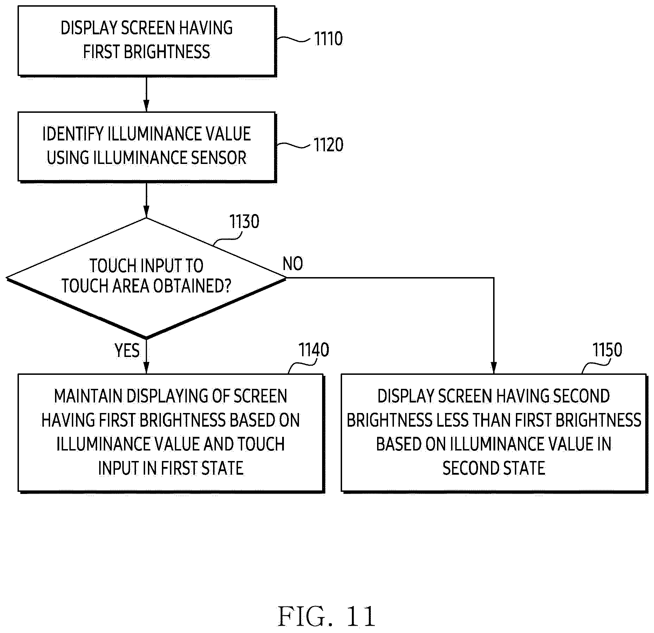

FIG. 11 illustrates an example of an operation flow of a method of adjusting brightness of a screen based on an illuminance value in an electronic device according to an embodiment.

At least part of the method of FIG. 11 may be performed by the electronic device 101 of FIG. 3. For example, at least part of the method may be controlled by the processor 310 of the electronic device 101. In the following embodiments, each operation may be performed sequentially, but it is not necessarily performed sequentially. For example, the order of each operation may be changed, and at least two operations may be performed in parallel.

For example, the electronic device 101 may include a bar-type (or flat-type) display of FIG. 12. However, embodiments of the disclosure are not limited thereto. For example, the electronic device 101 may be an electronic device including the flexible display having the slide-in and slide-out states of FIGS. 15A and 15B. Alternatively, for example, the electronic device 101 may be an electronic device including the flexible display having the unfolded state and the folded state of FIGS. 13A and 13B or FIGS. 14A to 14C. Alternatively, for example, the electronic device 101 may be a multi-foldable electronic device (e.g., the electronic device 391-3 of FIG. 3) having one unfolded state and multiple folded states.

In operation 1110, the electronic device 101 may display a screen having a first brightness. For example, the electronic device 101 may display, through a display, the screen having the first brightness based on a specified illuminance value identified using the illuminance sensor (e.g., the illuminance sensor 331 of FIG. 3). For example, the display may include the display 320 or the cover display 325 of FIG. 3. Hereinafter, description is made assuming that the display is the display 320, but embodiments of the disclosure are not limited thereto.

According to an embodiment, the electronic device 101 may identify a position of the illuminance sensor. For example, the electronic device 101 may identify coordinates indicating the position of the illuminance sensor. For example, the coordinates may include relative coordinates in the display 320 of the electronic device 101. Alternatively, for example, the electronic device 101 may identify the position of the illuminance sensor, according to identifying a change in state (e.g., a grip state, a display state, or a rotation state) of the electronic device 101. For example, the electronic device 101 may identify the position that is changeable according to the state, based on identifying the change in the state.

In operation 1120, the electronic device 101 may identify an illuminance value through the illuminance sensor. For example, the electronic device 101 may identify the illuminance value through the illuminance sensor, while the screen having the first brightness is displayed. For example, the illuminance value may indicate brightness of light received through the illuminance sensor.

In operation 1130, the electronic device 101 may identify whether a touch input for the touch area is obtained. For example, the electronic device 101 may identify, through the touch sensor (e.g., the touch sensor 332 of FIG. 3) of the display, whether the touch input is obtained for the touch area, which includes at least partially the position of the illuminance sensor and is changeable in size based on a designated condition.

According to an embodiment, the touch area may be changeable in its size based on the designated condition and may indicate an area for identifying a touch input. For example, the touch area may include at least part of a position of the illuminance sensor, and may indicate an area for identifying a touch input with respect to the illuminance sensor. In the above-described example, it is illustrated that the size of the touch area is changed, but embodiments of the disclosure are not limited thereto. For example, the attribute of the touch area may be changed based on the designated condition. For example, the attribute may include a size, a position, or a shape of the touch area. For example, the designated condition for changing the touch area may include a change in the grip state of the electronic device 101, a change in the rotation state of the electronic device 101, or a change in the state of the display area of the flexible display included in the electronic device 101. For example, the touch input may include an input including a contact point with respect to the touch area or a hovering input.

According to an embodiment, when the designated condition is not satisfied, the electronic device 101 may identify the touch area having a first attribute (e.g., a first size) including the position of the illuminance sensor. In contrast, when the designated condition is satisfied, the electronic device 101 may identify the touch area having a second attribute (e.g., a second size) that is changed based on the designated condition. For example, the second size may be extended larger than the first size.

In operation 1130, when obtaining the touch input to the touch area, the electronic device 101 may identify a first state. In other words, the first state may indicate a state of having obtained the touch input to the touch area. In operation 1130, when the electronic device 101 fails to obtain the touch input to the touch area, the electronic device 101 may identify a second state distinct from the first state. In other words, the second state may indicate a state in which the touch input to the touch area is not obtained.

In operation 1130, when the first state is identified, the electronic device 101 may perform operation 1140. In contrast, when the second state is identified in operation 1130, the electronic device 101 may perform operation 1150.

In operation 1140, the electronic device 101 may maintain displaying of the screen having the first brightness based on the illuminance value and the touch input in the first state. For example, in the first state in which the touch input has been obtained, the electronic device 101 may maintain displaying of the screen having the first brightness, based on the illuminance value and the touch input.

According to an embodiment, the electronic device 101 may make a comparison of the illuminance value which is less than or equal to a reference value. The reference value may indicate a threshold value for the illuminance value for displaying the second brightness. For example, the electronic device 101 may identify the illuminance value using the illuminance sensor, while displaying the screen having the first brightness. For example, the illuminance value may indicate the amount of light identified using the illuminance sensor, in an on state of the cover display of the electronic device 101. For example, the illuminance value may be lower than the specified illuminance value for the first brightness. However, embodiments of the disclosure are not limited thereto. For example, the illuminance value may be greater than the specified illuminance value. Hereinafter, for convenience of description, description will be made of an example in case where the illuminance value is lower than the specified illuminance value.

For example, when the illuminance value is less than or equal to the reference value and the touch input has been obtained, the electronic device 101 may maintain displaying of the screen having the first brightness. Alternatively, when the illuminance value exceeds the reference value, is less than or equal to the specified illuminance value, and the touch input has been obtained, the electronic device 101 may maintain displaying of the screen having the first brightness.

Referring to the foregoing, when the electronic device 101 identifies the first state while the screen having the first brightness is displayed, the electronic device 101 may identify the illuminance value as a value changed by an external object. In other words, the electronic device 101 may identify that the illuminance value has been changed by the external object, rather than the amount of external light (or brightness) having been actually lowered. Accordingly, even if the illuminance value has a value less than or equal to the reference value, the electronic device 101 may not change the brightness of the screen. For example, the electronic device 101 may maintain displaying of the screen having the first brightness.

In operation 1150, the electronic device 101 may display the screen having a second brightness lower than the first brightness, based on the illuminance value in the second state. For example, in the second state distinct from the first state, the electronic device 101 may display the screen having the second brightness based on the illuminance value, through the display.

For example, in the second state in which the brightness of the light received through the illuminance sensor is reduced, the electronic device 101 may display the screen having the second brightness in response to the illuminance value. For example, the light may indicate light outside the electronic device 101. The second state may indicate a state in which the touch input has not been obtained. For example, when the illuminance value is identified in the state in which the touch input has not been obtained, the electronic device 101 may identify the second state. For example, the electronic device 101 may display the screen having the second brightness through the cover display, in response to the illuminance value identified based on an event different from the touch input. The event may be distinguished from an input including the touch input to the touch area. The touch input to the touch area being not identified may indicate that the amount of external light (or brightness) has been actually lowered without the touch input. The amount of external light may be lowered based on the event different from the touch input. For example, the event different from the touch input may include a change in light source, a change in state (e.g., on/off) of the light source, or a change in orientation of the electronic device 101. However, embodiments of the disclosure are not limited thereto.

Although not illustrated in FIG. 11, when the touch input to the touch area is obtained, the electronic device 101 may identify whether another illuminance sensor (e.g., the at least one sensor of FIG. 3) is available. For example, in response to identifying that the touch input is obtained, the electronic device 101 may identify whether the other illuminance sensor is available.

For example, the other illuminance sensor may be included in the housing of the electronic device 101. For example, the other illuminance sensor may be disposed at a second position in the housing. For example, the second position may at least partially overlap the display 320 or may include an area of the housing different from the display 320. The second position may be different from the first position where the illuminance sensor is disposed. For example, the other illuminance sensor may receive light outside the electronic device 101 through the one surface of the housing. In other words, the one surface through which the other illuminance sensor and the illuminance sensor receive the light may be the same as each other. However, embodiments of the disclosure are not limited thereto. For example, the one surface through which the other illuminance sensor receives light may be different (e.g., an opposite surface) from the one surface on which the illuminance sensor receives light. However, embodiments of the disclosure are not limited thereto.

According to an embodiment, the electronic device 101 may identify whether the other illuminance sensor is available, based on a field of view (FOV) of the other illuminance sensor. For example, when a light source is located in the FoV, the electronic device 101 may identify that the other illuminance sensor is available. In contrast, when the light source is located out of the FoV, the electronic device 101 may identify that the other illuminance sensor is not available. For example, when the light source is positioned in the FoV, it may be understood that the reliability of the other illuminance sensor is relatively high. In other words, the high reliability may represent that an illuminance value measured through the other illuminance sensor is a relatively accurate illuminance value.

According to an embodiment, when it is identified that the other illuminance sensor is not available, the electronic device 101 may maintain displaying of the screen having the first brightness. For example, the electronic device 101 may display a screen having the first brightness, based on identifying that the other illuminance sensor is not available. For example, the electronic device 101 may identify the illuminance value as a value changed by an external object, in a state of the screen having the first brightness being displayed. In other words, the electronic device 101 may identify that the illuminance value is changed by the external object, rather than the amount of external light (or brightness) having been actually lowered. Accordingly, the electronic device 101 may not change the brightness of the screen based on the illuminance value. For example, the electronic device 101 may maintain displaying of the screen having the first brightness.

According to an embodiment, when it is identified that the other illuminance sensor is available, the electronic device 101 may identify another illuminance value using the other illuminance sensor. For example, the electronic device 101 may identify the other illuminance value using the other illuminance sensor, based on identifying that the other illuminance sensor is available.

According to an embodiment, when the other illuminance value is less than or equal to the reference value, the electronic device 101 may identify a third brightness lower than the first brightness. For example, the electronic device 101 may identify the third brightness, based on the other illuminance value that is less than or equal to the first reference value set for the first illuminance value. Accordingly, the electronic device 101 may display the screen having the third brightness. In an example, the third brightness may correspond to the second brightness. In other words, the second brightness according to the illuminance value that is less than or equal to the reference value may be the same as the third brightness according to the other illuminance value that is less than or equal to the reference value. However, embodiments of the disclosure are not limited thereto.

Further, in the above example, an example is described in which the other illuminance value lower than the specified illuminance value is identified, but embodiments of the disclosure are not limited thereto. According to an embodiment, when the other illuminance value exceeds a second reference value for the specified illuminance value, the electronic device 101 may identify a fourth brightness brighter than the first brightness. For example, the electronic device 101 may identify the fourth brightness based on identifying the other illuminance value exceeding the second reference value. The electronic device 101 may display a screen having the fourth brightness. Alternatively, according to an embodiment, when the other illuminance value is a value between the first reference value and the second reference value, the electronic device 101 may identify the first brightness. For example, even if the other illuminance value is identified in the state of the screen having the first brightness having been displayed, when the other illuminance value is a value between the first reference value and the second reference value, the electronic device 101 may maintain displaying of the screen having the first brightness.

FIG. 12 is a view illustrating an electronic device according to an embodiment.

Referring to FIG. 12, the electronic device 101 (e.g., the electronic device 101 of FIG. 3) according to an embodiment may include a housing 1230 that forms an appearance of the electronic device 101. For example, the housing 1230 may include a first surface (or front surface) 1200A, a second surface (or rear surface) 1200B, and a third surface (or side surface) 1200C surrounding a space between the first surface 1200A and the second surface 1200B. In an embodiment, the housing 1230 may refer to a structure forming at least a portion of the first surface 1200A, the second surface 1200B, and/or the third surface 1200C.

The electronic device 101 according to an embodiment may include a substantially transparent front plate 1202. In an embodiment, the front plate 1202 may form at least a portion of the first surface 1200A. In an embodiment, the front plate 1202 may include, for example, a glass plate or a polymer plate including various coating layers, but it is not limited thereto.

The electronic device 101 according to an embodiment may include a rear plate 1211 that is substantially opaque. In an embodiment, the rear plate 1211 may form at least a portion of the second surface 1200B. In an embodiment, the rear plate 1211 may be formed of any one of coated or colored glass, ceramic, polymer, or metal (e.g., aluminum, stainless steel (STS), or magnesium), or a combination of at least two of these materials.

The electronic device 101 according to an embodiment may include a side bezel structure (or a side member) 1218. In an embodiment, the side bezel structure 1218 may be coupled to the front plate 1202 and/or the rear plate 1211 to form at least a portion of the third surface 1200C. For example, the side bezel structure 1218 may form the entire third surface 1200C, and as another example, the side bezel structure 1218 may form the third surface 1200C together with the front plate 1202 and/or the rear plate 1211.

As opposed to the illustrated embodiment, when the third surface 1200C is partially formed by the front plate 1202 and/or the rear plate 1211, the front plate 1202 and/or the rear plate 1211 may include an area that is bent toward the rear plate 1211 and/or the front plate 1202 from the periphery thereof to seamlessly extend. The extended area of the front plate 1202 and/or the rear plate 1211 may be located, for example, at both ends of a long edge of the electronic device 101, but the disclosure is not limited to the above-described example.

In an embodiment, the side bezel structure 1218 may include a metal and/or a polymer. In an embodiment, the rear plate 1211 and the side bezel structure 1218 may be integrally formed with each other, and may include the same material (e.g., a metal material such as aluminum), but the disclosure is not limited thereto. For example, the rear plate 1211 and the side bezel structure 1218 may be formed as separate components and/or may include materials different from each other.

In an embodiment, the electronic device 101 may include at least one of a display 1201, audio modules (1203, 1204, 1207), a sensor module (not shown), camera modules (1205, 1212, 1213), a key input device 1217, a light emitting element (not shown), and/or a connector hole 1208. In an embodiment, the electronic device 101 may omit at least one (e.g., the key input device 1217 or a light emitting element (not shown)) of the above-described components, or may further include other components.

In an embodiment, the display 1201 (e.g., the display module 160 of FIG. 1) may be visually exposed through a corresponding portion of the front plate 1202. For example, at least a portion of the display 1201 may be viewed through the front plate 1202 forming the first surface 1200A. In an embodiment, the display 1201 may be disposed on the rear surface of the front plate 1202.

In an embodiment, the outline shape of the display 1201 may be formed to be substantially the same as the outline shape of the front plate 1202 adjacent to the display 1201. In an embodiment, a spacing between the outer periphery of the display 1201 and the outer periphery of the front plate 1202 may be formed to be substantially the same in order to expand the area in which the display 1201 is visually exposed.

In an embodiment, the display 1201 (or the first surface 1200A of the electronic device 101) may include a screen display area 1201A. The screen display area 1201A may be referred to as a display area. In an embodiment, the display 1201 may provide visual information to a user through the screen display area 1201A. In the illustrated embodiment, it is illustrated that when the first surface 1200A is viewed from the front, the screen display area 1201A is spaced apart from the outer periphery of the first surface 1200A and is located inside the first surface 1200A, but the disclosure is not limited thereto. In an embodiment, when the first surface 1200A is viewed from the front, at least a portion of the periphery of the screen display area 1201A may be substantially aligned with the periphery of the first surface 1200A (or the front plate 1202).

In an embodiment, the display 1201 may include an area in which the first camera module 1205 (e.g., the camera module 180 of FIG. 1) is located. In an embodiment, an opening may be formed in the area of the display 1201, and the first camera module 1205 (e.g., a punch hole camera) may be at least partially disposed in the opening to face the first surface 1200A. For example, the screen display area 1201A may surround at least a portion of the periphery of the opening. In an embodiment, the first camera module 1205 (e.g., an under display camera (UDC)) may be disposed under the display 1201 to overlap the area of the display 1201. For example, the display 1201 may provide visual information to the user through the area, and additionally, the first camera module 1205 may obtain an image corresponding to a direction toward the first surface 1200A through the area of the display 1201. The display 1201 may represent an example of the display 320 of FIG. 3.

In an embodiment, the display 1201 may be coupled with or disposed adjacent to a touch sensing circuit, a pressure sensor for measuring intensity (pressure) of a touch, and/or a digitizer for detecting a magnetic field type of stylus pen. The touch sensor including the pressure sensor may correspond to the touch sensor 332 of FIG. 3.

In an embodiment, the display 1201 may be coupled to or disposed adjacent to the illuminance sensor 1299. For example, the illuminance sensor 1299 may output an electrical signal indicating the intensity of light (or the amount of light) reaching at least a portion of the illuminance sensor 331 exposed to the outside of the electronic device 101. The illuminance sensor 1299 of FIG. 12 may correspond to the illuminance sensor 331 of FIG. 3.

In an embodiment, the audio modules (1203, 1204, 1207) (e.g., the audio module 170 of FIG. 1) may include microphone holes (1203, 1204) and a speaker hole 1207.

In an embodiment, the microphone holes (1203, 1204) may include a first microphone hole 1203 formed in a partial area of the third surface 1200C and a second microphone hole 1204 formed in a partial area of the second surface 1200B. A microphone (not shown) for acquiring an external sound may be disposed inside the microphone holes (1203, 1204). The microphone may include a plurality of microphones to detect the direction of the external sound.

In an embodiment, the second microphone hole 1204 formed in the partial area of the second surface 1200B may be disposed adjacent to the camera module 1212. For example, the second microphone hole 1204 may acquire sound according to operation of the camera module 1212. However, the disclosure is not limited thereto.

In an embodiment, the speaker hole 1207 may include an external speaker hole 1207 and a call receiver hole (not shown). The external speaker hole 1207 may be formed in a portion of the third surface 1200C. In an embodiment, the external speaker hole 1207 and the microphone hole 1203 may be implemented with a single hole. Although not shown herein, the call receiver hole (not shown) may be formed in another portion of the third surface 1200C. For example, the call receiver hole may be formed on the third surface 1200C opposite to the external speaker hole 1207. For example, with reference to FIG. 12, the external speaker hole 1207 may be formed on the third surface 1200C corresponding to a lower end of the electronic device 101, and the call receiver hole may be formed on the third surface 1200C corresponding to an upper end of the electronic device 101. However, the disclosure is not limited thereto, and in one embodiment, the call receiver hole may be formed at a position other than the third surface 1200C. For example, the call receiver hole may be formed by a space placed apart between the front plate 1202 (or the display 1201) and the side bezel structure 1218.

In an embodiment, the electronic device 101 may include at least one speaker (not shown) configured to output sound to the outside of the housing 1230 through the external speaker hole 1207 and/or the call receiver hole (not shown).

In an embodiment, the sensor module (not shown) (e.g., the sensor module 176 of FIG. 1) may generate an electrical signal or a data value corresponding to an internal operating state of the electronic device 101 or an external environmental state. For example, the sensor module may include at least one of a proximity sensor, an HRM sensor, a fingerprint sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 1299.

In an embodiment, the camera modules (1205, 1212, 1213) (e.g., the camera module 180 of FIG. 1) may include a first camera module 1205 disposed to face the first surface 1200A of the electronic device 101, a second camera module 1212 disposed to face the second surface 1200B, and a flash 1213.

In an embodiment, the second camera module 1212 may include a plurality of cameras (e.g., a dual camera, a triple camera, or a quad camera). However, the second camera module 1212 is not necessarily limited to including a plurality of cameras, and may include only one camera.

In an embodiment, the first camera module 1205 and the second camera module 1212 may include one or more lenses, an image sensor, and/or an image signal processor.

In an embodiment, the flash 1213 may include, for example, a light emitting diode or a xenon lamp. In an embodiment, two or more lenses (an infrared camera, a wide-angle lens, and a telephoto lens) and image sensors may be disposed on one surface of the electronic device 101.

In an embodiment, the key input device 1217 (e.g., the input module 150 of FIG. 1) may be disposed on the third surface 1200C. In an embodiment, the electronic device 101 may not include some or all of the key input devices 1217, and the key input device 1217 not included therein may be implemented in another form such as e.g., a soft key on the display 1201.

In an embodiment, the connector hole 1208 may be formed on the third surface 1200C to accommodate a connector of an external device. A connecting terminal (e.g., the connecting terminal 178 of FIG. 1) electrically connected to the connector of the external device may be disposed in the connector hole 1208. The electronic device 101 according to an embodiment may include an interface module (e.g., the interface 177 of FIG. 1) for processing an electrical signal transmitted/received via the connection terminal.

In an embodiment, the electronic device 101 may include a light emitting device (not shown). For example, the light emitting device (not shown) may be disposed on the first surface 1200A of the housing 1230. The light emitting device (not shown) may provide state information of the electronic device 101 in the form of light. In an embodiment, the light emitting element (not shown) may provide a light source that may be in association with the operation of the first camera module 1205. For example, the light emitting device (not shown) may include an LED, an IR LED, and/or a xenon lamp.

FIGS. 13A and 13B illustrate examples of an unfolded state and a folded state of an example electronic device according to an embodiment.

Referring to FIGS. 13A and 13B, a first housing 1310, a second housing 1320, and a hinge housing 1365 may be included in the electronic device 101 (e.g., the electronic device 101 of FIG. 3). The electronic device 101 may include the first housing 1310 including a first surface 1311 and a second surface 1312 opposite to the first surface. The electronic device 101 may include the second housing 1320 including a third surface 1321 and a fourth surface (not shown) opposite to the third surface 1321. The electronic device 101 may include the hinge housing 1365 in which a hinge structure pivotably connecting the first housing 1310 and the second housing 1320 is located. At least a portion of the first display 1341 may be disposed on one surface (e.g., the first surface 1311) of the first housing 1310 and one surface (e.g., the third surface 1321) of the second housing 1320. For example, at least a portion of the first display 1341 may be disposed on the first surface 1311 and the third surface 1321 across the hinge housing 1365. A first display area 1331, a second display area 1332, and a third display area 1333 may be included in the first display 1341. The hinge housing 1365 may include a hinge structure. The second display 1342 may be disposed on the second surface 1312. The electronic device 101 may include a camera facing a direction in which the second surface 1312 faces. The camera may be disposed in a partial area 1350 of the second surface 1312. The second display 1342 may be referred to as a sub-display, a cover display, an external display, or a rear display. For example, the second display 1342 may illustrate an example of the cover display 325 of FIG. 3.

The above-described housing (e.g., the first housing 1310, the second housing 1320, and the hinge housing 1365) may be referred to as a housing part. For example, the first housing 1310 may be referred to as a first housing part. For example, the second housing 1320 may be referred to as a second housing part. For example, the hinge housing 1365 may be referred to as a hinge housing part.

According to an embodiment, the electronic device 101 may provide an unfolding state in which the first housing 1310 and the second housing 1320 are fully folded out by the hinge structure positioned in the hinge housing 1365. For example, referring to FIG. 13A, the electronic device 101 may be in a state 1300, which is the unfolding state. For example, the state 1300 may refer to a state in which the first direction 1391 in which the first surface 1311 faces corresponds to the second direction 1392 in which the third surface 1321 faces. For example, in the state 1300, the first direction 1391 may be parallel to the second direction 1392. For example, in the state 1300, the first direction 1391 may be substantially the same as the second direction 1392.

According to an embodiment, in the state 1300, the first surface 1311 may substantially form one plane with the third surface 1321. For example, in the state 1300, the angle 1305-1 between the first surface 1311 and the third surface 1321 may be substantially 180 degrees. For example, the state 1300 may refer to a state in which all of the entire display areas of the first display 1341 may be substantially provided on one plane. For example, the state 1300 may refer to a state in which all of the first display area 1331, the second display area 1332, and the third display area 1333 may be provided on one plane. For example, in the state 1300, the third display area 1333 may not include a curved surface. For example, the unfolding state may be referred to as an outspread state or an outspreading state. Hereinafter, description will be made of different states of the electronic device 101 based on the angles (1305-2, 205-3, 205-4).

Referring to FIG. 13B, the electronic device 101 according to an embodiment may provide a folding state in which the first housing 1310 and the second housing 1320 are folded in by a hinge structure positioned in the hinge housing 1365. For example, the electronic device 101 may be in the folded state including a state 1301, a state 1302, and a state 1302. For example, the folding state including the state 1301, the state 1302, and the state 1303 may refer to a state in which the first direction 1391 in which the first surface 1311 is facing is distinguished from the second direction 1392 in which the third surface 1321 is facing. For example, in the state 1301, the angle between the first direction 1391 and the second direction 1392 may be substantially 45 degrees, and the first direction 1391 and the second direction 1392 may be distinguished from each other. For example, in the state 1302, the angle between the first direction 1391 and the second direction 1392 may be substantially 150 degrees, and the first direction 1391 and the second direction 1392 may be distinguished from each other. For example, in the state 1303, the angle between the first direction 1391 and the second direction 1392 may be substantially 180 degrees, and the first direction 1391 and the second direction 1392 may be distinguished from each other.

According to an embodiment, in the folding state, the angle between the first surface 1311 and the third surface 1321 may be substantially zero degree or more and less than substantially 180 degrees. For example, in the state 1301, the angle 1305-2 between the first surface 1311 and the third surface 1321 may be substantially 135 degrees. In the state 1302, the angle 1305-3 between the first surface 1311 and the third surface 1321 may be substantially 30 degrees. In the state 1303, the angle 1305-4 between the first surface 1311 and the third surface 1321 may be substantially zero degree. For example, the folded state may be referred to as a folding state.

In an embodiment, the folding state may include a plurality of sub-folding states, as opposed to the unfolding state. For example, referring to FIG. 13B, the folding state may include a folding state 1303, which is a fully folded state in which the first surface 1311 is substantially superimposed on the third surface 1321 by pivoting provided by means of the hinge structure positioned in the hinge housing 1365, and a plurality of sub-folding states including a state 1301 and a state 1302, which are intermediate folding states between the state 1303 and the unfolding state (e.g., the state 1300 of FIG. 13A). For example, the electronic device 101 may provide the state 1303 in which the first surface 1311 and the third surface 1321 closely face each other by mean of the hinge structure in the hinge housing 1365, such that the entire area of the first display area 1331 substantially overlaps the entire area of the second display area 1332. For example, the electronic device 101 may provide the state 1303 in which the first direction 1391 is substantially opposite to the second direction 1392. For example, the state 1303 may refer to a state in which the first display 1341 is fully hidden from the field of view of the user looking at the electronic device 101. However, it is not limited thereto.

According to an embodiment, the first display 1341 may be bent by rotation provided using the hinge structure positioned in the hinge housing 1365. For example, in the first display 1341, the third display area 1333 may be bent with its folding operation, as opposed to the first display area 1331 and the second display area 1332. For example, the third display area 1333 may be in a curved state to prevent damage to the first display 1341 in the fully folded state. In the fully folded state, the entirety of the first display area 1331 may fully overlap the entirety of the second display area 1332, as opposed to bending of the third display area 1333.

In an embodiment, the electronic device 101 may include an illuminance sensor 1398. For example, the electronic device 101 may include the illuminance sensor 1398 coupled with the first surface 1311 of the first display 1341 or disposed to be spaced apart from the first surface 1311. For example, the illuminance sensor 1398 may receive light through the first surface 1311. Based on such an arrangement, the illuminance sensor 1398 may output an electrical signal indicative of the intensity of light (or the amount of light). The illuminance sensor 1398 of FIG. 13A may correspond to the illuminance sensor 331 of FIG. 3.

In an embodiment, the electronic device 101 may include an illuminance sensor 1399. For example, the electronic device 101 may include the illuminance sensor 1399 coupled with the second surface 1312 of the second display 1342 or disposed to be spaced apart from the second surface 1312. For example, the illuminance sensor 1399 may receive light through the second surface 1312. Based on this arrangement, the illuminance sensor 1399 may output an electrical signal indicative of the intensity of light (or the amount of light). The illuminance sensor 1399 of FIG. 13B may correspond to the illuminance sensor 331 of FIG. 3. However, embodiments of the disclosure are not limited thereto. For example, the illuminance sensor 1399 may be disposed inside the first housing 1310.

Referring to FIGS. 13A to 13B, an example is illustrated in which the first display 1341 of the electronic device 101 has one folded display area (e.g., the third display area 1333) or the electronic device 101 has one hinge housing (e.g., the hinge housing 1365), but it is only for convenience of description. According to embodiments, the first display 1341 of the electronic device 101 may include a plurality of folded display areas. For example, the first display 1341 of the electronic device 101 may include two or more folded display areas, and the electronic device 101 may include a hinge housing having two or more hinge structures for providing the two or more folded areas, respectively.

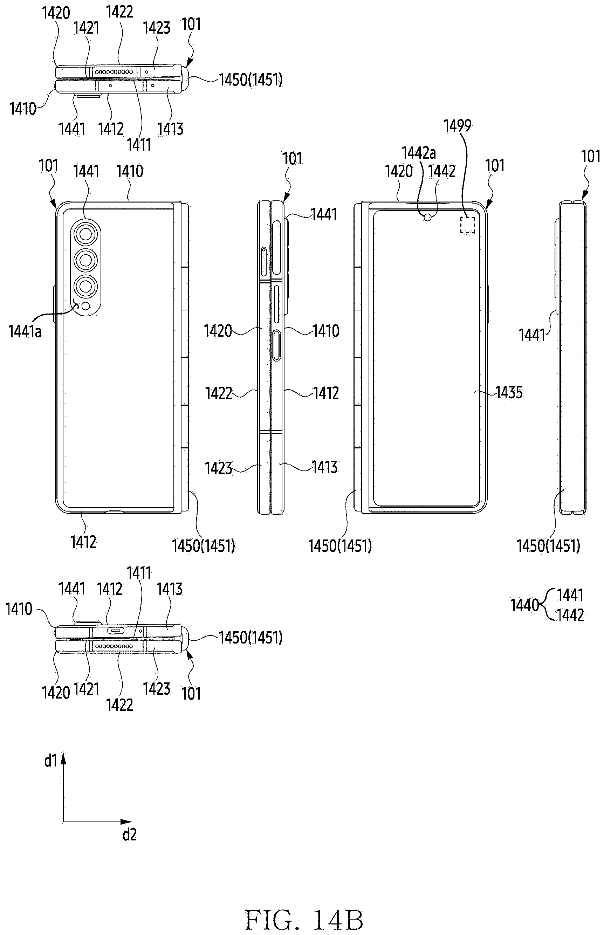

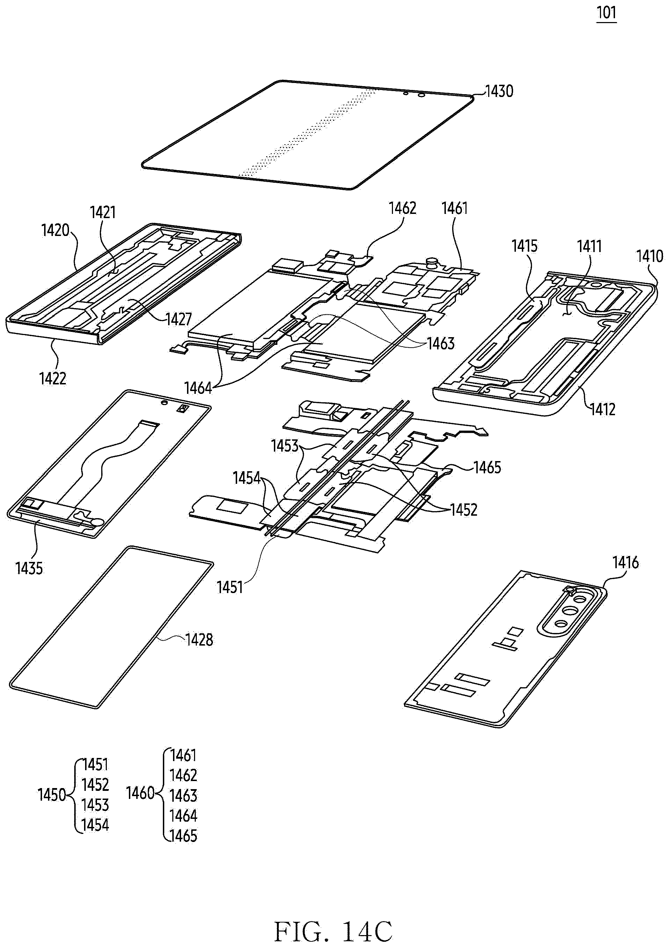

FIG. 14A illustrates an example of an unfolded state of an example electronic device according to an embodiment. FIG. 14B illustrates an example of a folded state of an example electronic device according to an embodiment. FIG. 14C is an exploded view of an example electronic device according to an embodiment.

Referring to FIGS. 14A, 14B, and 14C, an electronic device 101 (e.g., the electronic device 101 of FIG. 3) may include a first housing 1410, a second housing 1420, and a display 1430 (e.g., the display 320 of FIG. 3), at least one camera 1440 (e.g., the camera module 180 of FIG. 1), a hinge structure 1450, and/or at least one electronic component 1460. In other words, the electronic device 101 of FIGS. 14A to 14C may represent an example of the electronic device 101 of FIG. 3.

For example, the first housing 1410 may be referred to as a first housing part. The second housing 1420 may be referred to as a second housing part. For example, the electronic device 101 may include a housing including the first housing part and the second housing part.

The first housing 1410 and the second housing 1420 may form at least a portion of an outer face of the electronic device 101 that may be gripped by a user. At least a portion of the outer face of the electronic device 101 defined by the first housing 1410 and the second housing 1420 may be in contact with a part of the user's body when the electronic device 101 is used by the user. According to an embodiment, the first housing 1410 may include a first surface 1411, a second surface 1412 facing the first surface 1411 and spaced apart from the first surface 1411, and a first side surface 1413 surrounding at least a portion of the first surface 1411 and the second surface 1412. The first side surface 1413 may connect a periphery of the first surface 1411 to a periphery of the second surface 1412. The first surface 1411, the second surface 1412, and the first side surface 1413 may define an inner space of the first housing 1410. According to an embodiment, the first housing 1410 may provide a space formed by the first surface 1411, the second surface 1412, and the first side surface 1413, as a space for disposing the components of the electronic device 101 therein.

According to an embodiment, the second housing 1420 may include a third surface 1421, a fourth surface 1422 facing the third surface 1421 and spaced apart from the third surface 1421, and a second side surface 1423 surrounding at least a portion of the third surface 1421 and the fourth surface 1422. The second side surface 1423 may connect a periphery of the third surface 1421 and a periphery of the fourth surface 1422 to each other. The third surface 1421, the fourth surface 1422, and the second side surface 1423 may define an inner space of the second housing 1420. According to an embodiment, the second housing 1420 may provide a space formed by the third surface 1421, the fourth surface 1422, and the second side surface 1423 surrounding the at least a portion of the third surface 1421 and the fourth surface 1422, as a space for mounting components of the electronic device 101 therein. According to an embodiment, the second housing 1420 may be coupled to the first housing 1410 to be rotatable with respect to the first housing 1410.

According to an embodiment, each of the first housing 1410 and the second housing 1420 may include a first protective member 1414 and a second protective member 1424, respectively. The first protective member 1414 and the second protective member 1424 may be disposed on the first surface 1411 and the third surface 1421 along a periphery of the display 1430. According to an embodiment, the first protective member 1414 and the second protective member 1424 may serve to prevent foreign substances (e.g., dusts or moisture) from entering through a gap between the display 1430 and the first housing 1410 and the second housing 1420. For example, the first protective member 1414 may be configured to surround a periphery of the first display area 1431 of the display 1430, and the second protective member 1424 may be configured to surround a periphery of the second display area 1432 of the display 1430. The first protective member 1414 may be formed to be attached to the first side surface 1413 of the first housing 1410 or may be integrally formed with the first side surface 1413. The second protective member 1424 may be formed to be attached to the second side surface 1423 of the second housing 1420 or may be integrally formed with the second side surface 1423.

According to an embodiment, the first side surface 1413 and the second side surface 1423 may include a conductive material, a non-conductive material, or a combination thereof. For example, the second side surface 1423 may include at least one conductive member 1425 and at least one non-conductive member 1426. The at least one conductive member 1425 may include a plurality of conductive members spaced apart from each other. The at least one non-conductive member 1426 may be disposed between the plurality of conductive members. The plurality of conductive members may be disconnected from each other by means of at least one non-conductive member 1426 disposed between the plurality of conductive members. According to an embodiment, the plurality of conductive members and the plurality of non-conductive members may form an antenna radiator together. The electronic device 101 may communicate with an external electronic device via the antenna radiator formed by the plurality of conductive members and the plurality of non-conductive members.

The display 1430 may be configured to display visual information. According to an embodiment, the display 1430 may be disposed on the first surface 1411 of the first housing 1410 and the third surface 1421 of the second housing 1420 across the hinge structure 1450. For example, the display 1430 may include a first display area 1431 disposed on the first surface 1411 of the first housing, a second display area 1432 disposed on the third surface 1421 of the second housing, and a third display area 1433 disposed between the first display area 1431 and the second display area 1432. The first display area 1431, the second display area 1432, and the third display area 1433 may form a front surface of the display 1430. According to an embodiment, the display 1430 may further include a sub-display 1435 disposed on the fourth surface 1422 of the second housing 1420. For example, the display 1430 may be referred to as a flexible display. According to an embodiment, the display 1430 may include a window exposed to the outside of the electronic device 101. The window may include a substantially transparent material for protecting the surface of the display 1430 to transmit visual information provided by the display 1430 to the outside of the electronic device 101. For example, the window may include, for example, glass (e.g., ultrathin glass (UTG) and/or polymer (e.g., polyimide (PI)), but it not limited thereto. The sub-display 1435 may be referred to as a cover display, an external display, or a rear display. For example, the sub-display may represent an example of the cover display 325 of FIG. 3.

In an embodiment, the electronic device 101 may include an illuminance sensor 1498. For example, the electronic device 101 may include an illuminance sensor 1498 coupled with the first surface 1411 or disposed to be spaced apart from the first surface 1411. For example, the illuminance sensor 1498 may receive light through the first surface 1411. Based on this arrangement, the illuminance sensor 1498 may output an electrical signal indicative of the intensity of light (or the amount of light). The illuminance sensor 1498 of FIG. 14A may correspond to the illuminance sensor 331 of FIG. 3.

In an embodiment, the electronic device 101 may include an illuminance sensor 1499. For example, the electronic device 101 may include the illuminance sensor 1499 coupled with the fourth surface 1422 of the sub-display 1435 or disposed to be spaced apart from the fourth surface 1422. For example, the illuminance sensor 1499 may receive light through the fourth surface 1422. Based on this arrangement, the illuminance sensor 1499 may output an electrical signal indicating the intensity of light (or the amount of light). The illuminance sensor 1499 of FIGS. 14A and 14B may correspond to the illuminance sensor 331 of FIG. 3. However, embodiments of the disclosure are not limited thereto. For example, the illuminance sensor 1499 may be disposed inside the first housing 1410, when the second housing 1420 (or the sub-display 1435) is disposed on one surface of the first housing 1410.

The at least one camera 1440 may be configured to obtain an image based on receiving light from an external subject of the electronic device 101. According to an embodiment, the at least one camera 1440 may include first cameras 1441, a second cameras 1442, and a third camera 1443. The first cameras 1441 may be disposed in the first housing 1410. For example, the first cameras 1441 may be disposed inside the first housing 1410, and at least some of the first cameras 1441 may be visible through the second surface 1412 of the first housing 1410. The first cameras 1441 may be supported by a bracket (not shown) in the first housing 1410. The first housing 1410 may include at least one opening 1441a overlapping the first cameras 1441 when the second surface 1412 is viewed from above. The first cameras 1441 may obtain an image based on receiving light from the outside of the electronic device 101 through the at least one opening 1441a.

According to an embodiment, the second camera 1442 may be disposed in the second housing 1420. For example, the second camera 1442 may be disposed inside the second housing 1420 and may be visible through the sub-display 1435. The second housing 1420 may include at least one opening 1442a overlapping the second camera 1442 when the fourth surface 1422 is viewed from above. The second camera 1442 may obtain an image based on receiving light from the outside of the electronic device 101 through the at least one opening 1442a.

According to an embodiment, the third camera 1443 may be disposed inside the first housing 1410. For example, the third camera 1443 may be disposed inside the first housing 1410, and at least a portion thereof may be visible through the first surface 1411 of the first housing 1410. As another example, the third camera 1443 may be disposed inside the first housing 1410, and at least a portion thereof may be visible through the first display area 1431 of the display 1430. The first display area 1431 of the display 1430 may include at least one opening (not shown) overlapping the third camera 1443, when the display 1430 is viewed from above. The third camera 1443 may acquire an image based on receiving light from the outside of the display 1430 through the at least one opening.

According to an embodiment, the second camera 1442 and the third camera 1443 may be disposed under the display 1430 (e.g., in a direction toward the inside of the first housing 1410 or the inside of the second housing 1420). For example, the second camera 1442 and the third camera 1443 may be a under display camera (UDC). When the second camera 1442 and the third camera 1443 are under display cameras, one area of the display 1430 corresponding to a position of each of the second camera 1442 and the third camera 1443 may not be an inactive area. For example, when the second camera 1442 and the third camera 1443 are under display cameras, one area of the display 1430 corresponding to the position of each of the second camera 1442 and the third camera 1443 may have a pixel density less than that of another area of the display 1430. The inactive area of the display 1430 may refer to an area of the display 1430 that does not include pixels or does not emit light to the outside of the electronic device 101. For another example, the second camera 1442 and the third camera 1443 may be punch hole cameras. When the second camera 1442 and the third camera 1443 are punch hole cameras, one area of the display 1430 corresponding to the position of each of the second camera 1442 and the third camera 1443 may be an inactive area. For example, when the second camera 1442 and the third camera 1443 are punch hole cameras, one area of the display 1430 corresponding to the position of each of the second camera 1442 and the third camera 1443 may include an opening that does not include pixels.

According to an embodiment, the hinge structure 1450 may rotatably connect the first housing 1410 and the second housing 1420. The hinge structure 1450 may be disposed between the first housing 1410 and the second housing 1420 of the electronic device 101 such that the electronic device 101 may be curved, bent, or folded. For example, the hinge structure 1450 may be disposed between a portion of the first side surface 1413 and a portion of the second side surface 1423 facing each other. The hinge structure 1450 may change the electronic device 101 to an unfolding state in which the first surface 1411 of the first housing 1410 and the third surface 1421 of the second housing 1420 face substantially the same direction or to a folding state in which the first surface 1411 and the third surface 1421 face each other. When the electronic device 101 is in the folded state, the first housing 1410 and the second housing 1420 may face each other, so that they lie one upon another or overlap each other.

According to an embodiment, when the electronic device 101 is in the folded state, the direction in which the first surface 1411 faces may be different from the direction in which the third surface 1421 faces. For example, when the electronic device 101 is in the folded state, the direction in which the first surface 1411 faces and the direction in which the third surface 1421 faces may be opposite to each other. For another example, when the electronic device 101 is in the folded state, the direction in which the first surface 1411 faces and the direction in which the third surface 1421 faces may be inclined with respect to each other. When the direction in which the first surface 1411 faces is inclined with respect to the direction in which the third surface 1421 faces, the first housing 1410 may be inclined with respect to the second housing 1420. However, the disclosure is not limited thereto. For example, in the folded state of the electronic device 101, the second surface 1412 of the first housing 1410 may face the fourth surface 1422 of the second housing 1420. When the second surface 1412 and the fourth surface 1422 face each other in the folded state of the electronic device 101, the direction in which the first surface 1411 faces and the direction in which the third surface 1421 faces may be opposite to each other. When the second surface 1412 and the fourth surface 1422 face each other in the folded state of the electronic device 101, the display 1430 may be directly exposed to the outside in the folded state of the electronic device 101.

According to an embodiment, the electronic device 101 may be foldable with respect to a folding axis f. The folding axis f may refer to a virtual line extending through the hinge cover 1451 in a direction (e.g., d1 in FIGS. 14A and 14B) substantially parallel to the longitudinal direction of the electronic device 101, but the disclosure is not limited thereto. For example, the folding axis f may be a virtual line extending in a direction (e.g., d2 in FIGS. 14A and 14B) substantially perpendicular to the longitudinal direction of the electronic device 101. When the folding axis f extends in a direction substantially perpendicular to the longitudinal direction of the electronic device 101, the hinge structure 1450 may extend in a direction parallel to the folding axis f to connect the first housing 1410 and the second housing 1420 to each other. The first housing 1410 and the second housing 1420 may be rotatable by the hinge structure 1450 extending in the direction substantially perpendicular to the longitudinal direction of the electronic device 101.

According to an embodiment, the hinge structure 1450 may include a hinge cover 1451, a first hinge plate 1452, a second hinge plate 1453, and a hinge module 1454. The hinge cover 1451 may surround internal components of the hinge structure 1450 and may form an outer face of the hinge structure 1450. According to an embodiment, at least a portion of the hinge cover 1451 surrounding the hinge structure 1450 may be exposed to the outside of the electronic device 101 through between the first housing 1410 and the second housing 1420, when the electronic device 101 is in the folded state. According to an embodiment, when the electronic device 101 is in the unfolded state, the hinge cover 1451 may be covered by the first housing 1410 and the second housing 1420 so as not to be exposed to the outside of the electronic device 101.

According to an embodiment, the first hinge plate 1452 and the second hinge plate 1453 may be respectively coupled to the first housing 1410 and the second housing 1420 to rotatably connect the first housing 1410 and the second housing 1420 with respect to each other. For example, the first hinge plate 1452 may be coupled to a first front bracket 1415 of the first housing 1410 and the second hinge plate 1453 may be coupled to a second front bracket 1427 of the second housing 1420. As the first hinge plate 1452 and the second hinge plate 1453 are coupled to the first front bracket 1415 and the second front bracket 1427, respectively, the first housing 1410 and the second housing 1420 may be rotatable along with rotation of the first hinge plate 1452 and the second hinge plate 1453.

The hinge module 1454 may cause the first hinge plate 1452 and the second hinge plate 1453 to rotate. For example, the hinge module 1454 may include gears that may be engaged with each other and rotatable, causing the first hinge plate 1452 and the second hinge plate 1453 to rotate about the folding axis f. According to an embodiment, there may be a plurality of hinge modules 1454. For example, the plurality of hinge modules 1454 may be disposed to be spaced apart from each other at both ends of the first hinge plate 1452 and the second hinge plate 1453, respectively.

According to an embodiment, the first housing 1410 may include a first front bracket 1415 and a first rear bracket 1416, and the second housing 1420 may include a second front bracket 1427 and a second rear bracket 1428. The first front bracket 1415 and the first rear bracket 1416 may support components of the electronic device 101. The first front bracket 1415 may be coupled to the first rear bracket 1416 to define the first housing 1410. The first rear bracket 1416 may define a portion of an outer surface of the first housing 1410. The second front bracket 1427 and the second rear bracket 1428 may support components of the electronic device 101. The second front bracket 1427 may be coupled to the second rear bracket 1428 to define the second housing 1420. The second rear bracket 1428 may define a portion of an outer face of the second housing 1420. For example, the display 1430 may be disposed on one surface of the first front bracket 1415 and one surface of the second front bracket 1427. The first rear bracket 1416 may be disposed on the other surface of the first front bracket 1415 opposite to the one surface of the first front bracket 1415. The second rear bracket 1428 may be disposed on the other surface of the second front bracket 1427 opposite to one surface of the second front bracket 1427. The sub-display 1435 may be disposed between the second front bracket 1427 and the second rear bracket 1428.

According to an embodiment, a portion of the first front bracket 1415 may be surrounded by the first side surface 1413, and a portion of the second front bracket 1427 may be surrounded by the second side surface 1423. For example, the first front bracket 1415 may be integrally formed with the first side surface 1413, and the second front bracket 1427 may be integrally formed with the second side surface 1423. As another example, the first front bracket 1415 may be formed separately from the first side surface 1413, and the second front bracket 1427 may be formed separately from the second side surface 1423.

At least one electronic component 1460 may be configured to implement various functions to be provided to a user. According to an embodiment, the at least one electronic component 1460 may include a first printed circuit board 1461, a second printed circuit board 1462, a flexible printed circuit board 1463, a battery 1464 (e.g., the battery 189 of FIG. 1), and/or an antenna 1465 (e.g., the antenna module 197 of FIG. 1). Each of the first printed circuit board 1461 and the second printed circuit board 1462 may form an electrical connection between components in the electronic device 101. For example, components (e.g., the processor 120 of FIG. 1) for implementing the overall function of the electronic device 101 may be disposed on the first printed circuit board 1461, and electronic components for implementing some functions of the first printed circuit board 1461 may be disposed on the second printed circuit board 1462. As another example, components for operating the sub-display 1435 disposed on the fourth surface 1422 may be disposed on the second printed circuit board 1462.

According to an embodiment, the first printed circuit board 1461 may be disposed in the first housing 1410. For example, the first printed circuit board 1461 may be disposed on one surface of the first front bracket 1415. According to an embodiment, the second printed circuit board 1462 may be disposed in the second housing 1420. For example, the second printed circuit board 1462 may be spaced apart from the first printed circuit board 1461 and may be disposed on one surface of the second front bracket 1427. The flexible printed circuit board 1463 may connect the first printed circuit board 1461 and the second printed circuit board 1462 to each other. For example, the flexible printed circuit board 1463 may extend from the first printed circuit board 1461 to the second printed circuit board 1462.

The battery 1464 is a device to supply power to at least one component of the electronic device 101 and may include, for example, a primary cell which is not rechargeable, a secondary cell which is rechargeable, or a fuel cell. At least a portion of the battery 1464 may be disposed on substantially the same plane as the first printed circuit board 1461 or the second printed circuit board 1462.

The antenna 1465 may be configured to receive power or a signal from outside of the electronic device 101. According to an embodiment, the antenna 1465 may be disposed between the first rear bracket 1416 and the battery 1464. The antenna 1465 may include, for example, a near field communication (NFC) antenna, an antenna module, and/or a magnetic secure transmission (MST) antenna. The antenna 1465 may perform short-range communication with an external device or wirelessly transmit and receive electric power required for charging.

FIG. 15A illustrates an example electronic device according to an embodiment. FIG. 15B is a cross-sectional view illustrating an example electronic device according to an embodiment. FIG. 15B is a cross-sectional view illustrating an example taken along line D-D' of the electronic device 101 of FIG. 15A.

Referring to FIGS. 15A and 15B, the electronic device 101 may include a display 1530 (e.g., the display 320 of FIG. 3), a first housing 1510, and/or a second housing 1520. In other words, the electronic device 101 of FIGS. 15A and 15B may illustrate an example of the electronic device 101 of FIG. 3.

For example, the first housing 1510 may be referred to as a first housing part. The second housing 1520 may be referred to as a second housing part. For example, the electronic device 101 may include a housing having the first housing part and the second housing part.

According to an embodiment, the first housing 1510 may accommodate at least a portion of the second housing 1520. The first housing 1510 may cover up (or surround) at least a portion of the second housing 1520.

According to an embodiment, the second housing 1520 may be movable with respect to the first housing 1510. The second housing 1520 may be linearly movable with respect to the first housing 1510. The second housing 1520 may be slidable with respect to the first housing 1510. For example, the second housing 1520 may be movable with respect to the first housing 1510 in a third direction d3 and/or in a fourth direction d4 opposite to the third direction d3. As the second housing 1520 moves in the third direction d3, the second housing 1520 may slide out of the first housing 1510. As the second housing 1520 moves in the fourth direction d4, the second housing 1520 may slide into the first housing 1510. Such a movement of the second housing 1520 relative to the first housing 1510 may change the state of the electronic device 101. The state of the electronic device 101 may include a slide-in state and/or a slide-out state. In the slide-in state of the electronic device 101, the second housing 1520 may be movable in the third direction d3 of the third direction d3 and the fourth direction d4 with respect to the first housing 1510. For example, in the slide-in state of the electronic device 101, the second housing 1520 may be movable only in the third direction d3. In the slide-out state of the electronic device 101, the second housing 1520 may be movable in the fourth direction d4 of the third direction d3 and the fourth direction d4 with respect to the first housing 1510. For example, in the slide-out state of the electronic device 101, the second housing 1520 may be movable only in the fourth direction d4.

According to an embodiment, the display 1530 may be disposed on the second housing 1520. The display 1530 may be movable relative to the first housing 1510 by the movement of the second housing 1520 relative to the first housing 1510. For example, the display 1530 may move from the inside of the first housing 1510 to the outside of the first housing 1510 by the movement of the second housing 1520 in the third direction d3. For example, in the slide-out state of the electronic device 101, the size of the electronic device 101 exposed to the outside of the first housing 1510 may be the maximum. For example, the display 1530 may move from the outside of the first housing 1510 to the inside of the first housing 1510 by the movement of the second housing 1520 in the fourth direction d4. For example, the display 1530 may be rolled into the first housing 1510 from the outside of the first housing 1510 by the movement of the second housing 1520 in the fourth direction d4.

In an embodiment, the electronic device 101 may include an illuminance sensor 1599. For example, the electronic device 101 may include the illuminance sensor 1599 that is coupled with a first flat surface part 1531 of the display 1530 or disposed to be spaced apart from the first flat surface part 1531. For example, the illuminance sensor 1599 may receive light through the first flat surface part 1531. Based on this arrangement, the illuminance sensor 1599 may output an electrical signal indicative of the intensity of light (or the amount of light). The illuminance sensor 1599 of FIG. 15A may correspond to the illuminance sensor 331 of FIG. 3. However, embodiments of the disclosure are not limited thereto. For example, the illuminance sensor 1599 may be disposed inside the first housing 1510.

In an embodiment, the illuminance sensor 1599 may be disposed inside the first housing 1510 of the electronic device 101 or at a specific position underneath the display 1530. For example, even in case that the display state (e.g., the slide-in state or the slide-out state) is changed, the position of the illuminance sensor 1599 may be fixed. However, embodiments of the disclosure are not limited thereto. For example, the illuminance sensor 1599 may be disposed in a state of being engaged with a certain portion (e.g., a portion of the first flat surface part 1531) of the display 1530. In such a case, the position of the illuminance sensor 1599 may be changed as the display state of the illuminance sensor 1599 is changed.

According to an embodiment, the first flat surface part 1531 may be disposed on the second housing 1520. The shape of the first flat surface part 1531 may be maintained independently of the movement of the second housing 1520 relative to the first housing 1510. The first flat surface part 1531 may not be deformed by the movement of the second housing 1520 relative to the first housing 1510. The first flat surface part 1531 may be exposed to the outside of the first housing 1510 independently of the movement of the second housing 1520 relative to the first housing 1510.

According to an embodiment, a second flat surface part 1532 may be connected to the first flat surface part 1531 by a folding part 1533. The second flat surface part 1532 may be spaced apart from the first flat surface part 1531. The second flat surface part 1532 may be positioned (or accommodated) within the first housing 1510 and the second housing 1520 in the slide-in state of the electronic device 101. At least a portion of the second flat surface part 1532 may be positioned (or exposed) outside the first housing 1510 and the second housing 1520 in the slide-out state of the electronic device 101.

According to an embodiment, the folding part 1533 may be disposed between the first flat surface part 1531 and the second flat surface part 1532. The shape of at least a portion of the folding part 1533 may be changed according to a change in state of the electronic device 101. For example, at least a portion 1533c of the folding part 1533 may be drawn out of the first housing 1510 by the movement of the second housing 1510 in the third direction d3 relative to the first housing 1510. At least a portion 1533c of the folding part 1533 may be drawn out of the first housing 1510 to have a shape substantially parallel to the first flat surface part 1531. For example, the at least a portion 1533c of the folding part 1533 may be rolled into the first housing 1510 by the movement of the second housing 1510 in the fourth direction d3 relative to the first housing 1510. The at least a portion 1533c of the folding part 1533 may be rolled into the first housing 1510 to have a shape bent relative to the first flat surface part 1531.

According to an embodiment, in the slide-in state of the electronic device 101, the size of the externally visible display area of the display 1530 may be minimal. For example, only the first flat surface part 1531 may be exposed in the slide-in state of the electronic device 101. The position of the second housing 1520 relative to the first housing 1510, while the electronic device 101 is in the slide-in state, may be referred to as a reduced position. In the slide-out state of the electronic device 101, the size of the externally visible display area of the display 1530 may be the maximum. For example, in the slide-out state of the electronic device 101, at least a portion of the first flat surface part 1531, the folding part 1533, and the second flat surface part 1532 may be exposed. However, the disclosure is not limited thereto. For example, in the slide-out state of the electronic device 101, the second flat surface part 1532 may not be exposed to the outside of the first housing 1510. The position of the second housing 1520 relative to the first housing 1510 while the electronic device 101 is in the slide-out state may be referred to as an extended position.

As described above, an electronic device 101 may comprise a housing including a first housing part 1310 and a second housing part 1320. The electronic device 101 may comprise a hinge structure 1350 rotatably connecting the first housing part 1310 and the second housing part 1320. The electronic device 101 may comprise a flexible display 320 that is disposed on the first housing part 1310 and the second housing part 1320, and deformable by rotation of the second housing part 1320 relative to the first housing part 1310. The electronic device 101 may comprise a cover display 325 disposed on one surface of the first housing part 1310. The electronic device 101 may comprise an illuminance sensor 331 for receiving light outside the electronic device 101 through the one surface and included in the housing. The electronic device 101 may comprise at least one processor 310. The at least one processor 310 may be configured to display, through the cover display 325, a screen having a first brightness based on a first illuminance value identified using the illuminant sensor 331. The at least one processor 310 may be configured to identify a second illuminance value, which is less than or equal to a reference value according to the first illuminance value, by using the illuminance sensor 331, while the screen having the first illuminance value is displayed. The at least one processor 310 may be configured to maintain displaying of the screen having the first brightness, in response to the second illuminance value identified based on a first state in which a touch input for a touch area corresponding to at least part of a position of the illuminance sensor 331 is obtained, the touch area being changeable in its size. The at least one processor 310 may be configured to display, through the cover display 325, the screen having a second brightness lower than the first brightness, in response to the second illuminance value identified based on a second state in which a brightness of the light is reduced, the second state being distinguished from the first state.

According to an embodiment, the at least one processor may be configured to identify the first illuminance value using the illuminance sensor 331, in case of changing from a state where the cover display 325 is off to a state where the cover display 325 is on. The at least one processor may be configured to display, through the cover display 325, the screen having the first brightness based on the identified first illuminance value.

According to an embodiment, the at least one processor 310 may be configured to, in case that a designated condition for changing the touch area having a first size corresponding to at least partially the position of the illuminance sensor 331 is satisfied, identify the touch area having a second size changed from the first size. The designated condition may include a change in rotation state of the electronic device 101, and a change in state of display area of the flexible display 320.

According to an embodiment, the electronic device 101 may further include a gyro sensor 333. The at least one processor may be configured to identify, through the gyro sensor 333, a first rotation state of the electronic device 101. The at least one processor 310 may be configured to identify the designated condition based on identifying a second rotation state rotated by a specified angle or more from the first rotation state through the gyro sensor 333. The second size of the touch area may be extended from the first size based on a difference between the first rotation state and the second rotation state.

According to an embodiment, the change of the state for the display area of the flexible display 320 may include changing of a size of the display area from a first display size to a second display size. The at least one processor 310 may be configured to identify the second size of the touch area based on a difference between the first display size and the second display size.

According to an embodiment, the reference value may correspond to, among a first reference value and a second reference values set with respect to the first illuminance value, the first reference value. The first reference value may be set to change brightness of the screen to the second brightness lower than the first brightness with respect to the first illuminance value. The second reference value may be set to change the brightness of the screen to a third brightness larger than the first brightness with respect to the first illuminance value.

According to an embodiment, the position of the illuminance sensor 331 may be identified as a relative coordinate with respect to a point of the cover display 325.

According to an embodiment, the at least one processor 310 may be configured to identify the second illuminance value using the illuminance sensor 331, while the screen having the first brightness is displayed. According to an embodiment, the at least one processor 310 may be configured to identify whether the second illuminance value is less than or equal to the reference value or not. According to an embodiment, the at least one processor 310 may be configured to maintain displaying of the screen having the first brightness, based on the second illuminance value being larger than the reference value.

According to an embodiment, the touch input may include at least one of an input including a contact point or a hovering input by an external object for the touch area including at least partially the position of the illuminance sensor 331.

According to an embodiment, the at least one processor 310 may be configured to identify whether the touch input for the touch area is obtained or not, in response to identifying the second illuminance value being less than or equal to the reference value. The at least one processor 310 may be configured to maintain displaying of the screen having the first brightness, in response to the second illuminance value identified based on the touch input, in the first state in which the touch input is obtained. The at least one processor 310 may be configured to display the screen having the second brightness, in response to the second illuminance value identified based on the event, in the second state in which the touch input is not obtained.

According to an embodiment, the illuminance sensor 331 may be disposed at a position in the housing. The electronic device 101 may further includes another illuminance sensor disposed on another position in the housing, the another illuminance sensor for receiving light through the surface of the first housing part 1310. The at least one processor 310 may be configured to identify whether the other illuminance sensor is available, in response to identifying the touch input for the touch area. The at least one processor 310 may be configured to identify a third illuminance value using the other illuminance sensor, in case that the other sensor is available. The at least one processor 310 may be configured to maintain displaying of the screen having the first brightness in case that the other illuminance sensor is not available.

According to an embodiment, the at least one processor 310 may be configured to identify whether a light source is located within a field of view (FoV) of the other illuminance sensor or not. The at least one processor 310 may be configured to identify that the other illuminance sensor is not available in case that the light source is located outside the FoV of the other illuminance sensor. The at least one processor 310 may be configured to identify that the other illuminance sensor is available in case that the light source is within the FoV of the other illuminance sensor.

According to an embodiment, the at least one processor 310 may be configured to display the screen having brightness less than the first brightness, based on the third illuminance value being less than or equal to the reference value. The at least one processor 310 may be configured to display the screen having brightness greater than the first brightness, based on the third illuminance value greater than another reference value exceeding the first illuminance value. The at least one processor 310 may be configured to display the screen having the first brightness, based on the third illuminance value being less than or equal to the other reference value and exceeding the reference value.

According to an embodiment, the first housing part 1310 may include a first surface and a second surface opposite to the first surface. The second housing part 1320 may include a third surface and a fourth surface opposite to the third surface. The hinge structure may be configured to be changeable to an unfolded state in which a first direction in which the second surface of the first housing part 1310 faces and a second direction in which the fourth surface of the second housing part 1320 faces are identical to each other, and to a folded state in which the first direction and the second direction are opposite to each other. The flexible display 320 may be disposed on the first surface of the first housing part 1310, and the third surface of the second housing part 1320. The cover display 325 and the illuminance sensor 331 may be disposed on the second surface of the first housing part 1310.

As described above, a method performed by an electronic device 101 may comprise displaying a screen having a first brightness based on a first illuminance value identified using an illuminance sensor 331 of the electronic device 101, through a cover display 325 of the electronic device 101. The method may comprise identifying, using the illuminance sensor 331, a second illuminance value less than or equal to a reference value according to the first illuminance value, while the screen having the first brightness is displayed. The method may comprise maintaining displaying of the screen having the first brightness, in response to the identified second illuminance value, in a first state in which a touch input for a touch area at least partially corresponding to a position of the illuminance sensor 331 and changeable in its size is obtained. The method may comprise displaying, through the cover display 325, the screen having a second brightness less than the first brightness, in response to the identified second illuminance value in a second state distinguished from the first state and in which the brightness of external light of the electronic device 101 is reduced.

As described above, a non-transitory computer-readable storage medium may store one or more programs including instructions, when executed by at least one processor 310 of an electronic device 101 comprising a housing including a first housing part 1310 and a second housing part 1320, a hinge structure 1350 rotatably connecting the first housing part 1310 and the second housing part 1320, a flexible display 320 that is disposed on the first housing part 1310 and the second housing part 1320 and deformable by rotation of the second housing part 1320 relative to the first housing part 1310, a cover display 325 disposed on one surface of the first housing part 1310, and an illuminance sensor 331, causing the at least one processor 310 to display, through the cover display 325, a screen having a first brightness based on a first illuminance value identified using the illuminant sensor 331. The non-transitory computer-readable storage medium may store one or more programs including instructions, when executed by the at least one processor 310, causing to identify a second illuminance value, which is less than or equal to a reference value according to the first illuminance value, using the illuminance sensor 331, while the screen having the first illuminance value is displayed. The non-transitory computer-readable storage medium may store one or more programs including instructions, when executed by the at least one processor 310, causing to maintain displaying of the screen having the first brightness, in response to the identified second illuminance value, in a first state in which a touch input for a touch area at least partially corresponding to a position of the illuminance sensor 331 is obtained, the touch area being changeable in its size. The non-transitory computer-readable storage medium may store one or more programs including instructions, when executed by at least one processor 310 of an electronic device 101, causing to display, through the cover display 325, the screen having a second brightness less than the first brightness, in response to the identified second illuminance value in a second state in which a brightness of the light is reduced, the second state being distinguished from the first state.

As described above, an electronic device 101 may comprise a display 320. The electronic device 101 may comprise an illuminance sensor 331. The electronic device 101 may comprise at least one processor 310. The at least one processor 310 may be configured to display, through the display 320, a screen having a first brightness based on a first illuminance value identified using the illuminant sensor 331. The at least one processor 310 may be configured to identify a second illuminance value, which is less than or equal to a reference value according to the first illuminance value, using the illuminance sensor 331, while the screen having the first illuminance value is displayed. The at least one processor 310 may be configured to maintain displaying of the screen having the first brightness, in response to the second illuminance value identified based on a touch input for a touch area including a position of the illuminance sensor 331. The at least one processor 310 may be configured to display, through the display 320, the screen having a second brightness lower than the first brightness, in response to the second illuminance value identified based on an event different from the touch input.

According to an embodiment, an electronic device 101 may comprise a housing including a first housing part 1510 and a second housing part 1520 that are movably engaged with each other. The display (320, 1230) may include a first display area and a second display area 1520, the second display area being bendable at least partially into the first housing part 1510 based on movement of the first housing part 1510 or the second housing part 1520. At least a portion of the second display area may be rolled into the first housing part 1510 in a first display state and may be drawn out from an inside of the first housing part 1510 to an outside the first housing part 1510 in a second display state.

According to an embodiment, the at least one processor 310 may be configured to, based on identifying another event for changing the touch area having a first size including the position of the illuminance sensor 331, identify the touch area having a second size changed from the first size. The other event may include a change in rotation state of the electronic device 101, and a change in state of the second display area.

According to an embodiment, the electronic device 101 may further include a gyro sensor 333. The at least one processor 310 may be configured to identify, through the gyro sensor 333, a first rotation state of the electronic device 101. The at least one processor 310 may be configured to identify the other event, based on identifying a second rotation state rotated by a specified angle or more from the first rotation state, through the gyro sensor. The second size of the touch area may be extended from the first size, based on a difference between the first rotation state and the second rotation state.

According to an embodiment, the at least one processor 310 may be configured to identify a first display size including the first display area of the display (320, 1230) and the at least portion of the second display area in the first state. The at least one processor 310 may be configured to identify the other event, based on identifying a second display size including the first display area of the display and the at least portion of the second display area, in the second state changed from the first display state, the second display size being extended from the first display size. The second size of the touch area may be extended from the first size based on a difference between the first display size and the second display size.

According to an embodiment, the illuminance sensor 331 may be disposed on one surface on which the first display area is disposed. The electronic device 101 may further include another illuminance sensor disposed on the one surface. The at least one processor 310 may be configured to identify whether the other illuminance sensor is available, in response to identifying the touch input for the touch area. The at least one processor 310 may be configured to identify a third illuminance value using the other illuminance sensor, in case that the other sensor is available. The at least one processor 310 may be configured to maintain displaying of the screen having the first brightness in case that the other illuminance sensor is not available.

As described above, a method performed by an electronic device 101 may comprise displaying, through the display 320, a screen having a first brightness based on a first illuminance value identified using the illuminant sensor 331 of the electronic device 101. The method may comprise identifying a second illuminance value, which is less than or equal to a reference value according to the first illuminance value, using the illuminance sensor 331, while the screen having the first illuminance value is displayed. The method may comprise maintain displaying of the screen having the first brightness, in response to the second illuminance value identified based on a touch input for a touch area including a position of the illuminance sensor 331. The method may comprise displaying, through the display 320, the screen having a second brightness less than the first brightness, in response to the second illuminance value identified based on an event different from the touch input.

As described above, a non-transitory computer-readable storage medium may store one or more programs including instructions that, when executed by at least one processor 310 of an electronic device 101 comprising a display 320 and an illuminance sensor 331, cause to display, through the display 320, a screen having a first brightness based on a first illuminance value identified using the illuminant sensor 331. The non-transitory computer-readable storage medium may store one or more programs including instructions that, when executed by the at least one processor 310, cause to identify a second illuminance value, which is less than or equal to a reference value according to the first illuminance value, using the illuminance sensor 331, while the screen having the first illuminance value is displayed. The non-transitory computer-readable storage medium may store one or more programs including instructions that, when executed by the at least one processor 310, cause to maintain displaying of the screen having the first brightness, in response to the second illuminance value identified based on a touch input for a touch area including a position of the illuminance sensor 331. The non-transitory computer-readable storage medium may store one or more programs including instructions that, when executed by at least one processor 310 of an electronic device 101, cause to display, through the display 320, the screen having a second brightness less than the first brightness, in response to the second illuminance value identified based on an event different from the touch input.

As described above, an electronic device 101 may comprise a display 320. The electronic device 101 may comprise an illuminance sensor 332. The electronic device 101 may comprise at least one processor 310. The at least one processor 310 may be configured to display, through the display 320, a screen having a first brightness. The at least one processor 310 may be configured to identify an illuminance value through the illuminance sensor 331, while the screen having the first brightness is displayed. The at least one processor 310 may be configured to identify whether a touch input for a touch area at least partially corresponding to a position of the illuminance sensor 331 and being changeable in its size is obtained, using the touch sensor 332. The at least one processor 310 may be configured to maintain displaying of the screen having the first brightness, based on the illuminance value and the touch input, in a first state in which the touch input is obtained. The at least one processor 310 may be configured to display, through the display 320, the screen having a second brightness less than the first brightness, based on the illuminance value in a second state distinguished from the first state.

According to an embodiment, an electronic device 101 may comprise a housing including a first housing part 1510 and a second housing part 1520 that are movably engaged with each other. The display (320, 1230) may include a first display area and a second display area 1520, the second display area being bendable at least partially into the first housing part 1510 based on movement of the first housing part 1510 or the second housing part 1520. At least a portion of the second display area may be rolled into the first housing part 1510 in a first display state and may be drawn out from an inside of the first housing part 1510 to an outside the first housing part 1510 in a second display state.

According to an embodiment, the at least one processor 310 may be configured to identify the touch area having a second size changed from the first size, in case that the specified condition for changing the touch area having the first size is satisfied. The specified condition may include a change in the orientation of the electronic device 101 or a change in the second display area.

According to an embodiment, the electronic device 101 may further include a gyro sensor 333. The at least one processor 310 may be configured to identify, through the gyro sensor 333, a first rotation state of the electronic device 101. The at least one processor 310 may be configured to identify the specified condition, based on identifying a second rotation state rotated by a specified angle or more from the first rotation state, through the gyro sensor 333. The second size of the touch area may be extended from the first size, based on a difference between the first rotation state and the second rotation state.

According to an embodiment, the change in the state of the display area of the display 320 may include a change in size of the display area from a first size to a second size. The at least one processor 310 may be configured to identify the second size of the touch area based on a difference between the second display size and the first display size.

According to an embodiment, the illuminance sensor 331 may be disposed on a position in the housing and receive light outside the electronic device 101 through one surface on which the first display area is disposed. The electronic device 101 may further include another illuminance sensor disposed on another position in the housing, and receiving the light through the one surface. The at least one processor 310 may be configured to identify whether the other illuminance sensor is available, in response to identifying the touch input for the touch area. The at least one processor 310 may be configured to identify a third illuminance value using the another illuminance sensor, in case that the other sensor is available. The at least one processor 310 may be configured to maintain displaying of the screen having the first brightness in case that the other illuminance sensor is not available.

Certain examples of the present disclosure include one or more of the following.

According to a first example, there is provided an electronic device. The electronic device may comprise a display configured for displaying an image. The electronic device may comprise an input sensor configured for detecting an input, comprising a touch input and/or a hover input, within a certain sensing area on a surface of the electronic device. The electronic device may comprise an illuminance sensor disposed on the surface at least partly in, or adjacent to, the sensing area and configured for sensing an external illumination level. The electronic device may comprise a processor configured for controlling a display illumination level of the displayed image based on the sensed illumination level and whether an input is detected in the sensing area.

According to a second example, there is provided an electronic device according to the first example. The display and the input sensor may together form a touch screen.

According to a third example, there is provided an electronic device according to the first or second example. The display may be disposed on the surface.

According to a fourth example, there is provided an electronic device according to the first, second or third example. The display may be disposed over an area including the sensing area.

According to a fifth example, there is provided an electronic device according to any of the first to fourth examples. The electronic device may comprise a foldable structure. The surface may be a surface on the exterior of the electronic device when the electronic device is in a folded state.

According to a sixth example, there is provided an electronic device according to any of the first to fifth examples. Controlling the display illumination level may comprise adjusting the display illumination level when a condition based on the sensed external illumination level is satisfied and an input is not detected in the sensing area.

According to a seventh example, there is provided an electronic device according to the sixth example. Adjusting the display illumination level may comprise one or more of: reducing the display illumination level based on a reduction in the sensed external illumination level; and increasing the display illumination level based on an increase in the sensed external illumination level.

According to an eighth example, there is provided an electronic device according to any of the first to seventh examples. Controlling the display illumination level may comprise maintaining a current display illumination level when a condition based on the sensed external illumination level is satisfied and an input is detected in the sensing area.

According to a ninth example, there is provided an electronic device according to the sixth, seventh or eighth example. The condition may be based on one or more of: the sensed external illumination level changes; the sensed external illumination level crosses a certain threshold; and a change in the sensed external illumination level crosses a certain threshold.

According to a tenth example, there is provided an electronic device according to any of the first to ninth examples. The processor may be configured for adjusting the sensing area.

According to an eleventh example, there is provided an electronic device according to the tenth example. Adjusting the sensing area may comprise adjusting one or more of: the size, shape and position of the sensing area.

According to a twelfth example, there is provided an electronic device according to the tenth or eleventh example. The processor may be configured for adjusting the sensing area based on one or more of: an orientation of the electronic device (e.g. detected by an orientation sensor of the electronic device); a configuration (e.g. size, shape and/or location) of an area of the display in which the image is displayed; and how the electronic device is being held by a user (e.g. as detected by one or more sensors).

According to a thirteenth example, there is provided an electronic device according to any of the first to twelfth examples. The illumination sensor may be a first illumination sensor. The electronic device may further comprise a second illumination sensor. The processor may be configured for controlling the display illumination level based on an illumination level sensed by the second illumination sensor when an input is detected in the sensing area.

According to a fourteenth example, there is provided an electronic device according to the thirteenth example. The processor may be configured for controlling the display illumination level based on the illumination level sensed by the second illumination sensor when one or more light sources are detected in a field of view of the second illumination sensor.

According to a fifteenth example, there is provided an electronic device according to any of the first to fourteenth examples. The processor may be further configured to set an initial display illumination level based on a sensed illumination level when the display is switched on.

According to a sixteenth example, there is provided a method for controlling a display illumination level of an electronic device. The method may comprise displaying an image. The method may comprise sensing for the presence of an input, comprising a touch input and/or a hover input, within a certain sensing area on a surface of the electronic device. The method may comprise sensing, by an illuminance sensor disposed on the surface at least partly in, or adjacent to, the sensing area, an external illumination level outside the electronic device. The method may comprise controlling a display illumination level of the displayed image based on the sensed illumination level and whether an input is detected in the sensing area.

According to a seventeenth example, there is provided an electronic device. The electronic device may comprise memory, including one or more storage mediums, storing instructions. The electronic device may comprise a housing including a first housing part and a second housing part. The electronic device may comprise a hinge structure rotatably connecting the first housing part and the second housing part. The electronic device may comprise a flexible display, which is disposed on the first housing part and the second housing part, deformable by rotation of the second housing part relative to the first housing part. The electronic device may comprise a cover display disposed on a surface of the first housing part. The electronic device may comprise an illuminance sensor for receiving light outside the electronic device through the surface, included in the housing. The electronic device may comprise at least one processor comprising processing circuitry. The instructions, when executed by the at least one processor individually or collectively, may cause the electronic device to display, through the cover display, a screen having a first brightness based on a first illuminance value identified using the illuminant sensor. The instructions, when executed by the at least one processor individually or collectively, may cause the electronic device to identify a second illuminance value, which is less than or equal to a reference value according to the first illuminance value, by using the illuminance sensor, while the screen having the first illuminance value is displayed. The instructions, when executed by the at least one processor individually or collectively, may cause the electronic device to maintain displaying of the screen having the first brightness in response to the second illuminance value identified based on a first state in which a touch input for a touch area corresponding to at least part of a position of the illuminance sensor is obtained, the touch area in which the size is changeable. The instructions, when executed by the at least one processor individually or collectively, may cause the electronic device to display, through the cover display, the screen having a second brightness lower than the first brightness, in response to the second illuminance value identified based on a second state in which a brightness of the light is reduced, the second state distinguished from the first state.

According to an eighteenth example, there is provided an electronic device according to the seventeenth example. The instructions, when executed by the at least one processor individually or collectively, may cause the electronic device to identify the first illuminance value by using the illuminance sensor, in case of changing from a state where the cover display is off to a state where the cover display is on. The instructions, when executed by the at least one processor individually or collectively, may cause the electronic device to display, through the cover display, the screen having the first brightness based on the identified first illuminance value.

According to a nineteenth example, there is provided an electronic device according to the seventeenth or eighteenth example. The instructions, when executed by the at least one processor individually or collectively, may cause the electronic device to, in case that a designated condition for changing the touch area having a first size corresponding to the at least part of the position of the illuminance sensor is satisfied, identify the touch area having a second size changed from the first size. The designated condition may include a change of rotation state of the electronic device, and a change of a state for display area of the flexible display.

According to a twentieth example, there is provided an electronic device according to the nineteenth example. The electronic device may further include a gyro sensor. The instructions, when executed by the at least one processor individually or collectively, may cause the electronic device to identify, through the gyro sensor, a first rotation state of the electronic device; and identify the designated condition based on identifying a second rotation state rotated by a specified angle or more from the first rotation state, through the gyro sensor. The second size of the touch area may be extended from the first size based on a difference between the first rotation state and the second rotation state.

According to a twenty first example, there is provided an electronic device according to the nineteenth or twentieth example. The change of the state for the display area of the flexible display may include changing of a size of the display area from a first display size to a second display size. The instructions, when executed by the at least one processor individually or collectively, may cause the electronic device to identify the second size of the touch area based on a difference between the first display size and the second display size.

According to a twenty second example, there is provided an electronic device according to any of the seventeenth to twenty first examples. The reference value may correspond to a first reference value of the first reference value and a second reference values set with respect to the first illuminance value. The first reference value may be set to change a brightness of the screen to the second brightness lower than the first brightness with respect to the first illuminance value. The second reference value may be set to change the brightness of the screen to a third brightness higher than the first brightness with respect to the first illuminance value.

According to a twenty third example, there is provided an electronic device according to any of the seventeenth to twenty second examples. The position of the illuminance sensor may be identified as a relative coordinate with respect to a point of the cover display.

According to a twenty fourth example, there is provided an electronic device according to any of the seventeenth to twenty third examples. The instructions, when executed by the at least one processor individually or collectively, may cause the electronic device to identify the second illuminance value by using the illuminance sensor, while the screen having the first brightness is displayed. The instructions, when executed by the at least one processor individually or collectively, may cause the electronic device to identify whether the second illuminance value is lower than or equal to the reference value or not. The instructions, when executed by the at least one processor individually or collectively, may cause the electronic device to maintain displaying of the screen having the first brightness, based on the second illuminance value being higher than the reference value.

According to a twenty fifth example, there is provided an electronic device according to any of the seventeenth to twenty fourth examples. The touch input may include at least one of an input including a contact point or a hovering input by an external object for the touch area including at least part of the position of the illuminance sensor.

According to a twenty sixth example, there is provided an electronic device according to any of the seventeenth to twenty fifth examples. The instructions, when executed by the at least one processor individually or collectively, may cause the electronic device to identify whether the touch input is obtained, in response to identifying the second illuminance value being lower than or equal to the reference value or not. The instructions, when executed by the at least one processor individually or collectively, may cause the electronic device to maintain displaying of the screen having the first brightness, in response to the second illuminance value identified based on the touch input in the first state in which the touch input is obtained. The instructions, when executed by the at least one processor individually or collectively, may cause the electronic device to display the screen having the second brightness, in response to the second illuminance value in the second state in which the touch input is not obtained.

According to a twenty seventh example, there is provided an electronic device according to any of the seventeenth to twenty sixth examples. The illuminance sensor may be disposed at a position in the housing. The electronic device may further include another illuminance sensor disposed on another position in the housing, the another illuminance sensor for receiving the light through the surface of the first housing part. The instructions, when executed by the at least one processor individually or collectively, may cause the electronic device to identify whether the another illuminance sensor is available, in response to identifying the touch input for the touch area. The instructions, when executed by the at least one processor individually or collectively, may cause the electronic device to identify a third illuminance value by using the another illuminance sensor, in case that the another sensor is available. The instructions, when executed by the at least one processor individually or collectively, may cause the electronic device to maintain the screen having the first brightness, in case that the another illuminance sensor is unavailable.

According to a twenty eighth example, there is provided an electronic device according to the twenty seventh example. The instructions, when executed by the at least one processor individually or collectively, may cause the electronic device to identify whether a light source is located within a field of view (FoV) of the another illuminance sensor or not. The instructions, when executed by the at least one processor individually or collectively, may cause the electronic device to identify that the another illuminance sensor is unavailable, in case that the light source is located outside the FoV of the another illuminance sensor. The instructions, when executed by the at least one processor individually or collectively, may cause the electronic device to identify that the another illuminance sensor is available, in case that the light source is within the FoV of the another illuminance sensor.

According to a twenty ninth example, there is provided an electronic device according to the twenty seventh or twenty eighth example. The instructions, when executed by the at least one processor individually or collectively, may cause the electronic device to display the screen having a brightness lower than the first brightness, based on the third illuminance value being lower than or equal to the reference value. The instructions, when executed by the at least one processor individually or collectively, may cause the electronic device to display the screen having a brightness higher than the first brightness based on the third illuminance value being higher than another reference value, the another reference value being higher than the first illuminance value. The instructions, when executed by the at least one processor individually or collectively, may cause the electronic device to display the screen having the first brightness based on the third illuminance value being lower than or equal to the another reference value and being higher than the reference value.

According to a thirtieth example, there is provided an electronic device according to any of the seventeenth to twenty ninth examples. The first housing part may include a first surface and a second surface opposite to the first surface. The second housing part may include a third surface and a fourth surface opposite to the third surface. The hinge structure may be configured to be changeable to an unfolded state in which a first direction in which the second surface of the first housing part faces and a second direction in which the fourth surface of the second housing part faces are identical to each other, and to a folded state in which the first direction and the second direction are opposite to each other. The flexible display may be disposed on the first surface of the first housing part and the second surface of the second housing part. The cover display and the illuminance sensor may be disposed on the second surface of the first housing part.

According to a thirty first example, there is provided an electronic device. The electronic device may comprise memory, including one or more storage mediums, storing instructions. The electronic device may comprise a display including a touch sensor. The electronic device may comprise an illuminance sensor. The electronic device may comprise at least one processor comprising processing circuitry. The instructions, when executed by the at least one processor individually or collectively, may cause the electronic device to display, through the display, a screen having a first brightness. The instructions, when executed by the at least one processor individually or collectively, may cause the electronic device to identify an illuminance value using the illuminance sensor, while the screen having the first brightness is displayed. The instructions, when executed by the at least one processor individually or collectively, may cause the electronic device to identify whether a touch input for a touch area corresponding to at least part of a position of the illuminance sensor is obtained or not, the touch area in which the size is changeable based on an event. The instructions, when executed by the at least one processor individually or collectively, may cause the electronic device to maintain displaying of the screen having the first brightness, based on the illuminance value and the touch input in a first state in which the touch input is obtained. The instructions, when executed by the at least one processor individually or collectively, may cause the electronic device to display, through the display, the screen having a second brightness lower than the first brightness, based on the illuminance value in a second state distinguished from the first state.

According to a thirty second example, there is provided an electronic device according to the thirty first example. The electronic device may include a housing including a first housing part and a second housing part movably engage with each other. The display may include a first display area and a second display area which is bendable at least partially into the first housing part, based on a movement of the first housing part or the second housing part. At least portion of the second display area may be rolled into the first housing part in a first display state and may be extracted from inside the first housing part to outside the first housing part in a second display state.

According to a thirty third example, there is provided an electronic device according to the thirty second example. The instructions, when executed by the at least one processor individually or collectively, may cause the electronic device to, in case that a designated condition for changing the touch area having a first size corresponding to the at least part of the position of the illuminance sensor is satisfied, identify the touch area having a second size changed from the first size. The designated condition may include a change of orientation of the electronic device, and a change of a state of the second display area.

According to a thirty fourth example, there is provided an electronic device according to the thirty third example. The electronic device may further include a gyro sensor. The instructions, when executed by the at least one processor individually or collectively, may cause the electronic device to identify, through the gyro sensor, a first rotation state of the electronic device. The instructions, when executed by the at least one processor individually or collectively, may cause the electronic device to identify the designated condition based on identifying a second rotation state rotated by a specified angle or more from the first rotation state, through the gyro sensor. The second size of the touch area may be extended from the first size based on a difference between the first rotation state and the second rotation state.

According to a thirty fifth example, there is provided an electronic device according to the thirty third or thirty fourth example. The change of the state for the display area of the flexible display may include changing of a size of the display area from a first display size to a second display size. The instructions, when executed by the at least one processor individually or collectively, may cause the electronic device to identify the second size of the touch area based on a difference between the first display size and the second display size.

According to a thirty sixth example, there is provided an electronic device according to any of the thirty second to thirty fifth examples. The illuminance sensor may be disposed on a position in the housing and receives light outside the electronic device through a surface on which the first display area is disposed. The electronic device may further include another illuminance sensor disposed on another position in the housing, the another illuminance sensor for receiving the light through the surface of the first housing part. The instructions, when executed by the at least one processor individually or collectively, may cause the electronic device to identify whether the another illuminance sensor is available, in response to identifying the touch input for the touch area. The instructions, when executed by the at least one processor individually or collectively, may cause the electronic device to identify a third illuminance value by using the another illuminance sensor, in case that the another sensor is available. The instructions, when executed by the at least one processor individually or collectively, may cause the electronic device to maintain the screen having the first brightness, in case that the another illuminance sensor is unavailable.

The electronic device according to various embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, "logic", "logic block", "part", or "circuit". A module may be a single integral component, or a minimum unit or part thereof, adapted to perform one or more functions. For example, according to an example, the module may be implemented in a form of an application-specific integrated circuit (ASIC).

Various embodiments as set forth herein may be implemented as software (e.g., a program 140) including one or more instructions that are stored in a storage medium (e.g., an internal memory 136 or an external memory 138) that is readable by a machine (e.g., an electronic device 101). For example, a machine (e.g., a processor 120 of an electronic device 101) of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments of the disclosure, each component (e.g., a module or a program) of the above-described components may include a single entity or multiple entities, and some of the multiple entities may be separately disposed in different components. According to various embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
memory, including one or more storage mediums, storing instructions;
a housing including a first housing part (1310) and a second housing part (1320);
a hinge structure (1350) rotatably connecting the first housing part (1310) and the second housing part (1320);
a flexible display (320), which is disposed on the first housing part (1310) and the second housing part (1320), deformable by rotation of the second housing part (1320) relative to the first housing part (1310);
a cover display (325) disposed on a surface of the first housing part (1310);
an illuminance sensor (331) for receiving light outside the electronic device (101) through the surface, included in the housing; and
at least one processor (310) comprising processing circuitry,
wherein the instructions, when executed by the at least one processor (310) individually or collectively, cause the electronic device (101) to:
display, through the cover display (325), a screen having a first brightness based on a first illuminance value identified using the illuminance sensor (331);
identify a second illuminance value, which is less than or equal to a reference value according to the first illuminance value, by using the illuminance sensor (331), while the screen having the first illuminance value is displayed;
maintain displaying of the screen having the first brightness in response to the second illuminance value identified based on a first state in which a touch input for a touch area corresponding to at least part of a position of the illuminance sensor (331) is obtained, the touch area in which the size is changeable; and
display, through the cover display (325), the screen having a second brightness lower than the first brightness, in response to the second illuminance value identified based on a second state in which a brightness of the light is reduced, the second state distinguished from the first state.

2. The electronic device (101) of claim 1,
wherein the instructions, when executed by the at least one processor (310) individually or collectively, cause the electronic device (101) to:
identify the first illuminance value by using the illuminance sensor (331), in case of changing from a state where the cover display (325) is off to a state where the cover display (325) is on; and
display, through the cover display (325), the screen having the first brightness based on the identified first illuminance value.

3. The electronic device (101) of claim 1 or 2,
wherein the instructions, when executed by the at least one processor (310) individually or collectively, cause the electronic device (101) to:
in case that a designated condition for changing the touch area having a first size corresponding to the at least part of the position of the illuminance sensor (331) is satisfied, identify the touch area having a second size changed from the first size, and
wherein the designated condition includes a change of rotation state of the electronic device (101), and a change of a state for display area of the flexible display (320).

4. The electronic device (101) of claim 3,
wherein the electronic device (101) further includes a gyro sensor;
wherein the instructions, when executed by the at least one processor (310) individually or collectively, cause the electronic device (101) to:
identify, through the gyro sensor, a first rotation state of the electronic device (101); and
identify the designated condition based on identifying a second rotation state rotated by a specified angle or more from the first rotation state, through the gyro sensor, and
wherein the second size of the touch area is extended from the first size based on a difference between the first rotation state and the second rotation state.

5. The electronic device (101) of claim 3 or 4,
wherein the change of the state for the display area of the flexible display (320) includes changing of a size of the display area from a first display size to a second display size,
wherein the instructions, when executed by the at least one processor (310) individually or collectively, cause the electronic device (101) to:
identify the second size of the touch area based on a difference between the first display size and the second display size.

6. The electronic device (101) of any preceding claim,
wherein the reference value corresponds to a first reference value of the first reference value and a second reference values set with respect to the first illuminance value,
wherein the first reference value is set to change a brightness of the screen to the second brightness lower than the first brightness with respect to the first illuminance value, and
wherein the second reference value is set to change the brightness of the screen to a third brightness higher than the first brightness with respect to the first illuminance value.

7. The electronic device (101) of any preceding claim,
wherein the position of the illuminance sensor (331) is identified as a relative coordinate with respect to a point of the cover display (325).

8. The electronic device (101) of any preceding claim,
wherein the instructions, when executed by the at least one processor (310) individually or collectively, cause the electronic device (101) to:
identify the second illuminance value by using the illuminance sensor (331), while the screen having the first brightness is displayed;
identify whether the second illuminance value is lower than or equal to the reference value or not; and
maintain displaying of the screen having the first brightness, based on the second illuminance value being higher than the reference value.

9. The electronic device (101) of any preceding claim,
wherein the touch input includes at least one of an input including a contact point or a hovering input by an external object for the touch area including at least part of the position of the illuminance sensor (331).

10. The electronic device (101) of any preceding claim,
wherein the instructions, when executed by the at least one processor (310) individually or collectively, cause the electronic device (101) to:
identify whether the touch input is obtained, in response to identifying the second illuminance value being lower than or equal to the reference value or not;
maintain displaying of the screen having the first brightness, in response to the second illuminance value identified based on the touch input in the first state in which the touch input is obtained; and
display the screen having the second brightness, in response to the second illuminance value in the second state in which the touch input is not obtained.

11. The electronic device (101) of any preceding claim,
wherein the illuminance sensor (331) is disposed at a position in the housing,
wherein the electronic device (101) further includes another illuminance sensor (331) disposed on another position in the housing, the another illuminance sensor (331) for receiving the light through the surface of the first housing part (1310), and
wherein the instructions, when executed by the at least one processor (310) individually or collectively, cause the electronic device (101) to:
identify whether the another illuminance sensor (331) is available, in response to identifying the touch input for the touch area;
identify a third illuminance value by using the another illuminance sensor (331), in case that the another sensor is available; and
maintain the screen having the first brightness, in case that the another illuminance sensor (331) is unavailable.

12. The electronic device (101) of claim 11,
wherein the instructions, when executed by the at least one processor (310) individually or collectively, cause the electronic device (101) to:
identify whether a light source is located within a field of view (FoV) of the another illuminance sensor (331) or not;
identify that the another illuminance sensor (331) is unavailable, in case that the light source is located outside the FoV of the another illuminance sensor (331); and
identify that the another illuminance sensor (331) is available, in case that the light source is within the FoV of the another illuminance sensor (331).

13. The electronic device (101) of claim 11 or 12,
wherein the instructions, when executed by the at least one processor (310) individually or collectively, cause the electronic device (101) to:
display the screen having a brightness lower than the first brightness, based on the third illuminance value being lower than or equal to the reference value;
display the screen having a brightness higher than the first brightness based on the third illuminance value being higher than another reference value, the another reference value being higher than the first illuminance value; and
display the screen having the first brightness based on the third illuminance value being lower than or equal to the another reference value and being higher than the reference value.

14. The electronic device (101) of any preceding claim,
wherein the first housing part (1310) includes a first surface and a second surface opposite to the first surface,
wherein the second housing part (1320) includes a third surface and a fourth surface opposite to the third surface, and
wherein the hinge structure (1350) is configured to be changeable to an unfolded state in which a first direction in which the second surface of the first housing part (1310) faces and a second direction in which the fourth surface of the second housing part (1320) faces are identical to each other, and to a folded state in which the first direction and the second direction are opposite to each other,
wherein the flexible display (320) is disposed on the first surface of the first housing part (1310) and the second surface of the second housing part (1320), and
wherein the cover display (325) and the illuminance sensor (331) are disposed on the second surface of the first housing part (1310).

15. A method performed by an electronic device (101) comprising a cover display (325) and an illuminance sensor (331) for receiving light outside the electronic device (101), comprising:
displaying, through the cover display (325), a screen having a first brightness based on a first illuminance value identified using the illuminance sensor (331);
identifying a second illuminance value, which is less than or equal to a reference value according to the first illuminance value, by using the illuminance sensor (331), while the screen having the first illuminance value is displayed;
maintaining displaying of the screen having the first brightness in response to the second illuminance value identified based on a first state in which a touch input for a touch area corresponding to at least part of a position of the illuminance sensor (331) is obtained, the touch area in which the size is changeable; and
displaying, through the cover display (325), the screen having a second brightness lower than the first brightness, in response to the second illuminance value identified based on a second state in which a brightness of the light is reduced, the second state distinguished from the first state.
